# EUROPÄISCHE PATENTSCHRIFT

(11) **EP 3 720 614 B1**
(45) Veröffentlichungstag und Bekanntmachung des Hinweises auf die Patenterteilung: **05.06.2024**
(21) Anmeldenummer: 18814538.7
(22) Anmeldetag: 29.11.2018
(51) Int. Cl.: B05B 12/12, B05B 12/00, B05B 17/06, G01B 11/14, G01C 1/00, G01C 15/00

(54) **MEDIENAUFTRAGSVORRICHTUNG**
MEDIA APPLICATION DEVICE
DISPOSITIF D'APPLICATION D'UNE MATIÈRE

(30) Priorität: 06.12.2017 DE 102017222000; 06.12.2017 DE 102017222023; 06.12.2017 DE 102017222011; 06.12.2017 DE 102017221988; 04.10.2018 DE 102018217027; 28.11.2018 DE 102018220409
(43) Veröffentlichungstag der Anmeldung: 14.10.2020
(73) Patentinhaber: Robert Bosch GmbH, 70442 Stuttgart (DE)
(72) Erfinder: AMANN, Sieghard, 71116 Gaertringen (DE); SCHULER, Robin, 71334 Waiblingen (DE); ERCKERT, Beatrix, 70378 Stuttgart (DE); SIEBER, Gustav, 88239 Wangen (DE); KLEEMANN, Andreas, 71069 Sindelfingen (DE); SZELL, Istvan, 70771 Leinfelden-Echterdingen (DE); DOEPNER, Jan, 69120 Heidelberg (DE); PREHN, Janine, 70771 Leinfelden-Echterdingen (DE); BERNING, Sebastian, 70597 Stuttgart (DE); HORSTMANN, Stefan, 70771 Leinfelden-Echterdingen (DE)
(86) Internationale Anmeldenummer: PCT/EP2018/083028
(87) Internationale Veröffentlichungsnummer: WO 2019/110418

(56) Entgegenhaltungen:
- EP-A1- 2 433 716
- EP-A1- 2 641 661
- EP-A2- 2 644 392
- WO-A1-2009/029723
- WO-A1-2011/019810
- WO-A1-2017/191225
- DE-A1-102005 003 333
- DE-A1-102011 088 373
- US-A1- 2005 100 680
- US-A1- 2007 209 586
- US-A1- 2012 249 634
- US-A1- 2015 147 460
- US-A1- 2017 203 318

## Beschreibung

### Stand der Technik

Es ist bereits eine Medienauftragsvorrichtung mit zumindest einer Medienausgabeeinheit zu einer Ausgabe zumindest eines Mediums auf zumindest eine Oberfläche und mit zumindest einer Elektronikeinheit zumindest zu einer Steuerung und/oder Regelung der zumindest einen Medienausgabeeinheit vorgeschlagen worden.

Ein Auftragssystem wird beispielsweise in dem Dokument WO 2017/191225 A1 offenbart.

Das Dokument EP 2641661 A1 offenbart laut seiner Zusammenfassung ein grafisches Anwendungssystem mit einer Sprühvorrichtung, die mindestens ein Düsenmittel zum Ausstoßen eines Zerstäubungsmaterials auf eine Zieloberfläche, einen Düsensteuermechanismus zum Steuern der Eigenschaften des Ausstoßes des Düsenmittels und eine Zerstäubungsmaterialzufuhr aufweist. Das Anwendungssystem umfasst weiterhin eine räumliche Referenzierungseinheit, um die Sprühvorrichtung im Raum zu referenzieren, um ihre Position und Orientierung zu bestimmen, und eine Berechnungseinrichtung, um das Ausstoßen des Zerstäubungsmaterials durch den Düsensteuermechanismus gemäß den von der räumlichen Referenzierungseinheit gewonnenen Informationen und gemäß vordefinierten gewünschten Sprühdaten automatisch zu steuern. Die räumliche Referenzierungseinheit ist von der Sprühvorrichtung entfernt angeordnet und umfasst mindestens zwei optische 2D-Kameras.

### Offenbarung der Erfindung

Die Erfindung geht aus von einem Auftragssystem mit zumindest einer Medienauftragsvorrichtung, insbesondere mit zumindest einer erfindungsgemäßen Medienauftragsvorrichtung, die zumindest eine Medienausgabeeinheit zu einer Ausgabe zumindest eines Mediums auf zumindest eine Oberfläche und zumindest eine Elektronikeinheit zumindest zu einer Steuerung und/oder Regelung der zumindest einen Medienausgabeeinheit aufweist, und mit zumindest einer Steuer- und/oder Regeleinheit.

Die Steuer- und/oder Regeleinheit weist zumindest eine Erfassungsvorrichtung auf, welche dazu vorgesehen ist, anhand zumindest eines Referenzelements einer Umgebung der Medienauftragsvorrichtung und/oder anhand zumindest eines Referenzelements der Medienauftragsvorrichtung zumindest eine Position und/oder Ausrichtung der Medienauftragsvorrichtung relativ zu der Oberfläche zu erfassen. Unter einer "Steuer- und/oder Regeleinheit" soll insbesondere eine Einheit mit zumindest einer Steuerelektronik verstanden werden. Vorzugsweise kann die Steuer- und/oder Regeleinheit als eine externe Steuer- und/oder Regeleinheit ausgebildet sein, welche insbesondere außerhalb der Medienauftragsvorrichtung angeordnet ist. Insbesondere kann die Steuer- und/oder Regeleinheit als ein Mobilgerät, wie beispielsweise ein Smartphone, ein Tablet oder ein anderes, einem Fachmann als sinnvoll erscheinendes Mobilgerät, ausgebildet sein. Alternativ oder zusätzlich ist vorstellbar, dass die Steuer- und/oder Regeleinheit in die Medienauftragsvorrichtung integriert ist. Insbesondere kann die Steuer- und/oder Regeleinheit, insbesondere die Erfassungsvorrichtung der Steuer- und/oder Regeleinheit, in einem gemeinsamen Gehäuse mit der Medienauftragsvorrichtung angeordnet sein.

Die Erfassungsvorrichtung ist dazu vorgesehen, anhand eines Referenzelements der Umgebung der Medienauftragsvorrichtung und/oder anhand eines Referenzelements der Medienauftragsvorrichtung eine Position und/oder Ausrichtung der Medienauftragsvorrichtung relativ zu der Oberfläche zu erfassen. Zu einer Erfassung eines Referenzelements weist die Erfassungsvorrichtung vorzugsweise zumindest ein Erfassungselement auf. Das Erfassungselement kann insbesondere als eine Kamera, ein optischer Sensor, ein elektromagnetischer Sensor, ein akustischer Sensor oder als ein anderes, einem Fachmann als sinnvoll erscheinendes Erfassungselement ausgebildet sein. Insbesondere kann die Erfassungsvorrichtung eine Mehrzahl von, bevorzugt verschiedenen, Erfassungselementen aufweisen.

Das Referenzelement der Umgebung der Medienauftragsvorrichtung kann vorzugsweise analog zu dem Referenzelement der die Medienausgabeeinheit umgebenden Umgebung ausgebildet sein. Insbesondere entspricht die Umgebung der Medienauftragsvorrichtung zumindest im Wesentlichen der die Medienausgabeeinheit umgebenden Umgebung. Das Referenzelement der Medienauftragsvorrichtung kann insbesondere ein an der Medienauftragsvorrichtung vorhandenes Referenzelement oder ein an der Medienauftragsvorrichtung, insbesondere zu einer Positions- und/oder Ausrichtungserfassung der Medienauftragsvorrichtung relativ zu der Oberfläche, angebrachtes Referenzelement sein. Das vorhandene Referenzelement ist als Leuchtelement ausgebildet. Vorzugsweise kann die Elektronikeinheit der Medienauftragsvorrichtung anhand der erfassten Position und/oder Ausrichtung der Medienauftragsvorrichtung relativ zu der Oberfläche die Medienausgabeeinheit steuern und/oder regeln. Vorzugsweise ist die Elektronikeinheit bei einem Fehlschlagen einer Positions- und/oder Ausrichtungserfassung der Medienauftragsvorrichtung relativ zu der Oberfläche, beispielsweise aufgrund einer Hinausbewegung der Medienauftragsvorrichtung aus einem Erfassungsbereich der Erfassungsvorrichtung o. dgl., dazu vorgesehen, die Medienausgabeeinheit derart zu steuern und/oder zu regeln, dass eine Medienausgabe unterbunden wird. Vorteilhaft kann anhand des Referenzelements der Umgebung der Medienauftragsvorrichtung und/oder anhand des Referenzelements der Medienauftragsvorrichtung die Position und/oder Ausrichtung der Medienauftragsvorrichtung relativ zu der Oberfläche erfasst werden. Vorteilhaft kann ein fehlerhafter Medienauftrag bei einem Fehlschlagen einer Positions- und/oder Ausrichtungserfassung der Medienauftragsvorrichtung relativ zu der Oberfläche zumindest im Wesentlichen vermieden werden.

Das Referenzelement der Medienauftragsvorrichtung ist als zumindest ein eine Strahlung aussendendes Leuchtelement ausgebildet und ist vorzugsweise für zumindest einen Benutzer zumindest im Wesentlichen blendfrei an einem Gehäuse der Medienauftragsvorrichtung angeordnet. Das Leuchtelement sendet vorzugsweise elektromagnetische Strahlung, insbesondere aus einem Spektralbereich eines elektromagnetischen Frequenzspektrums mit einer Frequenz geringer als ultraviolette Strahlung, aus. Insbesondere kann die Medienauftragsvorrichtung eine Mehrzahl von, insbesondere verschiedenen, Leuchtelementen aufweisen. Bevorzugt kann das Leuchtelement als eine Glühbirne, besonders bevorzugt als eine Leuchtdiode ausgebildet sein. Vorzugsweise kann ein Benutzer die Medienauftragsvorrichtung ohne durch das Leuchtelement geblendet zu werden bedienen. Bevorzugt bleibt eine Wahrnehmung der durch das Leuchtelement ausgesandten Strahlung durch den Benutzer zumindest im Wesentlichen aus. Insbesondere bleibt eine, insbesondere temporäre, Beeinträchtigung einer Sehfähigkeit des Benutzers durch die durch das Leuchtelement ausgesandte Strahlung zumindest im Wesentlichen aus. Vorzugsweise ist das Referenzelement kraft-, form- und/oder stoffschlüssig an dem Gehäuse der Medienauftragsvorrichtung angeordnet. Vorteilhaft kann eine komfortabel, insbesondere blendfrei, zu bedienende Medienauftragsvorrichtung bereitgestellt werden.

Ferner wird vorgeschlagen, dass die Medienauftragsvorrichtung zumindest ein Blendschutzelement aufweist, welches das Leuchtelement zumindest teilweise überdeckt. Insbesondere kann das Blendschutzelement an dem Gehäuse der Medienauftragsvorrichtung, bevorzugt kraft-, form- und/oder stoffschlüssig, angeordnet sein. Vorzugsweise überdeckt das Blendschutzelement das Leuchtelement in einer Blickrichtung des Benutzers. Das Blendschutzelement kann vorzugsweise als ein Abdeckelement, insbesondere als ein strahlungsundurchlässiges Abdeckelement, ausgebildet sein, das insbesondere dazu vorgesehen ist, eine Ausbreitung von durch das Leuchtelement ausgesandter Strahlung in Richtung von Augen des Benutzers zu blockieren. Vorzugsweise kann das Blendschutzelement als ein Filterelement, beispielsweise als ein Farbfilterelement, ausgebildet sein, das insbesondere dazu vorgesehen ist, die durch das Leuchtelement ausgesandte Strahlung zu filtern und blendintensive Anteile der Strahlung zu blockieren. Alternativ ist vorstellbar, dass das Blendschutzelement als ein Streuelement, ein Reflexionselement oder als ein anderes, einem Fachmann als sinnvoll erscheinendes Blendschutzelement ausgebildet ist. Vorteilhaft kann, insbesondere mittels eines einzigen Elements, ein effizienter Blendschutz erreicht werden.

Des Weiteren wird vorgeschlagen, dass das Referenzelement der Medienauftragsvorrichtung als ein eine Strahlung aussendendes Leuchtelement ausgebildet ist, welches zu einer Aussendung von elektromagnetischer Strahlung aus einem blauen Spektralbereich und/oder aus einem für ein menschliches Auge zumindest im Wesentlichen unsichtbaren Spektralbereich vorgesehen ist. Insbesondere kann das Leuchtelement als eine in einem blauen Spektralbereich emittierende Leuchtdiode oder als eine Infrarotleuchtdiode ausgebildet sein. Alternativ ist vorstellbar, dass das Leuchtelement elektromagnetische Strahlung aus einem längerwelligen Spektralbereich als Infrarot aussendet oder beispielsweise als ein Funksender ausgebildet ist. Vorzugsweise ist blaues Licht zumindest im Wesentlichen blendfrei für ein menschliches Auge. Vorzugsweise ist Infrarot- und längerwellige Strahlung für ein menschliches Auge unsichtbar, insbesondere vollständig blendfrei. Vorteilhaft kann ein als Leuchtelement ausgebildetes Referenzelement bereitgestellt werden, dessen ausgesendete Strahlung zumindest im Wesentlichen blendfrei ist. Vorteilhaft kann auf zusätzliche Bauteile für einen Blendschutz verzichtet werden. Vorteilhaft kann die Medienauftragsvorrichtung kostengünstig hergestellt werden.

Das Referenzelement der Medienauftragsvorrichtung ist als ein eine Strahlung aussendendes Leuchtelement ausgebildet, welches zu einer gepulsten Aussendung von Strahlung vorgesehen ist. Vorzugsweise kann das Leuchtelement als eine gepulste Leuchtdiode oder als eine gepulste Laserdiode ausgebildet sein. Insbesondere kann zumindest ein Strahlungspuls, insbesondere eine Dauer und/oder eine Intensität des Strahlungspulses, derart ausgelegt sein, dass eine Blendung des Benutzers zumindest im Wesentlichen ausbleibt. Durch einen gepulsten Betrieb des Leuchtelements kann die durch das Leuchtelement ausgesandte Strahlung zu einer Informationsübertragung von der Medienauftragsvorrichtung zu der Steuer- und/oder Regeleinheit moduliert werden. Somit kann das Referenzelement der Medienauftragsvorrichtung eine Doppelfunktion erfüllen.

Ferner wird vorgeschlagen, dass das Referenzelement der Umgebung der Medienauftragsvorrichtung zumindest im Wesentlichen analog zu dem Referenzelement der Medienauftragsvorrichtung ausgebildet ist. Insbesondere kann das Referenzelement als ein, insbesondere blendfreies, Leuchtelement, als ein Leuchtelement, welches zu einer Aussendung von elektromagnetischer Strahlung aus einem blauen Spektralbereich und/oder aus einem für ein menschliches Auge zumindest im Wesentlichen unsichtbaren Spektralbereich vorgesehen ist, als ein Leuchtelement, welches zu einer gepulsten Aussendung von Strahlung vorgesehen ist, ein strahlungsfreies Codeelement oder als ein anderes, einem Fachmann als sinnvoll erscheinendes Referenzelement ausgebildet sein. Insbesondere ist vorstellbar, dass das Referenzelement der Umgebung der Medienauftragsvorrichtung mittels eines Projektors, wie beispielsweise einem Laserprojektor, einem Videoprojektor o. dgl., in die Umgebung der Medienauftragsvorrichtung, vorzugsweise auf die Oberfläche, projiziert wird. Vorzugsweise kann das Referenzelement der Umgebung der Medienauftragsvorrichtung als ein Muster, insbesondere als ein Streifenmuster, als ein QR-Code, als ein Strichcode oder als ein anderes, einem Fachmann als sinnvoll erscheinendes Referenzelement der Umgebung der Medienauftragsvorrichtung in die Umgebung der Medienauftragsvorrichtung projiziert werden. Vorteilhaft kann eine Vielzahl von verschiedenen Referenzelementen der Umgebung der Medienauftragsvorrichtung bereitgestellt werden.

Des Weiteren wird vorgeschlagen, dass die Medienauftragsvorrichtung zumindest eine Referenzelementerzeugungseinheit aufweist, welche dazu vorgesehen ist, das Referenzelement der Umgebung der Medienauftragsvorrichtung zu erzeugen. Vorzugsweise ist die Referenzelementerzeugungseinheit dazu vorgesehen, das Referenzelement der Umgebung der Medienauftragsvorrichtung auf der Oberfläche zu erzeugen. Insbesondere kann die Referenzelementerzeugungseinheit das Referenzelement temporär oder dauerhaft erzeugen. Die Referenzelementerzeugungseinheit kann vorzugsweise als ein Projektor ausgebildet sein. Insbesondere kann mittels des Projektors das Referenzelement der Umgebung der Medienauftragsvorrichtung auf die Oberfläche projiziert werden, insbesondere als ein Muster, insbesondere als ein Streifenmuster, als ein QR-Code, als ein Strichcode oder als ein anderes, einem Fachmann als sinnvoll erscheinendes Referenzelement. Insbesondere kann das Referenzelement temporär, insbesondere bis zu einer Positions- und/oder Ausrichtungserfassung der Medienauftragsvorrichtung relativ zu der Oberfläche durch die Erfassungsvorrichtung, oder dauerhaft, insbesondere zu einer kontinuierlichen Positions- und/oder Ausrichtungserfassung der Medienauftragsvorrichtung relativ zu der Oberfläche durch die Erfassungsvorrichtung, projiziert werden.

Alternativ ist vorstellbar, dass die Referenzelementerzeugungseinheit als eine weitere Medienausgabeeinheit ausgebildet ist oder in die vorhandene Medienausgabeeinheit der Medienauftragsvorrichtung integriert ist. Vorzugsweise kann die Referenzelementerzeugungseinheit mittels eines Mediums, bevorzugt mittels des zu einer Erstellung des Medienauftrags genutzten Mediums, das Referenzelement der Umgebung der Medienauftragsvorrichtung auf die Oberfläche auftragen. Vorzugsweise kann die Referenzelementerzeugungseinheit mittels des Mediums einen QR-Code, einen Strichcode oder ein anderes, einem Fachmann als sinnvoll erscheinendes Referenzelement auf die Oberfläche auftragen. Bevorzugt ist zumindest eine Vorlage des zu erzeugenden Referenzelements der Umgebung der Medienauftragsvorrichtung in einer Speichereinheit der Referenzelementerzeugungseinheit und/oder in der Speichereinheit der Elektronikeinheit hinterlegt. Vorzugsweise kann das Referenzelement der Umgebung der Medienauftragsvorrichtung mittels der Referenzelementerzeugungseinheit der Medienauftragsvorrichtung erzeugt werden. Vorteilhaft kann auf eine Anbringung von Referenzelementen der Umgebung der Medienauftragsvorrichtung vor einer Erstellung des Medienauftrags verzichtet werden. Vorteilhaft kann ein Medienauftragsprozess einfach gestaltet werden.

Zudem wird vorgeschlagen, dass die Medienausgabeeinheit zumindest eine Düseneinheit mit zumindest einem Düsenelement aufweist, das in einer gemeinsamen Flucht mit dem Referenzelement der Medienauftragsvorrichtung angeordnet ist, wobei das Düsenelement und das Referenzelement der Medienauftragsvorrichtung entlang einer einzelnen gedachten geraden Linie angeordnet sind, welche bei einer zumindest im Wesentlichen senkrechten Medienausgaberichtung des Düsenelements relativ zu der Oberfläche zumindest im Wesentlichen senkrecht zu der Oberfläche verläuft. Vorzugsweise erfolgt die Ausgabe des Mediums auf die Oberfläche durch das Düsenelement. Vorzugsweise ist das Düsenelement fluchtend mit dem Referenzelement der Medienauftragsvorrichtung angeordnet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise entspricht eine durch die Erfassungsvorrichtung anhand des Referenzelements der Medienauftragsvorrichtung erfasste Position und/oder Ausrichtung der Medienauftragsvorrichtung relativ zu der Oberfläche einer Position und/oder Ausrichtung des Düsenelements relativ zu der Oberfläche. Vorteilhaft kann eine exakte Position des Medienauftrags erfasst werden. Vorteilhaft kann auf eine Offsetkorrektur bei einer Positions- und/oder Ausrichtungserfassung der Medienauftragsvorrichtung relativ zu der Oberfläche im Vergleich zu einer nicht fluchtenden Anordnung des Düsenelements und des Referenzelements der Medienauftragsvorrichtung verzichtet werden. Vorteilhaft kann eine Positions- und/oder Ausrichtungserfassung der Medienauftragsvorrichtung relativ zu der Oberfläche im Vergleich zu einer Positions- und/oder Ausrichtungserfassung der Medienauftragsvorrichtung relativ zu der Oberfläche mit der Offsetkorrektur mit einem geringeren Rechenaufwand erfolgen.

Weiterhin wird vorgeschlagen, dass die Erfassungsvorrichtung zumindest zu einer Positions- und/oder Ausrichtungserfassung der Medienauftragsvorrichtung relativ zu der Oberfläche zumindest eine Kameraeinheit mit einer Bildaufnahmefrequenz von zumindest 120 Bildern in einer Sekunde bei einer Bildauflösung von zumindest 518.400 Bildpunkten aufweist. Insbesondere weist die Kameraeinheit eine Bildaufnahmefrequenz von zumindest 120 Bildern in einer Sekunde bei einer Bildauflösung von zumindest 1280 mal 720 Bildpunkten, bevorzugt bei einer Bildauflösung von zumindest 1920 mal 1080 Bildpunkten und besonders bevorzugt bei einer Bildauflösung von 3840 mal 2160 Bildpunkten auf. Bei einer Bildauflösung von zumindest 1,1664 Millionen Bildpunkten, insbesondere bei einer Bildauflösung von 1920 mal 1080 Bildpunkten, weist die Kameraeinheit bevorzugt eine Bildaufnahmefrequenz von 120 Bildern in einer Sekunde, besonders bevorzugt eine Bildaufnahmefrequenz von 240 Bildern in einer Sekunde auf. Bei einer Bildauflösung von zumindest 518.400 Bildpunkten, insbesondere bei einer Bildauflösung von 1280 mal 720 Bildpunkten, weist die Kameraeinheit bevorzugt eine Bildaufnahmefrequenz von 240 Bildern in einer Sekunde, besonders bevorzugt eine Bildaufnahmefrequenz von 480 Bildern in einer Sekunde auf. Insbesondere bei einer gleichzeitigen Positions- und/oder Ausrichtungserfassung der Medienausgabeeinheit relativ zu der Oberfläche mittels der Positions- und/oder Oberflächensensoreinheit der Medienauftragsvorrichtung ist denkbar, dass die Kameraeinheit eine Bildaufnahmefrequenz von zumindest 60 Bildern in einer Sekunde, insbesondere bei einer Bildauflösung von zumindest 518.400 Bildpunkten, bevorzugt bei einer Bildauflösung von zumindest 1280 mal 720 Bildpunkten, besonders bevorzugt bei einer Bildauflösung von zumindest 1920 mal 1080 Bildpunkten und ganz besonders bevorzugt bei einer Bildauflösung von zumindest 3840 mal 2160 Bildpunkten aufweist. Die Kameraeinheit kann insbesondere als eine Hochgeschwindigkeitskamera oder als eine andere, einem Fachmann als sinnvoll erscheinende Kameraeinheit ausgebildet sein. Insbesondere kann die Kameraeinheit eine Anzahl von Positionen und/oder Ausrichtungen der Medienauftragsvorrichtung relativ zu der Oberfläche in einer Sekunde entsprechend einer Anzahl von aufgenommenen Bildern in einer Sekunde bestimmen. Vorteilhaft kann eine genaue Positions- und/oder Ausrichtungserfassung der Medienauftragsvorrichtung relativ zu der Oberfläche, insbesondere auch bei einer schnellen Bewegung der Medienauftragsvorrichtung, erreicht werden.

Ferner wird vorgeschlagen, dass die Steuer- und/oder Regeleinheit zumindest eine Umlenkungseinheit aufweist, welche dazu vorgesehen ist, Daten zu einer Positions- und/oder Ausrichtungserfassung durch die Erfassungsvorrichtung umzulenken. Vorzugsweise kann mittels der Umlenkungseinheit eine Positions- und/oder Ausrichtungserfassung der Medienauftragsvorrichtung mittels der Erfassungsvorrichtung auch bei einer von der Oberfläche abgewandten Ausrichtung der Erfassungsvorrichtung erfolgen. Vorzugsweise ist die Umlenkungseinheit zumindest teilweise an der Erfassungsvorrichtung angeordnet. Vorzugsweise ist die Umlenkungseinheit zumindest teilweise der Oberfläche zugewandt ausgerichtet. Insbesondere kann die Umlenkungseinheit als eine Einheit konstruiert aus optischen Elementen wie Linsen und/oder Spiegeln ausgebildet sein. Vorzugsweise kann die Umlenkungseinheit als eine periskopartige Spiegel- und/oder Prismenkonstruktion, als eine Faseroptik, als ein Winkelspiegel oder als eine andere, einem Fachmann als sinnvoll erscheinende Umlenkungseinheit ausgebildet sein. Insbesondere kann mittels der Umlenkungseinheit ein zu erfassendes Bild der Medienauftragsvorrichtung vor der Oberfläche zu einer Erfassung durch die Erfassungsvorrichtung zu der Erfassungsvorrichtung umgelenkt werden. Insbesondere ein als die Steuer- und/oder Regeleinheit nutzbares Smartphone kann die als Kamera ausgebildete Erfassungsvorrichtung auf einer Rückseite des Smartphones und einen Bildschirm auf der Vorderseite des Smartphones aufweisen. Zu einer komfortablen gleichzeitigen Nutzung der Erfassungsvorrichtung und des Bildschirms kann vorzugsweise die Umlenkungseinheit genutzt werden. Alternativ ist vorstellbar, eine Umlenkungseinheit zu einer Umlenkung zumindest eines auf dem Bildschirm dargestellten Bilds an der Steuer- und/oder Regeleinheit anzuordnen. Vorzugsweise kann die Umlenkungseinheit zur Umlenkung des auf dem Bildschirm dargestellten Bilds zumindest im Wesentlichen analog zu der Umlenkungseinheit für die Erfassungsvorrichtung ausgebildet sein. Insbesondere kann der Bildschirm als ein klapp- und/oder drehbarer Bildschirm ausgebildet sein. Vorteilhaft kann mittels der Umlenkungseinheit eine frei wählbare Ausrichtung der Erfassungsvorrichtung ermöglicht werden.

Des Weiteren wird vorgeschlagen, dass die Erfassungsvorrichtung zumindest eine Abstandssensoreinheit aufweist, welche dazu vorgesehen ist, zumindest einen Abstand der Steuer- und/oder Regeleinheit relativ zu der Oberfläche zu erfassen. Vorzugsweise kann die Abstandssensoreinheit als ein Laserentfernungsmesser, als ein Ultraschallentfernungsmesser, als ein Radarentfernungsmesser oder als eine andere, einem Fachmann als sinnvoll erscheinende Abstandssensoreinheit ausgebildet sein. Insbesondere kann die als Laserentfernungsmesser ausgebildete Abstandssensoreinheit zumindest eine Laserdiode, insbesondere eine VCSEL-Diode (vertical-cavity surface-emitting laser diode), aufweisen. Bevorzugt emittiert die Laserdiode elektromagnetische Strahlung mit einer Wellenlänge größer als 750 nm, besonders bevorzugt elektromagnetische Strahlung mit einer Wellenlänge von 850 nm oder 940 nm. Alternativ ist vorstellbar, dass die Abstandssensoreinheit als eine 3D-Kamera, insbesondere als eine Stereokamera, ausgebildet ist. Vorzugsweise kann ein als eine 3D-Kamera ausgebildetes Erfassungselement als Abstandssensoreinheit genutzt werden. Weiterhin alternativ ist denkbar, dass die Abstandssensoreinheit einen Projektor und ein Erfassungselement aufweist. Insbesondere kann mittels des Projektors ein Muster auf die Oberfläche projiziert werden, das vorzugsweise von dem Erfassungselement erfassbar ist und anhand dessen das Erfassungselement vorzugsweise einen Abstand zu der Oberfläche bestimmen kann. Vorzugsweise ist der Projektor als ein Infrarotprojektor und das Erfassungselement als ein Infrarotsensor ausgebildet. Vorzugsweise kann ein mittels der Abstandssensoreinheit erfasster Abstand der Steuer- und/oder Regeleinheit relativ zu der Oberfläche in eine Positions- und/oder Ausrichtungserfassung der Medienauftragsvorrichtung relativ zu der Oberfläche, insbesondere zu einer Genauigkeitserhöhung einer Positions- und/oder Ausrichtungserfassung der Medienauftragsvorrichtung relativ zu der Oberfläche, eingerechnet werden. Vorteilhaft kann der Abstand der Steuer- und/oder Regeleinheit relativ zu der Oberfläche erfasst werden. Vorteilhaft kann eine genaue Positions- und/oder Ausrichtungserfassung der Medienauftragsvorrichtung relativ zu der Oberfläche erreicht werden.

Zudem wird vorgeschlagen, dass die Medienauftragsvorrichtung zumindest eine Befestigungseinheit zu einer Befestigung der Steuer- und/oder Regeleinheit an der Medienauftragsvorrichtung aufweist. Vorzugsweise kann die Befestigungseinheit, insbesondere kraft-, form- und/oder stoffschlüssig, an dem Gehäuse der Medienauftragsvorrichtung angeordnet sein. Bevorzugt ist die Befestigungseinheit zu einer form- und/oder kraftschlüssigen Aufnahme der Steuer- und/oder Regeleinheit, insbesondere eines Gehäuses der Steuer- und/oder Regeleinheit vorgesehen. Vorzugsweise ist die Befestigungseinheit verstellbar, insbesondere zu einer Aufnahme verschiedener Steuer- und/oder Regeleinheiten, ausgebildet. Vorzugsweise ist die Befestigungseinheit beweglich an dem Gehäuse der Medienauftragsvorrichtung angeordnet, insbesondere zu einer ergonomischen Ausrichtung der Steuer- und/oder Regeleinheit. Vorzugsweise weist die Befestigungseinheit eine Schutzeinheit, wie beispielsweise eine Schutzhülle, eine Schutzfolie o. dgl., zu einem Schutz der Steuer- und/oder Regeleinheit, insbesondere vor dem durch die Medienausgabeeinheit ausgegebenen Medium auf. Vorzugsweise umschließt die Schutzeinheit die Steuer- und/oder Regeleinheit zumindest teilweise. Alternativ oder zusätzlich ist denkbar, dass die Steuer- und/oder Regeleinheit selbst eine Schutzeinheit aufweist. Vorteilhaft kann die Steuer- und/oder Regeleinheit an der Medienauftragsvorrichtung befestigt werden. Vorteilhaft kann der Benutzer den Bildschirm der Steuer- und/oder Regeleinheit während eines Medienauftrags benutzen. Vorteilhaft kann der Benutzer während eines Medienauftrags Einstellungen der Steuer- und/oder Regeleinheit vornehmen.

Weiterhin wird vorgeschlagen, dass die Steuer- und/oder Regeleinheit zumindest eine Projektionseinheit aufweist, welche dazu vorgesehen ist, zumindest einen Orientierungspunkt und/oder zumindest ein Raster auf die Oberfläche zu projizieren. Die Projektionseinheit kann vorzugsweise als ein Laserprojektor, insbesondere als ein Laserpointer, als ein Videoprojektor oder als eine andere, einem Fachmann als sinnvoll erscheinende Projektionseinheit ausgebildet sein. Der Orientierungspunkt kann insbesondere ein Lichtpunkt sein, welcher bevorzugt zu einer Orientierung und/oder Führung des Benutzers bei einem Medienauftragsprozess über die Oberfläche gerastert wird. Der Medienauftragsprozess ist insbesondere als ein Prozess ausgebildet, bei dem der Benutzer mittels der Medienauftragsvorrichtung das Medium zu einer Erstellung eines Medienauftrags auf die Oberfläche aufbringt. Das Raster kann vorzugsweise als ein Rahmen um einen zu besprühenden Bereich auf der Oberfläche, als ein Muster, insbesondere ein Gitter- und/oder Punktmuster oder ein Streifenmuster, oder als ein anderes, einem Fachmann als sinnvoll erscheinendes Raster ausgebildet sein. Bevorzugt kann die Projektionseinheit den Orientierungspunkt und das Raster gleichzeitig auf die Oberfläche projizieren. Vorteilhaft kann eine Benutzerorientierung und/oder -führung, insbesondere bei einem Medienauftrag, erreicht werden.

Ferner wird vorgeschlagen, dass die Medienauftragsvorrichtung und die Steuer- und/oder Regeleinheit jeweils zumindest eine, insbesondere drahtlose, Kommunikationseinheit zu einem verschlüsselten Austausch von elektronischen Daten untereinander und/oder mit zumindest einer weiteren externen Einheit, aufweisen, wobei die Kommunikationseinheit zu einer Datenübertragung mit einer Latenzzeit von weniger als 30 ms vorgesehen ist. Die weitere externe Einheit kann insbesondere als ein Bildschirm, als ein Projektor, wie beispielsweise ein Laserprojektor, ein Videoprojektor o. dgl., oder als eine andere, einem Fachmann als sinnvoll erscheinende weitere externe Einheit ausgebildet sein. Vorteilhaft kann ein Live-Bild eines Medienauftrags auf der Oberfläche, insbesondere mit einer aktuell erfassten Position der Medienauftragsvorrichtung relativ zu der Oberfläche, mittels der Kommunikationseinheit an die weitere externe Einheit übertragen werden und insbesondere durch die weitere externe Einheit dem Benutzer dargestellt werden. Die Kommunikationseinheit ist bevorzugt als eine Bluetooth-Einheit, als eine Funkeinheit, als eine lichtbasierte Kommunikationseinheit oder als eine andere, einem Fachmann als sinnvoll erscheinende Kommunikationseinheit ausgebildet. Eine lichtbasierte Kommunikationseinheit kann die elektronischen Daten insbesondere über ein Drittgerät wie beispielsweise eine vernetzte Lampe oder Glühbirne und/oder durch moduliertes Licht übertragen. Die lichtbasierte Kommunikationseinheit kann vorzugsweise als Laserdiode, insbesondere als VCSEL-Diode, ausgebildet sein. Vorzugsweise können als die lichtbasierte Kommunikationseinheit auch vorhandene Komponenten der Steuer- und/oder Regeleinheit, insbesondere ein Blitzlicht der Kameraeinheit, und/oder der Medienauftragsvorrichtung, insbesondere das Leuchtelement, verwendet werden.

Alternativ ist vorstellbar, dass die Kommunikationseinheit kabelgebunden ausgebildet ist. Vorzugsweise kann der Austausch von elektronischen Daten über ein USB-Kabel, ein Ethernet-Kabel oder über ein anderes, einem Fachmann als sinnvoll erscheinendes Kabel erfolgen. Insbesondere ist die Kommunikationseinheit zu einer Datenübertragung mit einer Latenzzeit von weniger als 30 ms, bevorzugt mit einer Latenzzeit von weniger als 20 ms und besonders bevorzugt mit einer Latenzzeit von weniger als 10 ms vorgesehen. Insbesondere bei einer gleichzeitigen Positions- und/oder Ausrichtungserfassung der Medienausgabeeinheit relativ zu der Oberfläche mittels der Positions- und/oder Oberflächensensoreinheit der Medienauftragsvorrichtung und der Erfassungsvorrichtung der Steuer- und/oder Regeleinheit ist denkbar, dass die Kommunikationseinheit zu einer Datenübertragung mit einer Latenzzeit von weniger als 100 ms vorgesehen ist. Unter einer "Latenzzeit" soll insbesondere eine Zeit verstanden werden, die zwischen einem Versand und einem Empfang der elektronischen Daten vergeht. Vorzugsweise weist die Kommunikationseinheit zumindest ein Verschlüsselungs- und/oder Entschlüsselungselement auf. Das Verschlüsselungs- und/oder Entschlüsselungselement ist vorzugsweise zu einer Verschlüsselung zu sendender elektronischer Daten und zu einer Entschlüsselung empfangener elektronischer Daten vorgesehen. Insbesondere ist das Verschlüsselungs- und/oder Entschlüsselungselement zu einer symmetrischen und/oder asymmetrischen Verschlüsselung der zu sendenden elektronischen Daten vorgesehen. Das Verschlüsselungs- und/oder Entschlüsselungselement ist vorzugsweise als ein Mikroprozessor oder als ein anderes, einem Fachmann als sinnvoll erscheinendes Verschlüsselungs- und/oder Entschlüsselungselement ausgebildet. Vorteilhaft kann eine zumindest im Wesentlichen verzögerungsfreie Kommunikation zwischen der Medienauftragsvorrichtung, der Steuer- und/oder Regeleinheit und/oder einer weiteren externen Einheit erreicht werden. Vorteilhaft kann eine gesicherte Kommunikation zwischen der Medienauftragsvorrichtung, der Steuer- und/oder Regeleinheit und/oder einer weiteren externen Einheit erreicht werden. Vorteilhaft kann ein sicheres Nutzungserlebnis des Auftragssystems ermöglicht werden.

Zudem wird vorgeschlagen, dass die Erfassungsvorrichtung zu einer Erfassung einer Position und/oder Ausrichtung der Medienauftragsvorrichtung relativ zu der Oberfläche zu einer, insbesondere drahtlosen, Synchronisierung mit der Medienauftragsvorrichtung mittels einer Taktsynchronisierung und/oder einer Startzeitauslösung vorgesehen ist. Insbesondere ist die Erfassungsvorrichtung zu einer Synchronisierung mit dem, insbesondere als ein Strahlung aussendendes Leuchtelement ausgebildeten, Referenzelement der Medienauftragsvorrichtung vorgesehen. Vorzugsweise ist eine Erfassungsvorrichtung einer nicht echtzeitfähigen Steuer- und/oder Regeleinheit zu einer Synchronisierung mit dem Referenzelement der Medienauftragsvorrichtung vorgesehen. Bei einer Positions- und/oder Ausrichtungserfassung der Medienauftragsvorrichtung relativ zu der Oberfläche in Echtzeit wird der Medienauftragsvorrichtung, insbesondere der Elektronikeinheit der Medienauftragsvorrichtung, insbesondere zumindest im Wesentlichen simultan und/oder sequentiell zu der Positions- und/oder Ausrichtungserfassung die erfasste Position und/oder Ausrichtung der Medienauftragsvorrichtung relativ zu der Oberfläche bereitgestellt. Durch die Synchronisierung mit der Medienauftragsvorrichtung, insbesondere mit dem Referenzelement der Medienauftragsvorrichtung, kann die Erfassungsvorrichtung vorzugsweise die erfasste Position und/oder Ausrichtung der Medienauftragsvorrichtung relativ zu der Oberfläche der Medienauftragsvorrichtung, insbesondere der Elektronikeinheit, mit einem Zeitstempel bereitstellen. Der Zeitstempel ist insbesondere dazu vorgesehen, der erfassten Position und/oder Ausrichtung der Medienauftragsvorrichtung relativ zu der Oberfläche einen eindeutigen Erfassungszeitpunkt zuzuordnen. Vorzugsweise wird der Zeitstempel in Form von elektronischen Daten gemeinsam mit elektronischen Daten, welche die erfasste Position und/oder Ausrichtung der Medienauftragsvorrichtung relativ zu der Oberfläche beschreiben, an die Medienauftragsvorrichtung, insbesondere über die Kommunikationseinheit der Steuer- und/oder Regeleinheit an die Kommunikationseinheit der Medienauftragsvorrichtung, übertragen. Vorzugsweise arbeiten das Referenzelement der Medienauftragsvorrichtung und die Erfassungsvorrichtung, insbesondere nach einer Synchronisierung der Erfassungsvorrichtung mit dem Referenzelement der Medienauftragsvorrichtung, taktsynchron und weisen einen gleichen Startzeitpunkt des Zeitstempels auf. Eine taktsynchrone Arbeit des Referenzelements der Medienauftragsvorrichtung und der Erfassungsvorrichtung ist insbesondere mittels einer Taktsynchronisierung erreichbar. Alternativ oder zusätzlich ist eine taktsynchrone Arbeit des Referenzelements der Medienauftragsvorrichtung und der Erfassungsvorrichtung insbesondere mittels einer Musterdetektion erreichbar. Insbesondere werden durch die Taktsynchronisierung ein Arbeitstakt der Medienauftragsvorrichtung, insbesondere der Elektronikeinheit der Medienauftragsvorrichtung, und ein Arbeitstakt der Erfassungsvorrichtung synchronisiert. Der Arbeitstakt der Medienauftragsvorrichtung, insbesondere der Elektronikeinheit der Medienauftragsvorrichtung, ist insbesondere als eine Referenzfrequenz eines Taktgebers, beispielsweise eines Quartzoszillators, der Elektronikeinheit der Medienauftragsvorrichtung ausgebildet. Vorzugsweise entspricht ein Rechentakt der Medienauftragsvorrichtung, mit dem die Elektronikeinheit der Medienauftragsvorrichtung Berechnungen ausführt, einem Vielfachen des Arbeitstakts der Medienauftragsvorrichtung. Der Arbeitstakt der Erfassungsvorrichtung ist insbesondere als eine Aufnahmefrequenz ausgebildet, mit der die Erfassungsvorrichtung die Medienauftragsvorrichtung erfasst, beispielsweise als eine Bildaufnahmefrequenz einer Kameraeinheit der Erfassungsvorrichtung. Der gleiche Startzeitpunkt des Zeitstempels des Referenzelements der Medienauftragsvorrichtung und der Erfassungsvorrichtung ist insbesondere mittels einer Startzeitauslösung erreichbar. Insbesondere werden durch die Startzeitauslösung synchronisierte Startzeitpunkte der Zeitstempel der Medienauftragsvorrichtung, insbesondere der Elektronikeinheit der Medienauftragsvorrichtung, und der Erfassungsvorrichtung eingestellt.

Bevorzugt ist die Erfassungsvorrichtung, insbesondere zu einer Initialisierung der Synchronisierung mit der Medienauftragsvorrichtung, zu einer Lokalisierung der Medienauftragsvorrichtung und/oder zu einer Bildisolation der Medienauftragsvorrichtung von der Umgebung der Medienauftragsvorrichtung vorgesehen. Vorzugsweise lokalisiert die Erfassungsvorrichtung die Medienauftragsvorrichtung anhand des Referenzelements der Medienauftragsvorrichtung. Vorzugsweise lokalisiert die Erfassungsvorrichtung die Medienauftragsvorrichtung anhand eines hellsten Bereichs des als ein eine Strahlung aussendendes Leuchtelement ausgebildeten Referenzelements der Medienauftragsvorrichtung, mittels einer Kantendetektion und/oder anhand von Kantenübergängen des Referenzelements der Medienauftragsvorrichtung. Zu einer Bildisolation der Medienauftragsvorrichtung von der Umgebung der Medienauftragsvorrichtung entfernt die Erfassungsvorrichtung insbesondere Bildbereiche zumindest eines aufgenommenen Bilds, in welchen die Medienauftragsvorrichtung nicht dargestellt ist. Insbesondere beschränkt die Erfassungsvorrichtung durch die Bildisolation einen zu verarbeitenden Bildbereich des aufgenommenen Bilds auf einen Bildbereich, in dem die Medienauftragsvorrichtung ohne eine Umgebung der Medienauftragsvorrichtung abgebildet ist. Vorzugsweise ermöglicht die Bildisolation eine schnelle und/oder präzise Taktsynchronisierung und Startzeitauslösung. Bevorzugt führt die Erfassungsvorrichtung die Lokalisierung und die Bildisolation zumindest zu einer Initialisierung der Synchronisierung mit der Medienauftragsvorrichtung, besonders bevorzugt wiederholend während der Taktsynchronisierung und der Startzeitauslösung durch. Alternativ ist vorstellbar, dass die Erfassungsvorrichtung die Lokalisierung ein einziges Mal während der Initialisierung der Synchronisierung mit der Medienauftragsvorrichtung und die Bildisolation zusätzlich zu der Initialisierung wiederholend während der Taktsynchronisierung und der Startzeitauslösung durchführt. Es ist jedoch auch denkbar, auf die Lokalisierung und die Bildisolation zu verzichten.

Die Erfassungsvorrichtung ist vorzugsweise zu einer Realisierung der Taktsynchronisierung zu einer Erfassung eines Taktsignals der Medienauftragsvorrichtung, insbesondere des Referenzelements der Medienauftragsvorrichtung, und zu einer Übertragung eines Taktfehlers, insbesondere mittels der Kommunikationseinheit der Steuer- und/oder Regeleinheit, an die Medienauftragsvorrichtung, insbesondere an die Kommunikationseinheit der Medienauftragsvorrichtung, vorgesehen. Die Erfassungsvorrichtung und die Medienauftragsvorrichtung sind insbesondere zu einer Taktsynchronisierung nach einem Prinzip einer Phasenregelschleife (PLL: phase-locked loop) vorgesehen. Vorzugsweise sendet das Referenzelement der Medienauftragsvorrichtung ein Taktsignal aus, welches einem Arbeitstakt der Elektronikeinheit der Medienauftragsvorrichtung oder einem Vielfachen des Arbeitstakts der Elektronikeinheit der Medienauftragsvorrichtung entspricht. Ein als ein eine Strahlung aussendendes Referenzelement der Medienauftragsvorrichtung ist insbesondere dazu vorgesehen, mit einer Blinkfrequenz entsprechend einem Arbeitstakt der Elektronikeinheit der Medienauftragsvorrichtung oder einem Vielfachen des Arbeitstakts der Elektronikeinheit der Medienauftragsvorrichtung zu blinken. Vorzugsweise ist das Referenzelement der Medienauftragsvorrichtung, insbesondere das als ein eine Strahlung aussendendes Leuchtelement ausgebildetes Referenzelement der Medienauftragsvorrichtung, dazu vorgesehen, ein frequenzkodiertes, insbesondere ein mehrfarbiges, Taktsignal auszusenden. Alternativ oder zusätzlich ist denkbar, dass das Referenzelement der Medienauftragsvorrichtung, insbesondere eine Mehrzahl von als Strahlung aussendende Leuchtelemente ausgebildete Referenzelemente der Medienauftragsvorrichtung, dazu vorgesehen ist, ein örtliches Muster auszusenden. Die Erfassungsvorrichtung ist insbesondere dazu vorgesehen, das von dem Referenzelement der Medienauftragsvorrichtung ausgesandte Taktsignal zu erfassen. Vorzugsweise kann die Erfassungsvorrichtung nach einer Erfassung des Taktsignals eine Lokalisierung der Medienauftragsvorrichtung und/oder eine Bildisolation der Medienauftragsvorrichtung von der Umgebung der Medienauftragsvorrichtung durchführen. Alternativ ist denkbar, dass die Erfassungsvorrichtung die Lokalisierung und/oder die Bildisolation lediglich in einer Initialisierung vor der Taktsynchronisierung durchführt. Die Erfassungsvorrichtung ist insbesondere dazu vorgesehen, das erfasste Taktsignal des Referenzelements der Medienauftragsvorrichtung mit einem Takt der Erfassungsvorrichtung zu vergleichen. Insbesondere kann die Erfassungsvorrichtung anhand eines Vergleichs des erfassten Taktsignals der Medienauftragsvorrichtung mit dem Takt der Erfassungsvorrichtung einen Taktfehler ermitteln. Vorzugsweise ist die Erfassungsvorrichtung dazu vorgesehen, den ermittelten Taktfehler mit einem, insbesondere in einer Speichereinheit der Steuer- und/oder Regeleinheit hinterlegten, Taktfehlermaximalwert zu vergleichen. Insbesondere ist die Erfassungsvorrichtung bei einem Taktfehler kleiner als der Taktfehlermaximalwert dazu vorgesehen, die Startzeitauslösung durchzuführen. Insbesondere ist die Erfassungsvorrichtung bei einem Taktfehler größer als der Taktfehlermaximalwert dazu vorgesehen, den Taktfehler an die Medienauftragsvorrichtung, insbesondere über die Kommunikationseinheit der Steuer- und/oder Regeleinheit an die Kommunikationseinheit der Medienauftragsvorrichtung, zu übertragen. Alternativ ist denkbar, dass die Erfassungsvorrichtung zu einer Übertragung eines invertierten Taktfehlers an die Medienauftragsvorrichtung vorgesehen ist. Vorzugsweise ist die Medienauftragsvorrichtung, insbesondere die Elektronikeinheit der Medienauftragsvorrichtung, dazu vorgesehen, den invertierten Taktfehler, insbesondere zu einer Weiterverarbeitung, zurückzubilden. Vorzugsweise ist die Erfassungsvorrichtung bei einem dem Takt der Erfassungsvorrichtung vorauseilenden Taktsignal des Referenzelements der Medienauftragsvorrichtung zu einer Übertragung eines negativen Taktfehlersignals an die Medienauftragsvorrichtung vorgesehen. Vorzugsweise ist die Erfassungsvorrichtung bei einem dem Takt der Erfassungsvorrichtung nacheilenden Taktsignal des Referenzelements der Medienauftragsvorrichtung zu einer Übertragung eines positiven Taktfehlersignals an die Medienauftragsvorrichtung vorgesehen.

Insbesondere ist die Elektronikeinheit der Medienauftragsvorrichtung dazu vorgesehen, den Arbeitstakt der Elektronikeinheit bzw. das Taktsignal des Referenzelements der Medienauftragsvorrichtung in Abhängigkeit von dem übertragenen Taktfehlersignal anzupassen. Vorzugsweise ist die Elektronikeinheit dazu vorgesehen, den Arbeitstakt der Elektronikeinheit bzw. das Taktsignal des Referenzelements der Medienauftragsvorrichtung in Abhängigkeit von einem negativen Taktfehlersignal zu verzögern. Vorzugsweise ist die Elektronikeinheit dazu vorgesehen, den Arbeitstakt der Elektronikeinheit bzw. das Taktsignal des Referenzelements der Medienauftragsvorrichtung in Abhängigkeit von einem positiven Taktfehlersignal zu beschleunigen. Insbesondere ist das Referenzelement der Medienauftragsvorrichtung dazu vorgesehen, ein angepasstes Taktsignal auszusenden. Vorzugsweise wird die Taktsynchronisierung wiederholt bis der ermittelte Taktfehler kleiner als der Taktfehlermaximalwert ist.

Die Medienauftragsvorrichtung, insbesondere das Referenzelement der Medienauftragsvorrichtung, ist zu einer Realisierung der Startzeitauslösung vorzugsweise zu einer Generierung zumindest eines Signalmusters vorgesehen. Das Signalmuster, insbesondere eines als eine Strahlung aussendendes Leuchtelement ausgebildeten Referenzelements der Medienauftragsvorrichtung, kann insbesondere als ein Schaltmuster, als ein Farbmuster, als ein strahlungsmoduliertes Muster, als ein örtliches Muster oder als ein anderes, einem Fachmann als sinnvoll erscheinendes Signalmuster ausgebildet sein. Vorzugsweise ist das Referenzelement der Medienauftragsvorrichtung zu Beginn der Startzeitauslösung zu einer Generierung eines Signalmusters mit einer großen Musterbreite und mit einem kleinen Musterperiodenabstand vorgesehen. Vorzugsweise ist das Referenzelement der Medienauftragsvorrichtung dazu vorgesehen, im Laufe der Startzeitauslösung die Musterbreite des Signalmusters zu verringern und den Musterperiodenabstand des Signalmusters zu erhöhen. Die Musterbreite des Signalmusters ist insbesondere eine zu einer Aussendung des Signalmusters benötigte Zeitdauer. Der Musterperiodenabstand des Signalmusters ist insbesondere eine Zeitdauer, welche zwischen einer Aussendung des Signalmusters und einer wiederholten Aussendung des Signalmusters verstreicht. Die Erfassungsvorrichtung ist vorzugsweise dazu vorgesehen, das Signalmuster zu erfassen. Vorzugsweise kann die Erfassungsvorrichtung nach einer Erfassung des Signalmusters eine Lokalisierung der Medienauftragsvorrichtung und/oder eine Bildisolation der Medienauftragsvorrichtung von der Umgebung der Medienauftragsvorrichtung durchführen. Alternativ ist denkbar, dass die Erfassungsvorrichtung die Lokalisierung und/oder die Bildisolation lediglich in einer Initialisierung vor der Taktsynchronisierung durchführt. Die Erfassungsvorrichtung ist vorzugsweise dazu vorgesehen, das erfasste Signalmuster zu erkennen und einen Startpunkt des Zeitstempels in Abhängigkeit von dem Signalmuster anzupassen. Insbesondere ist die Erfassungsvorrichtung dazu vorgesehen, den Musterperiodenabstand des erfassten Signalmusters mit einem, insbesondere in der Speichereinheit der Steuer- und/oder Regeleinheit hinterlegten, Musterperiodenabstandsminimalwert zu vergleichen. In Abhängigkeit von einem Vergleich des Musterperiodenabstands des erfassten Signalmusters mit dem Musterperiodenabstandsminimalwert ist die Erfassungsvorrichtung vorzugsweise dazu vorgesehen, ein Signal, insbesondere über die Kommunikationseinheit der Steuer- und/oder Regeleinheit, an die Medienauftragsvorrichtung, insbesondere an die Kommunikationseinheit der Medienauftragsvorrichtung, zu übertragen. Bei einem Musterperiodenabstand des erfassten Signalmusters größer als der Musterperiodenabstandsminimalwert ist die Erfassungsvorrichtung insbesondere zu einer Übertragung eines Startsignals an die Medienauftragsvorrichtung vorgesehen. Das Startsignal signalisiert vorzugsweise der Medienauftragsvorrichtung, insbesondere der Elektronikeinheit der Medienauftragsvorrichtung, bei einer Aussendung eines folgenden Signalmusters einen Zähler zu einer Erzeugung des Zeitstempels zu starten. Bei einem Musterperiodenabstand des erfassten Signalmusters kleiner als der Musterperiodenabstandsminimalwert ist die Erfassungsvorrichtung insbesondere zu einer Übertragung eines Wiederholungssignals an die Medienauftragsvorrichtung vorgesehen. Das Wiederholungssignal signalisiert vorzugsweise der Medienauftragsvorrichtung, eine Musterbreite eines folgenden auszusendenden Signalmusters kleiner einzustellen als die Musterbreite des erfassten Signalmusters. Das Wiederholungssignal signalisiert vorzugsweise der Medienauftragsvorrichtung, einen Musterperiodenabstand des folgenden auszusendenden Signalmusters größer einzustellen als den Musterperiodenabstand des erfassten Signalmusters. Vorzugsweise wird die Startzeitauslösung so lange wiederholt bis ein Musterperiodenabstand eines erfassten Signalmusters kleiner ist als der Musterperiodenabstandsmaximalwert. Die Startzeitauslösung ist insbesondere als ein Vorgang ausgebildet, der bis zu einem Start des Zählers zu einer Erzeugung des Zeitstempels andauert, insbesondere den Start des Zählers ermöglicht.

Vorzugsweise sind/ist die Erfassungsvorrichtung und/oder die Medienauftragsvorrichtung, insbesondere die Elektronikeinheit der Medienauftragsvorrichtung, insbesondere während der Synchronisierung der Erfassungsvorrichtung mit der Medienauftragsvorrichtung, zu einer Intensitätsregelung des Referenzelements der Medienauftragsvorrichtung vorgesehen. Die Erfassungsvorrichtung und/oder die Elektronikeinheit sind/ist insbesondere zu einer Intensitätsregelung des Referenzelements der Medienauftragsvorrichtung in Abhängigkeit von Umgebungsbedingungen der Medienauftragsvorrichtung und/oder der Erfassungsvorrichtung, wie beispielsweise einer Umgebungslichtintensität, Interferenzen o. dgl., vorgesehen. Vorzugsweise kann die Erfassungsvorrichtung eine erfasste Intensität des Referenzelements der Medienauftragsvorrichtung durch eine Anpassung einer Erfassungsempfindlichkeit der Erfassungsvorrichtung regeln. Vorzugsweise kann die Elektronikeinheit der Medienauftragsvorrichtung die ausgestrahlte Intensität des Referenzelements der Medienauftragsvorrichtung durch eine Einstellung einer Leistung des, insbesondere als ein eine Strahlung aussendendes Leuchtelement ausgebildeten, Referenzelements der Medienauftragsvorrichtung regeln. Durch die Intensitätsregelung des Referenzelements der Medienauftragsvorrichtung können vorzugsweise eine hohe Positionsgenauigkeit der Medienauftragsvorrichtung und eine hohe Genauigkeit der Synchronisierung der Erfassungsvorrichtung mit der Medienauftragsvorrichtung erreicht werden.

Vorzugsweise können eine Mehrzahl von Erfassungsvorrichtungen der Steuer- und/oder Regeleinheit und/oder Erfassungsvorrichtungen einer Mehrzahl von Steuer- und/oder Regeleinheiten zu einer, insbesondere drahtlosen, Synchronisierung mit der Medienauftragsvorrichtung mittels einer Taktsynchronisierung und/oder einer Startzeitauslösung vorgesehen sein. Vorzugsweise kann die Erfassungsvorrichtung zu einer, insbesondere drahtlosen, Synchronisierung mit einer Mehrzahl von Medienauftragsvorrichtungen mittels einer Taktsynchronisierung und/oder einer Startzeitauslösung vorgesehen sein. Vorzugsweise können eine Mehrzahl von Erfassungsvorrichtungen der Steuer- und/oder Regeleinheit und/oder Erfassungsvorrichtungen einer Mehrzahl von Steuer- und/oder Regeleinheiten zu einer, insbesondere drahtlosen, Synchronisierung mit einer Mehrzahl von Medienauftragsvorrichtungen mittels einer Taktsynchronisierung und/oder einer Startzeitauslösung vorgesehen sein. Vorzugsweise kann die Kommunikationseinheit der Steuer- und/oder Regeleinheit für jede der Mehrzahl von Medienauftragsvorrichtungen einen separaten Kommunikationskanal aufweisen. Vorzugsweise kann die Kommunikationseinheit der Medienauftragsvorrichtung für jede der Mehrzahl von Erfassungsvorrichtungen einen separaten Kommunikationskanal aufweisen. Vorzugsweise kann eine der Mehrzahl von Erfassungsvorrichtungen als eine Haupterfassungsvorrichtung ausgebildet sein, welche insbesondere zu einer Synchronisierung mit der Medienauftragsvorrichtung oder der Mehrzahl von Medienauftragsvorrichtungen vorgesehen ist. Insbesondere können weitere der Mehrzahl von Erfassungsvorrichtungen als Nebenerfassungsvorrichtungen ausgebildet sein, welche eine Startzeit insbesondere von der Haupterfassungsvorrichtung beziehen. Insbesondere sind die Nebenerfassungsvorrichtungen bei einer Kommunikation mit der Medienauftragsvorrichtung zu einer Berücksichtigung einer Phasendifferenz zwischen einem erfassten Signal und einem durch die Haupterfassungsvorrichtung erfassten Signal vorgesehen. Vorzugsweise kann mittels einer Mehrzahl von Erfassungsvorrichtungen eine Robustheit einer Positions- und/oder Ausrichtungserfassung der Medienauftragsvorrichtung relativ zu der Oberfläche im Vergleich zu einer Positions- und/oder Ausrichtungserfassung mittels einer einzelnen Erfassungsvorrichtung erhöht und/oder eine absolute räumliche Positions- und/oder Ausrichtungserfassung der Medienauftragsvorrichtung ermöglicht werden. Vorteilhaft kann eine präzise Positions- und/oder Ausrichtungserfassung der Medienauftragsvorrichtung relativ zu der Oberfläche mittels einer Erfassungsvorrichtung einer nicht echtzeitfähigen Steuer- und/oder Regeleinheit ermöglicht werden. Vorteilhaft kann auf eine kostenintensive echtzeitfähige Steuer- und/oder Regeleinheit verzichtet werden. Vorteilhaft kann eine kostengünstige Steuer- und/oder Regeleinheit bereitgestellt werden.

Des Weiteren wird vorgeschlagen, dass die vorgenannte Erfassungsvorrichtung welche dazu vorgesehen ist, zumindest eine Position und/oder Ausrichtung der Medienauftragsvorrichtung relativ zu zumindest einer Oberfläche zu erfassen und welche zu einer Eigenbewegung während einer Positions- und/oder Ausrichtungserfassung der Medienauftragsvorrichtung vorgesehen ist. Insbesondere kann die Steuer- und/oder Regeleinheit als ein Mobilgerät, vorzugsweise als ein Smartphone, als ein Tablet, als eine Augmented-Reality-Brille oder als ein anderes, einem Fachmann als sinnvoll erscheinendes Mobilgerät, ausgebildet sein.

Vorzugsweise ist die Erfassungsvorrichtung zu einer Eigenbewegung während einer Positions- und/oder Ausrichtungserfassung der Medienauftragsvorrichtung vorgesehen. Insbesondere kann die Erfassungsrichtung durch den Benutzer, insbesondere willkürlich, bewegt werden und/oder zu einer Positions- und/oder Ausrichtungsbestimmung der Medienauftragsvorrichtung, insbesondere automatisch, bewegt werden. Vorzugsweise kann die Steuer- und/oder Regeleinheit zu einer automatischen Bewegung der Erfassungsvorrichtung zumindest eine Antriebseinheit aufweisen. Vorteilhaft kann eine Position und/oder Ausrichtung der Medienauftragsvorrichtung relativ zu der Oberfläche erfasst werden. Vorteilhaft kann eine Steuer- und/oder Regeleinheit mit einer während einer Positions- und/oder Ausrichtungsbestimmung der Medienauftragsvorrichtung bewegbaren Erfassungsvorrichtung bereitgestellt werden.

Weiterhin wird vorgeschlagen, dass die Steuer- und/oder Regeleinheit zumindest eine Recheneinheit aufweist, welche dazu vorgesehen ist, eine Auswirkung auf eine Positions- und/oder Ausrichtungserfassung der Medienauftragsvorrichtung aufgrund zumindest einer Eigenbewegung der Erfassungsvorrichtung zu kompensieren. Vorzugsweise weist die Steuer- und/oder Regeleinheit zumindest ein Bewegungssensorelement, wie beispielsweise einen Beschleunigungssensor oder einen Neigungssensor, zu einer Erfassung der Eigenbewegung der Erfassungsvorrichtung auf. Insbesondere kann das Bewegungssensorelement der Recheneinheit ein, insbesondere elektrisches, Signal über die Eigenbewegung der Erfassungsvorrichtung bereitstellen. Vorzugsweise ist die Recheneinheit dazu vorgesehen, einen durch die Eigenbewegung der Erfassungsvorrichtung bedingten Offset der erfassten Position und/oder Ausrichtung der Medienauftragsvorrichtung relativ zu der Oberfläche aus der Position und/oder Ausrichtung der Medienauftragsvorrichtung herauszurechnen. Vorteilhaft kann eine genaue Positions- und/oder Ausrichtungserfassung der Medienauftragsvorrichtung relativ zu der Oberfläche trotz einer Eigenbewegung der Erfassungsvorrichtung erfolgen.

Zudem wird vorgeschlagen, dass die Erfassungsvorrichtung dazu vorgesehen ist, zumindest eine absolute Position der Medienauftragsvorrichtung in zumindest einem dreidimensionalen Raum anhand des Referenzelements der Medienauftragsvorrichtung zu erfassen. Das Referenzelement der Medienauftragsvorrichtung ist insbesondere an einem Gehäuse der Medienauftragsvorrichtung angebracht. Vorzugsweise ist die Erfassungsvorrichtung dazu vorgesehen, eine Distanz zu der Medienauftragsvorrichtung, einen Elevationswinkel der Medienauftragsvorrichtung relativ zu der Erfassungsvorrichtung und einen Azimuthwinkel der Medienauftragsvorrichtung relativ zu der Erfassungsvorrichtung zu erfassen. Vorzugsweise kann die Erfassungsvorrichtung eine absolute Position der Medienauftragsvorrichtung in einem dreidimensionalen Raum kontinuierlich, insbesondere während einer Bewegung der Medienauftragsvorrichtung, erfassen. Vorzugsweise ist das Erfassungselement zu einer Verfolgung der Medienauftragsvorrichtung in dem dreidimensionalen Raum um zumindest zwei zumindest im Wesentlichen senkrecht zueinander stehende Achsen schwenkbar gelagert. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorteilhaft kann eine absolute Positionsbestimmung der Medienauftragsvorrichtung in einem dreidimensionalen Raum ermöglicht werden.

Des Weiteren wird vorgeschlagen, dass das Auftragssystem zumindest eine Staffelei- und/oder Leinwandvorrichtung umfasst, welche zumindest eine Sensor- und/oder Markereinheit aufweist, die dazu vorgesehen ist, zumindest eine Position und/oder Ausrichtung der Medienauftragsvorrichtung relativ zu der Staffelei- und/oder Leinwandvorrichtung zu erfassen. Die Staffelei- und/oder Leinwandvorrichtung kann insbesondere als eine Staffelei zu einer Aufnahme einer Leinwand als zu besprühende Oberfläche, als eine Leinwand, als eine Kombination von Staffelei und Leinwand oder als eine andere, einem Fachmann als sinnvoll erscheinende Staffelei- und/oder Leinwandvorrichtung ausgebildet sein. Die Sensor- und/oder Markereinheit ist vorzugsweise dazu vorgesehen, eine Position und/oder Ausrichtung der Medienauftragsvorrichtung relativ zu der Staffelei- und/oder Leinwandvorrichtung zu erfassen. Insbesondere kann die Sensor- und/oder Markereinheit eine Kommunikationseinheit, insbesondere eine drahtlose Kommunikationseinheit, zu einer Kommunikation mit der Medienauftragsvorrichtung, mit der Steuer- und/oder Regeleinheit und/oder mit weiteren, einem Fachmann als sinnvoll erscheinenden Einheiten des Auftragssystems, aufweisen.

Vorzugsweise weist die Sensor- und/oder Markereinheit zumindest ein Sensor- und/oder Markerelement zu einer Positions- und/oder Ausrichtungserfassung der Medienauftragsvorrichtung relativ zu der Staffelei- und/oder Leinwandvorrichtung auf. Insbesondere kann das Sensor- und/oder Markerelement als ein optisches, ein elektromagnetisches, ein akustisches, ein mechanisches oder als ein anderes, einem Fachmann als sinnvoll erscheinendes Sensor- und/oder Markerelement ausgebildet sein. Vorzugsweise kann das Sensor- und/oder Markerelement eine Position und/oder Ausrichtung der Medienauftragsvorrichtung anhand des Referenzelements der Medienauftragsvorrichtung erfassen. Insbesondere kann eine Leinwand der Staffelei- und/oder Leinwandvorrichtung aus einem Material, insbesondere einem Gewebe, gebildet sein, welches als ein Sensor- und/oder Markerelement ausgebildet ist. Insbesondere kann die Leinwand aus einem piezoelektrischen, einem kapazitiven oder aus einem anderen, einem Fachmann als sinnvoll erscheinenden Gewebe gebildet sein. Vorteilhaft kann mittels der Staffelei- und/oder Leinwandvorrichtung eine Position und/oder Ausrichtung der Medienauftragsvorrichtung relativ zu der Staffelei- und/oder Leinwandvorrichtung erfasst werden. Vorteilhaft kann bei Verwendung der Staffelei- und/oder Leinwandvorrichtung auf die Steuer- und/oder Regeleinheit verzichtet werden.

Zudem wird vorgeschlagen, dass die Staffelei- und/oder Leinwandvorrichtung zumindest eine Benutzerführungseinheit aufweist, welche dazu vorgesehen ist, zumindest einen Benutzer bei einer Erstellung eines Medienauftrags auf der Staffelei- und/oder Leinwandvorrichtung zu führen. Vorzugsweise kann die Benutzerführungseinheit zumindest ein Benutzerführungselement zu einer Führung des Benutzers aufweisen. Insbesondere kann das Benutzerführungselement als ein Leuchtelement, als ein Akustikelement oder als ein anderes, einem Fachmann als sinnvoll erscheinendes Benutzerführungselement ausgebildet werden. Bevorzugt kann dem Benutzer mittels des Benutzerführungselements ein Startpunkt für den Medienauftragsprozess angezeigt werden, insbesondere zu einer Auftragsfortsetzung nach einer Unterbrechung des Medienauftragsprozesses. Vorzugsweise kann die Benutzerführungseinheit als ein Raster ausgebildet sein. Insbesondere kann das Raster auf der Leinwand der Staffelei- und/oder Leinwandvorrichtung angebracht sein. Vorteilhaft kann der Benutzer bei dem Medienauftragsprozess geführt werden. Vorteilhaft kann ein präziser Medienauftrag erreicht werden.

Weiterhin wird vorgeschlagen, dass das Auftragssystem zumindest eine Filtervorrichtung umfasst, welche dazu vorgesehen ist, eine Transmission von durch das Referenzelement der Medienauftragsvorrichtung und/oder von durch das Referenzelement der Umgebung der Medienauftragsvorrichtung ausgesendeter Strahlung zu unterbinden. Die Filtervorrichtung kann bevorzugt als eine in einer Umgebung des Referenzelements der Medienauftragsvorrichtung und/oder des Referenzelements der Umgebung der Medienauftragsvorrichtung angeordnete Filtervorrichtung ausgebildet sein. Besonders bevorzugt kann die Filtervorrichtung als eine von dem Benutzer tragbare Filtervorrichtung ausgebildet sein. Insbesondere kann die Filtervorrichtung als eine Filterbrille, ein Filtervisier oder als eine andere, einem Fachmann als sinnvoll erscheinende, von dem Benutzer tragbare Filtervorrichtung ausgebildet sein. Zu einer Unterbindung der Transmission der von dem Referenzelement der Medienauftragsvorrichtung und/oder von dem Referenzelement der Umgebung der Medienauftragsvorrichtung ausgesendeter Strahlung, insbesondere zu einer Unterbindung der Transmission bis in zumindest ein Auge des Benutzers, kann die Filtervorrichtung vorzugsweise zumindest ein Filterelement aufweisen. Das Filterelement kann insbesondere als ein richtungsabhängiger Filter, ein Farbfilter, ein Polarisationsfilter oder als ein anderes, einem Fachmann als sinnvoll erscheinendes Filterelement ausgebildet sein. Vorteilhaft kann die Transmission der von dem Referenzelement der Medienauftragsvorrichtung und/oder von dem durch das Referenzelement der Umgebung der Medienauftragsvorrichtung ausgesendeten Strahlung unterbunden werden. Vorteilhaft kann ein für eine Augengesundheit des Benutzers unbedenklicher Medienauftragsprozess ermöglicht werden.

Ferner wird vorgeschlagen, dass das Auftragssystem zumindest eine Erweiterte-Realitätsvorrichtung umfasst, die dazu vorgesehen ist, dem Benutzer eine Erweiterte-Realität-Erfahrung bei zumindest einem Medienauftragsprozess bereitzustellen. Die Erweiterte Realitätsvorrichtung kann zusätzlich zu real vorhandenen Gegenständen wie der Medienauftragsvorrichtung und/oder der Oberfläche vorzugsweise virtuelle Inhalte einblenden, insbesondere in ein Sichtfeld des Benutzers und/oder proportional passend zu den vorhandenen Gegenständen einblenden. Die Erweiterte-Realitätsvorrichtung kann insbesondere als eine AR-Brille (Augmented-Reality-Brille), als ein AR-fähiges Smartphone, vorzugsweise mit einer Kopfhalterung und/oder mit einer Optik, oder als eine andere, einem Fachmann als sinnvoll erscheinende Erweiterte-Realitätsvorrichtung ausgebildet sein. Die Erweiterte-Realitätsvorrichtung kann vorzugsweise eine Kommunikationseinheit, insbesondere eine drahtlose Kommunikationseinheit, zu einer Kommunikation mit der Medienauftragsvorrichtung, mit der Steuer- und/oder Regeleinheit, mit der Staffelei- und/oder Leinwandvorrichtung und/oder mit weiteren, einem Fachmann als sinnvoll erscheinenden Einheiten des Auftragssystems, aufweisen. Insbesondere weist die Kommunikationseinheit eine Latenzzeit kleiner als 30 ms, bevorzugt kleiner als 20 ms und besonders bevorzugt kleiner als 10 ms auf.

Vorzugsweise weist die Erweiterte-Realitätsvorrichtung zumindest einen Bildschirm, insbesondere zu einer Darstellung von virtuellen Inhalten, auf. Vorzugsweise weist die Erweiterte-Realitätsvorrichtung zumindest ein Erfassungselement, insbesondere eine Kamera, zu einer Erfassung der Oberfläche und/oder der Medienauftragsvorrichtung auf. Insbesondere kann auf dem Bildschirm ein mittels des Erfassungselements erfasstes Livebild dargestellt werden. Vorzugsweise können auf dem Bildschirm, insbesondere zusätzlich zu dem Livebild, Informationen eingeblendet werden wie beispielsweise eine geschätzte Restdauer des Medienauftragsprozesses, für die Erstellung des Medienauftrags benötigte Farben und/oder weitere, einem Fachmann als sinnvoll erscheinende Informationen. Das Livebild wird bevorzugt höchstens mit einer Verzögerung von 1 Sekunde, besonders bevorzugt höchstens mit einer Verzögerung von 100 ms dargestellt. Insbesondere weist die Kommunikationseinheit bei einem Empfang eines Livebilds von einer externen Kameraeinheit, wie beispielsweise der Kameraeinheit der Steuer- und/oder Regeleinheit, eine Latenzzeit kleiner als 1 Sekunde, bevorzugt kleiner 100 ms auf. Vorzugsweise kann das Livebild vergrößert dargestellt werden, insbesondere bestimmte Teilbereiche des Livebilds. Insbesondere können die Teilbereiche des Livebilds manuell und/oder automatisch vergrößert dargestellt werden. Vorzugsweise können auf dem Bildschirm virtuelle Inhalte in das Livebild eingefügt und angezeigt werden. Insbesondere kann eine Vorschau eines zu sprühenden Motivs proportional über die real vorhandene und live gefilmte Oberfläche eingeblendet werden. Weiterhin ist vorstellbar, dass ein Startpunkt für einen Medienauftragsprozess eingeblendet wird. Vorteilhaft kann dem Benutzer eine Erweiterte-Realität-Erfahrung ermöglicht werden. Vorteilhaft kann ein komfortabler Medienauftragsprozess ermöglicht werden.

Zudem wird vorgeschlagen, dass die vorgenannte Erfassungsvorrichtung dazu vorgesehen ist, zumindest einen Medienauftragsprozess aufzuzeichnen. Die Steuer- und/oder Regeleinheit weist insbesondere eine Hauptrechenleistung des Auftragssystems, bevorzugt zumindest 60 % der Rechenleistung des Auftragssystems, besonders bevorzugt zumindest 75 % der Rechenleistung des Auftragssystems und ganz besonders bevorzugt zumindest 90 % der Rechenleistung des Auftragssystems auf. Es kann vorteilhaft eine kostengünstige Medienauftragsvorrichtung bei einer Ausgestaltung der Steuer- und/oder Regeleinheit als externe Steuer- und/oder Regeleinheit erreicht werden, insbesondere da die Medienauftragsvorrichtung mit einer kostengünstigen Recheneinheit ausstattbar ist. Vorzugsweise können persönliche Daten zumindest eines Benutzers, insbesondere zu einem Medienauftragsprojekt zugehörige Daten, in einer Speichereinheit der Steuer- und/oder Regeleinheit abgespeichert werden und/oder mittels der Steuer- und/oder Regeleinheit verwaltet werden.

Vorzugsweise können Informationen über für eine Erstellung eines Medienauftrags zur Verfügung stehende Medien in der Speichereinheit der Steuer- und/oder Regeleinheit abgespeichert werden und/oder mittels der Steuer- und/oder Regeleinheit verwaltet werden.

Vorzugsweise ist das Erfassungselement dazu vorgesehen, den Medienauftragsprozess aufzuzeichnen, insbesondere zu filmen. Vorzugsweise ist das Erfassungselement zu einem Filmen des Medienauftragsprozesses als eine Kamera ausgebildet. Insbesondere kann die Erfassungsvorrichtung zwei Erfassungselemente aufweisen, wobei ein erstes Erfassungselement zu einer Erfassung einer Position und/oder Ausrichtung der Medienauftragsvorrichtung relativ zu der Oberfläche vorgesehen ist und wobei ein zweites Erfassungselement zu einem Aufzeichnen des Medienauftragsprozesses vorgesehen ist. Vorzugsweise kann eine Aufzeichnung des Medienauftragsprozesses bearbeitet werden. Beispielsweise ist es denkbar, dass ein Videoschnitt durchführbar ist, dass ein Zeitraffer der Aufzeichnung erstellbar ist, dass die Aufzeichnung auf Internetplattformen bereitstellbar ist o. dgl. Vorteilhaft kann ein Medienauftragsprozess dokumentiert werden. Vorzugsweise kann zumindest eines der Erfassungselemente der Erfassungsvorrichtung dazu vorgesehen sein, einen auf einem Medienbehälter angeordneten maschinenlesbaren Code, insbesondere einen QR-Code, einen Strichcode o. dgl., zu erfassen und anhand des erfassten maschinenlesbaren Codes eine Information in der Speichereinheit der Steuer- und/oder Regeleinheit zu hinterlegen, insbesondere eine Information, dass das erfasste Medium zu einer Erstellung eines Medienauftrags zur Verfügung steht. Vorteilhaft kann eine Entstehung eines Medienauftrags nachvollzogen werden. Vorteilhaft kann eine Medienausgabe auf eine Oberfläche automatisch in Abhängigkeit von einer Position und/oder Ausrichtung der Medienauftragsvorrichtung relativ zu der Oberfläche ausgelöst werden. Vorteilhaft kann ein komfortabler und nachvollziehbarer Medienauftragsprozess ermöglicht werden.

Zudem wird vorgeschlagen, dass das Auftragssystem zumindest eine Servereinheit umfasst, welche dazu vorgesehen ist, zumindest eine Funktion zumindest zu einer Funktionalitätserweiterung der Medienauftragsvorrichtung und/oder der Steuer- und/oder Regeleinheit bereitzustellen. Die Servereinheit ist vorzugsweise als ein Computer mit zumindest einer Speichereinheit und mit zumindest einem in der Speichereinheit abgespeicherten Dienstprogramm ausgebildet. Insbesondere ist die Servereinheit mit einem Netzwerk, vorzugsweise mit dem Internet, verbunden. Vorzugsweise können die Medienauftragsvorrichtung und/oder die Steuer- und/oder Regeleinheit, insbesondere mittels der Kommunikationseinheit, elektronische Daten mit der Servereinheit austauschen. Insbesondere kann die Medienauftragsvorrichtung mittels der Servereinheit zumindest teilweise über das Internet gesteuert und/oder geregelt werden. Vorzugsweise ist die Servereinheit zu einer Speicherung von elektronischen Daten vorgesehen. Insbesondere können elektronische Vorlagen von mittels der Medienauftragsvorrichtung zu erstellender Medienaufträge in der Speichereinheit der Servereinheit gespeichert werden, insbesondere zu einer Sicherung und/oder zu einer Bereitstellung der Vorlagen für weitere Benutzer. Vorzugsweise ist die Servereinheit zu einer Bereitstellung eines elektronischen Einkaufsbereichs vorgesehen. Insbesondere können in dem elektronischen Einkaufsbereich elektronische Vorlagen heruntergeladen werden, Medien und/oder Zubehör für die Medienauftragsvorrichtung bestellt werden, eine Bearbeitung, insbesondere eine Nachbearbeitung, einer elektronischen Vorlage, insbesondere durch eine professionelle Agentur, in Auftrag gegeben werden, ein Druck einer elektronischen Vorlage in Auftrag gegeben werden, eine Erstellung eines Medienauftrags angeboten werden und/oder weitere, einem Fachmann als sinnvoll erscheinende Funktionen bereitgestellt werden. Vorzugsweise können in dem elektronischen Einkaufsbereich, insbesondere von dem Benutzer gestaltete, Sprühschablonen bestellt werden. Vorzugsweise können die Sprühschablonen mittels der Steuer- und/oder Regeleinheit gestaltet werden. Insbesondere können Informationen, dass gekaufte Medien und/oder Zubehör für die Medienauftragsvorrichtung für eine Erstellung eines Medienauftrags zur Verfügung stehen, in der Speichereinheit der Steuer- und/oder Regeleinheit hinterlegt werden. Vorzugsweise kann über den elektronischen Einkaufsbereich zumindest ein Verzeichnis von Händlern, die Medien und/oder Zubehör für die Medienauftragsvorrichtung anbieten, bereitgestellt werden. Vorzugsweise ist die Servereinheit zu einer Bereitstellung eines Gemeinschaftsbereichs, insbesondere zu einer Kommunikation mit weiteren Benutzern der Medienauftragsvorrichtung und/oder einem Hersteller der Medienauftragsvorrichtung, vorgesehen. Insbesondere kann der Gemeinschaftsbereich eine Chat-Funktion, insbesondere eine Video-Chat-Funktion, eine Audio-Chat-Funktion und/oder eine Text-Chat-Funktion, aufweisen. Vorteilhaft kann ein im Vergleich zu einem Auftragssystem ohne eine Servereinheit erweiterter Funktionsumfang des Auftragssystems bereitgestellt werden. Vorteilhaft kann eine Kommunikation mit weiteren Benutzern, Händlern und/oder einem Hersteller ermöglicht werden. Vorteilhaft kann ein komfortables Nutzungserlebnis des Auftragssystems ermöglicht werden.

Zudem geht die Erfindung aus von einem Verfahren zum Betrieb eines erfindungsgemäßen Auftragssystems.

In zumindest einem Verfahrensschritt wird/werden zumindest eine Position und/oder Ausrichtung zumindest einer Medienauftragsvorrichtung relativ zu zumindest einer Oberfläche und/oder zumindest eine absolute Position der Medienauftragsvorrichtung in zumindest einem dreidimensionalen Raum erfasst und/oder eine Position und/oder Ausrichtung der Medienauftragsvorrichtung relativ zu der Oberfläche und/oder eine absolute Position der Medienauftragsvorrichtung in einem dreidimensionalen Raum erfasst.

Es wird vorgeschlagen, dass in zumindest einem Verfahrensschritt zumindest eine Vorlagenauflösung zumindest eines pixelbasierten Sollbilds auf zumindest eine Arbeitsauflösung umgerechnet wird. Das pixelbasierte Sollbild ist vorzugsweise ein durch den Benutzer wählbares Motiv, welches als eine Vorlage für den Medienauftrag genutzt wird und dessen Vorlagenauflösung in Pixeln angegeben ist, beispielsweise 1920 mal 1080 Pixel. Insbesondere arbeitet die Medienausgabeeinheit punktbasiert, d.h. ein Motiv wird als eine Vielzahl von Auftragspunkten des Mediums, insbesondere Farbpunkten, auf die Oberfläche aufgetragen. Insbesondere weisen die Auftragspunkte einen minimal zu erzielenden Durchmesser auf, der vorzugsweise von dem Düsenelement abhängig sein kann. Abhängig von der Vorlagenauflösung des pixelbasierten Sollbilds, einer angestrebten Grö-ße des Medienauftrags auf der Oberfläche, eines Detaillierungsgrads des Medienauftrags auf der Oberfläche, einer von dem Benutzer gewünschten Arbeitszeit zur Erstellung des Medienauftrags und/oder weiterer, einem Fachmann als sinnvoll erscheinender Parameter, kann eine Umrechnung der Vorlagenauflösung des pixelbasierten Sollbilds auf eine Arbeitsauflösung notwendig sein. Vorzugsweise sind die Parameter von dem Benutzer wählbar. Alternativ ist vorstellbar, dass die Parameter automatisch eingestellt werden, insbesondere anhand von der Medienauftragsvorrichtung, der Steuer- und/oder Regeleinheit und/oder weiterer Einheiten des Auftragssystems erfassten Daten. Vorzugsweise erfolgt eine Umrechnung der Vorlagenauflösung des pixelbasierten Sollbilds auf die Arbeitsauflösung mittels der Recheneinheit der Steuer- und/oder Regeleinheit. Vorteilhaft kann die Arbeitsauflösung des pixelbasierten Sollbilds errechnet werden. Vorteilhaft kann eine voraussichtliche Arbeitszeit für eine Erstellung eines Medienauftrags, insbesondere für unterschiedliche Arbeitsauflösungen des pixelbasierten Sollbilds, berechnet werden.

Des Weiteren wird vorgeschlagen, dass in zumindest einem Verfahrensschritt das pixelbasierte Sollbild unter Anwendung zumindest eines Dithering-Algorithmus und/oder zumindest eines Kantenglättungsalgorithmus in zumindest ein auftragspunktbasiertes Sollbild umgewandelt wird. Insbesondere wird das pixelbasierte Sollbild in der Arbeitsauflösung in das auftragspunktbasierte Sollbild umgewandelt. Vorzugsweise sind/ist der Dithering-Algorithmus und/oder der Kantenglättungsalgorithmus dazu vorgesehen, das pixelbasierte Sollbild derart in das auftragspunktbasiertes Sollbild umzuwandeln, dass eine harmonische Bildwirkung des auftragspunktbasierten Sollbilds erreicht wird. Der Dithering-Algorithmus kann vorzugsweise derart ausgebildet sein, dass ein Eindruck einer feineren als tatsächlich vorhandenen Auflösung des auftragspunktbasierten Sollbilds erreicht wird, insbesondere an Kanten und/oder Außengrenzen eines Motivs des auftragspunktbasierten Sollbilds. Insbesondere kann mittels des Dithering-Algorithmus in Bereichen der Kanten und/oder Außengrenzen des Motivs ein Verlauf von einer hohen Punktauflösung zu einer niedrigen Punktauflösung erzeugt werden. Insbesondere kann mittels des Dithering-Algorithmus in den Bereichen der Kanten und/oder Außengrenzen des Motivs ein Verlauf von einer großen Anzahl verwendeter Medien, insbesondere Farben, zu einer geringen Anzahl verwendeter Medien, insbesondere Farben, erzeugt werden.

Der Kantenglättungsalgorithmus kann vorzugsweise derart ausgebildet sein, dass ein Eindruck eines harmonischen Bildverlaufs des auftragspunktbasierten Sollbilds erreicht wird, insbesondere an den Kanten und/oder Außengrenzen des Motivs des auftragspunktbasierten Sollbilds. Insbesondere kann mittels des Kantenglättungsalgorithmus ein hartes Erscheinungsbild der Kanten und/oder Au-ßengrenzen des Motivs geglättet werden. Insbesondere können mittels des Kantenglättungsalgorithmus Alias-Effekte in dem Motiv zumindest verringert werden. Vorteilhaft kann eine Bildqualität des pixelbasierten Sollbilds bei der Umwandlung in das auftragspunktbasierte Sollbild zumindest teilweise erhalten bleiben.

Ferner wird vorgeschlagen, dass, insbesondere in zumindest einem Verfahrensschritt, anhand des auftragspunktbasierten Sollbilds zumindest ein Fehlerbild simuliert wird und zumindest einem Benutzer angezeigt wird. Vorzugsweise wird dem Benutzer das Fehlerbild auf dem Bildschirm der Steuer- und/oder Regeleinheit, auf einem Bildschirm der Medienauftragsvorrichtung, auf dem Bildschirm der Erweiterte-Realitätsvorrichtung und/oder auf einem weiteren, einem Fachmann als sinnvoll erscheinenden Anzeigegerät angezeigt. Alternativ oder zusätzlich ist denkbar, dass dem Benutzer das auftragspunktbasierte Sollbild, insbesondere vor einer Simulierung des Fehlerbilds, angezeigt wird. Bei Nutzung der Erweiterte-Realitätsvorrichtung können/kann vorzugsweise das Fehlerbild und/oder das auftragspunktbasierte Sollbild virtuell auf der zu besprühenden Oberfläche, insbesondere an einer Position, an der ein Medienauftrag geplant ist, angezeigt werden. Das auftragspunktbasierte Sollbild weist vorzugsweise eine für den Medienauftrag gewünschte Arbeitsauflösung, für den Medienauftrag gewünschte Abmessungen, die für den Medienauftrag gewünschten Medien, insbesondere Farben, und/oder eine realistische Punktdarstellung auf. Insbesondere können während eines, insbesondere manuellen, Medienauftrags Abweichungen von dem berechneten auftragspunktbasierten Sollbild auftreten. Insbesondere können die Abweichungen aufgrund von Ungenauigkeiten in der Positions- und/oder Ausrichtungserfassung der Medienauftragsvorrichtung relativ zu der Oberfläche, aufgrund von Bedienungsfehlern des Benutzers und/oder aufgrund von weiteren, einem Fachmann als sinnvoll erscheinenden Gründen auftreten. Vorzugsweise können typische Abweichungen von dem auftragspunktbasierten Sollbild in das auftragspunktbasierte Sollbild eingerechnet werden und ein Fehlerbild simuliert werden. Insbesondere stellt das Fehlerbild das auftragspunktbasierte Sollbild mit eingerechneten Abweichungen dar. Vorteilhaft kann dem Benutzer mittels des simulierten Fehlerbilds eine realistischere Vorschau auf ein zu erwartendes Medienauftragsergebnis als mittels des auftragspunktbasierten Sollbilds ermöglicht werden.

Weiterhin wird vorgeschlagen, dass, insbesondere in zumindest einem Verfahrensschritt, das auftragspunktbasierte Sollbild anhand zumindest einer Benutzereingabe neu berechnet wird. Insbesondere kann der Benutzer mittels der Benutzereingabe gewünschte Änderungen an dem auftragspunkbasierten Sollbild durchführen. Vorzugsweise können durch den Benutzer Bereiche in dem Motiv des auftragspunktbasierten Sollbilds markiert werden, in denen eine Erhöhung oder eine Reduktion des Detaillierungsgrads des Motivs gewünscht wird. Insbesondere kann durch den Benutzer eine für die Erstellung des Medienauftrags zu verwendende Medienauswahl, insbesondere Farbauswahl, angepasst werden. Insbesondere kann eine Größe des Motivs durch den Benutzer angepasst werden. Vorzugsweise können durch den Benutzer vorgenommene Motivanpassungen bei einer Neuberechnung des auftragspunktbasierten Sollbilds berücksichtigt werden. Vorzugsweise wird das auftragspunktbasierte Sollbild anhand der durch den Benutzer vorgenommenen Motivanpassungen neu berechnet. Vorteilhaft kann dem Benutzer eine Individualisierung des Motivs ermöglicht werden.

Zudem wird vorgeschlagen, dass, insbesondere in zumindest einem Verfahrensschritt, anhand des auftragspunktbasierten Sollbilds zumindest eine Medienauftragsstrategie berechnet wird. Die Medienauftragsstrategie stellt insbesondere einen Ablaufplan für einen Medienauftragsprozess dar. Insbesondere umfasst die Medienauftragsstrategie für einen jeden Medienauftragspunkt des auftragspunktbasierten Sollbilds Informationen über eine Ausgabeposition auf der Oberfläche, eine Punktgröße und eine Medienart. Insbesondere umfasst die Medienauftragsstrategie eine Anzahl zu verwendender Medien und eine Reihenfolge zu einem Auftrag der zu verwendenden Medien. Vorzugsweise wird die Medienauftragsstrategie zu einer Steuerung und/oder Regelung der Medienausgabeeinheit verwendet. Vorzugsweise umfasst die Medienauftragsstrategie zumindest einen Flächenbearbeitungsmodus und zumindest einen Detailbearbeitungsmodus. Insbesondere wird die Medienausgabeeinheit bei einer Medienauftragsstrategie in dem Flächenbearbeitungsmodus derart gesteuert und/oder geregelt, dass der Medienauftrag in einer möglichst kurzen Zeitdauer erstellt wird. Insbesondere wird die Medienausgabeeinheit bei einer Medienauftragsstrategie in dem Detailbearbeitungsmodus derart gesteuert und/oder geregelt, dass der Medienauftrag möglichst genau und/oder detailliert erstellt wird. Vorzugsweise ist die Medienauftragsstrategie in der Speichereinheit der Steuer- und/oder Regeleinheit und/oder in der Speichereinheit der Elektronikeinheit hinterlegt. Vorteilhaft kann ein für das auftragspunktbasierte Sollbild optimierter Medienauftragsprozess ermöglicht werden.

Des Weiteren wird vorgeschlagen, dass, insbesondere in zumindest einem Verfahrensschritt, zumindest eine erfasste Position und/oder Ausrichtung zumindest einer Medienauftragsvorrichtung relativ zu zumindest einer Oberfläche zu einer späteren Verwendung, insbesondere zu einer Startpunktwiederfindung nach einer Unterbrechung zumindest eines Medienauftragsprozesses, gespeichert wird. Insbesondere wird die erfasste Position und/oder Ausrichtung der Medienauftragsvorrichtung relativ zu der Oberfläche in der Speichereinheit der Steuer- und/oder Regeleinheit und/oder in der Speichereinheit der Elektronikeinheit abgespeichert. Vorzugsweise wird die erfasste Position und/oder Ausrichtung der Medienauftragsvorrichtung relativ zu der Oberfläche unmittelbar nach der Erfassung abgespeichert. Vorzugsweise wird die Position und/oder Ausrichtung der Medienauftragsvorrichtung relativ zu der Oberfläche dauerhaft, insbesondere in einem nichtflüchtigen Speicher der Speichereinheit der Steuer- und/oder Regeleinheit und/oder der Elektronikeinheit abgespeichert. Vorzugsweise ist zumindest eine zuletzt erfasste Position und/oder Ausrichtung der Medienauftragsvorrichtung relativ zu der Oberfläche abgespeichert. Es ist vorstellbar, dass sämtliche Positionen und/oder Ausrichtungen der Medienauftragsvorrichtung relativ zu der Oberfläche abgespeichert sind oder dass lediglich die zuletzt erfasste Position und/oder Ausrichtung der Medienauftragsvorrichtung relativ zu der Oberfläche abgespeichert ist und bei einer Speicherung einer aktuelleren Position und/oder Ausrichtung der Medienauftragsvorrichtung relativ zu der Oberfläche eine vorige Position und/oder Ausrichtung der Medienauftragsvorrichtung relativ zu der Oberfläche gelöscht wird.

Vorzugsweise kann zu einer Verwendung der gespeicherten Position und/oder Ausrichtung der Medienauftragsvorrichtung relativ zu der Oberfläche auf die gespeicherte Position und/oder Ausrichtung der Medienauftragsvorrichtung relativ zu der Oberfläche zugegriffen werden. Bevorzugt kann, insbesondere nach einer Unterbrechung des Medienauftragsprozesses, ein Startpunkt zu einer Wiederaufnahme des Medienauftragsprozesses anhand der gespeicherten Position und/oder Ausrichtung der Medienauftragsvorrichtung relativ zu der Oberfläche gefunden werden. Vorzugsweise entspricht die, insbesondere vor der Unterbrechung des Medienauftragsprozesses, zuletzt gespeicherte Position und/oder Ausrichtung der Medienauftragsvorrichtung relativ zu der Oberfläche dem Startpunkt zur Wiederaufnahme des Medienauftragsprozesses. Vorteilhaft kann ein reibungsloser Medienauftragsprozess ermöglicht werden. Vorteilhaft können Mehrfach- und/oder Falschaufträge verhindert werden.

Es wird vorgeschlagen, dass, insbesondere in zumindest einem Verfahrensschritt, zumindest eine individuelle Kennung zumindest einer Medienausgabeeinheit zumindest zu einer Identifikation der Medienausgabeeinheit und/oder zumindest zu einer Wiederherstellung zumindest eines Arbeitsstands der Medienausgabeeinheit ausgelesen wird. Vorzugsweise wird die Kennung von der Elektronikeinheit bereitgestellt. Vorzugsweise wird die Kennung von der Steuer- und/oder Regeleinheit ausgelesen. Vorzugsweise wird bei einer Unterbrechung eines Medienauftragsprozesses ein Arbeitsstand der Medienausgabeeinheit, insbesondere ein Fortschritt des Medienauftrags, gewählte Einstellungen der Medienausgabeeinheit und/oder eine letzte erfasste Position und/oder Ausrichtung der Medienausgabeeinheit relativ zu der Oberfläche, zusammen mit der individuellen Kennung der Medienausgabeeinheit abgespeichert, insbesondere in der Speichereinheit der Elektronikeinheit und/oder der Steuer- und/oder Regeleinheit.

Insbesondere kann anhand der individuellen Kennung der zu der Medienausgabeeinheit passende Arbeitsstand wiederhergestellt werden. Vorteilhaft kann nach einer Unterbrechung eines Medienauftragsprozesses der Medienauftragsprozess mit denselben Einstellungen der Medienausgabeeinheit und an derselben Position der Medienausgabeeinheit relativ zu der Oberfläche wie vor der Unterbrechung fortgesetzt werden. Vorteilhaft kann ein komfortabler Medienauftragsprozess ermöglicht werden.

Ferner wird vorgeschlagen, dass, insbesondere in zumindest einem Verfahrensschritt, zumindest eine Medienauftragsvorrichtung und zumindest eine weitere externe Einheit, insbesondere eine weitere Medienauftragsvorrichtung, gleichzeitig gesteuert und/oder geregelt werden. Vorzugsweise werden die Medienauftragsvorrichtung und die weitere externe Einheit von der Steuer- und/oder Regeleinheit, insbesondere von einer einzelnen Steuer- und/oder Regeleinheit, gleichzeitig gesteuert und/oder geregelt. Insbesondere können Positionen und/oder Ausrichtungen einer Mehrzahl von Medienauftragsvorrichtungen relativ zu der Oberfläche mittels der Erfassungsvorrichtung der einzelnen Steuer- und/oder Regeleinheit gleichzeitig erfasst werden. Vorteilhaft kann eine komfortable gemeinsame Erstellung eines Medienauftrags durch eine Mehrzahl von Benutzern gleichzeitig ermöglicht werden.

Weiterhin wird vorgeschlagen, dass, insbesondere in zumindest einem Verfahrensschritt, anhand zumindest einer umgebungsspezifischen Kenngröße der Steuer- und/oder Regeleinheit und/oder anhand zumindest einer benutzerwählbaren Kenngröße zumindest ein zu erstellendes Motiv ermittelt wird und zumindest einem Benutzer dargestellt wird. Die umgebungsspezifische Kenngröße der Steuer- und/oder Regeleinheit ist insbesondere als eine Kenngröße einer Umgebung der Steuer- und/oder Regeleinheit ausgebildet. Vorzugsweise umfasst die Umgebung der Steuer- und/oder Regeleinheit die Oberfläche und weitere, insbesondere stationäre, die Steuer- und/oder Regeleinheit umgebende Gegenstände. Insbesondere können bei einer Verwendung der Steuer- und/oder Regeleinheit in einem Innenraum in dem Innenraum angeordnete Gegenstände wie Möbelstücke, Wände, Türen oder dergleichen die Umgebung der Steuer- und/oder Regeleinheit bilden. Insbesondere können bei einer Verwendung der Steuer- und/oder Regeleinheit in einem Außenbereich in dem Außenbereich angeordnete Gegenstände wie Bäume, Häuser oder dergleichen die Umgebung der Steuer- und/oder Regeleinheit bilden. Die umgebungsspezifische Kenngröße der Steuer- und/oder Regeleinheit kann insbesondere als eine Beschaffenheit der Umgebung der Steuer- und/oder Regeleinheit, als eine Größe der Umgebung der Steuer- und/oder Regeleinheit, als eine Farbe der Umgebung der Steuer- und/oder Regeleinheit oder als eine andere, einem Fachmann als sinnvoll erscheinende umgebungsspezifische Kenngröße ausgebildet sein. Die benutzerwählbare Kenngröße ist vorzugsweise als eine Kenngröße eines zu erstellenden Medienauftrags ausgebildet, die durch den Benutzer auswählbar ist. Die benutzerwählbare Kenngröße kann insbesondere als eine Farbe des zu erstellenden Medienauftrags, als eine Größe des zu erstellenden Medienauftrags, als eine voraussichtlich benötigte Zeit zur Erstellung des zu erstellenden Medienauftrags oder als eine andere, einem Fachmann als sinnvoll erscheinende benutzerwählbare Kenngröße ausgebildet sein. Vorzugsweise wird durch die Steuer- und/oder Regeleinheit ein zu der umgebungsspezifischen Kenngröße und/oder zu der benutzerwählbaren Kenngröße passendes zu erstellendes Motiv ermittelt. Vorzugsweise wird das zu erstellende Motiv dem Benutzer, insbesondere mittels einer Ausgabeeinheit der Steuer- und/oder Regeleinheit, wie beispielsweise einem Bildschirm, einem Projektor o. dgl., dargestellt. Alternativ ist denkbar, dass das zu erstellende Motiv, insbesondere mittels der Kommunikationseinheit der Steuer- und/oder Regeleinheit, an eine externe Ausgabeeinheit, wie beispielsweise einen externen Bildschirm, einen externen Projektor o. dgl., übertragen wird und das zu erstellende Motiv insbesondere mittels der externen Ausgabeeinheit dem Benutzer dargestellt wird. Bevorzugt kann das zu erstellende Motiv einem Bild der Umgebung der Steuer- und/oder Regeleinheit und/oder der Umgebung der Steuer- und/oder Regeleinheit selbst, insbesondere maßstabsgetreu, überlagert werden. Vorteilhaft kann automatisch ein zu einer Umgebung der Steuer- und/oder Regeleinheit und/oder zu Wünschen eines Benutzers passendes zu erstellendes Motiv ermittelt werden. Vorteilhaft kann dem Benutzer eine Vorschau auf einen zu erwartenden Medienauftrag ermöglicht werden. Vorteilhaft kann dem Benutzer bereits im Vorfeld eines Medienauftragsprozess ein komfortables Nutzungserlebnis des Auftragssystems ermöglicht werden.

Zudem wird vorgeschlagen, dass, insbesondere in zumindest einem Verfahrensschritt, aus zumindest einem Sollbild, insbesondere Sollmotiv, zumindest eine Umrandung des Sollbilds zu einem Auftrag extrahiert wird. Das Sollbild, insbesondere das Sollmotiv, ist vorzugsweise ein durch den Benutzer wählbares Motiv, welches als eine Vorlage für den Medienauftrag genutzt wird. Die Umrandung des Sollbilds ist insbesondere die Kontur des Sollbilds in einer, insbesondere durch den Benutzer wählbaren, Stärke. Vorzugsweise wird die extrahierte Umrandung des Sollbilds als ein neues Sollbild genutzt. Insbesondere erfolgt lediglich ein Auftrag der Umrandung des Sollbilds auf die Oberfläche gesteuert und/oder geregelt in Abhängigkeit von einer Position und/oder Ausrichtung der Medienauftragsvorrichtung relativ zu der Oberfläche. Vorzugsweise kann eine Erstellung eines Medienauftrags innerhalb der auf die Oberfläche aufgetragenen Umrandung freihand durch den Benutzer erfolgen. Vorteilhaft kann ein kreativer, individueller und komfortabler Medienauftragsprozess ermöglicht werden.

Des Weiteren wird vorgeschlagen, dass, insbesondere in zumindest einem Verfahrensschritt, mittels der Steuer- und/oder Regeleinheit ein Informations- und/oder Warenaustausch mit zumindest einem weiteren Benutzer und/oder einem Händler bereitgestellt wird. Vorzugsweise kann mittels der Steuer- und/oder Regeleinheit auf den elektronischen Einkaufsbereich und/oder den Gemeinschaftsbereich der Servereinheit zugegriffen werden. Vorzugsweise kann mittels der Steuer- und/oder Regeleinheit in dem elektronischen Einkaufsbereich ein Warenaustausch, insbesondere ein Warenverkauf und/oder ein Warenkauf, mit dem weiteren Benutzer und/oder dem Händler abgewickelt werden. Vorzugsweise kann mittels der Steuer- und/oder Regeleinheit in dem Gemeinschaftsbereich ein Informationsaustausch mit dem weiteren Benutzer und/oder dem Händler durchgeführt werden. Vorteilhaft kann auf weitere Einheiten zu einem Informations- und/oder Warenaustausch mit einem weiteren Benutzer und/oder einem Händler verzichtet werden. Vorteilhaft kann ein kostengünstiges und komfortabel zu nutzendes Auftragssystem bereitgestellt werden.

Ferner wird vorgeschlagen, dass, insbesondere in zumindest einem Verfahrensschritt, eine Bedienung der Medienauftragsvorrichtung und/oder der Steuer- und/oder Regeleinheit aufgrund einer Authentifizierung zumindest eines Benutzers freigeschaltet wird. Insbesondere kann der Benutzer durch eine Erfassung der benutzerspezifischen Kenngröße authentifiziert werden. Vorzugsweise wird die benutzerspezifische Kenngröße mittels der Benutzeridentifikationseinheit der Medienauftragsvorrichtung erfasst. Alternativ oder zusätzlich ist denkbar, dass die Steuer- und/oder Regeleinheit eine weitere Benutzeridentifikationseinheit, wie beispielsweise einen Fingerabdruckscanner, einen Irisscanner, ein Passworteingabefeld o. dgl., zu einer Erfassung der benutzerspezifischen Kenngröße aufweist. Vorteilhaft kann ein abgesichertes Auftragssystem, insbesondere für ein sicheres und komfortables Nutzungserlebnis des Auftragssystems, bereitgestellt werden.

Die erfindungsgemäße Medienauftragsvorrichtung, das erfindungsgemäße Auftragssystem und/oder das erfindungsgemäße Verfahren sollen/soll hierbei nicht auf die oben beschriebene Anwendung und Ausführungsform beschränkt sein. Insbesondere können/kann die erfindungsgemäße Medienauftragsvorrichtung, das erfindungsgemäße Auftragssystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Medienauftragsvorrichtung in einer perspektivischen Darstellung,
- Fig. 2a: die Medienauftragsvorrichtung aus Fig. 1 in einer schematischen Schnittdarstellung,
- Fig. 2b: eine Explosionsansicht eines Teils einer alternativen Düseneinheit der Medienauftragsvorrichtung aus Fig. 1 in einer perspektivischen Darstellung,
- Fig. 3: eine Steuer- und/oder Regeleinheit in einer perspektivischen Darstellung,
- Fig. 4: die Steuer- und/oder Regeleinheit aus Fig. 3 in einer weiteren perspektivischen Darstellung,
- Fig. 5: ein erfindungsgemäßes Auftragssystem in einer schematischen Darstellung,
- Fig. 6: einen Ablauf einer Taktsynchronisierung in einer schematischen Darstellung,
- Fig. 7: einen Ablauf einer Startzeitauslösung in einer schematischen Darstellung,
- Fig. 8: eine Staffelei- und/oder Leinwandvorrichtung in einer perspektivischen Darstellung,
- Fig. 9: eine Erweiterte-Realitätsvorrichtung in einer perspektivischen Darstellung,
- Fig. 10: ein alternatives erfindungsgemäßes Auftragssystem in einer schematischen Darstellung,
- Fig. 11: das alternative erfindungsgemäße Auftragssystem aus Fig. 10 in einer weiteren schematischen Darstellung,
- Fig. 12: eine alternative erfindungsgemäße Medienauftragsvorrichtung in einer perspektivischen Darstellung,
- Fig. 13: die alternative erfindungsgemäße Medienauftragsvorrichtung aus Fig. 12 in einer schematischen Schnittdarstellung,
- Fig. 14: ein weiteres alternatives erfindungsgemäßes Auftragssystem mit der alternativen erfindungsgemäßen Medienauftragsvorrichtung aus Fig. 12 in einer schematischen Darstellung
- Fig. 15: eine weitere alternative Medienauftragsvorrichtung in einer perspektivischen Darstellung,
- Fig. 16: die weitere alternative Medienauftragsvorrichtung aus Fig. 15 in einer schematischen Schnittdarstellung,
- Fig. 17: eine alternative Steuer- und/oder Regeleinheit in einer perspektivischen Darstellung,
- Fig. 18: die alternative Steuer- und/oder Regeleinheit aus Fig. 17 in einer weiteren perspektivischen Darstellung,
- Fig. 19: ein weiteres alternatives erfindungsgemäßes Auftragssystem mit der weiteren alternativen Medienauftragsvorrichtung aus Fig. 15 und mit der alternativen Steuerund/oder Regeleinheit aus Fig. 17 in einer schematischen Darstellung,
- Fig. 20: eine weitere alternative Medienauftragsvorrichtung in einer perspektivischen Darstellung und
- Fig. 21: die weitere alternative Medienauftragsvorrichtung aus Fig. 20 in einer schematischen Schnittdarstellung.

### Beschreibung der Ausführungsbeispiele

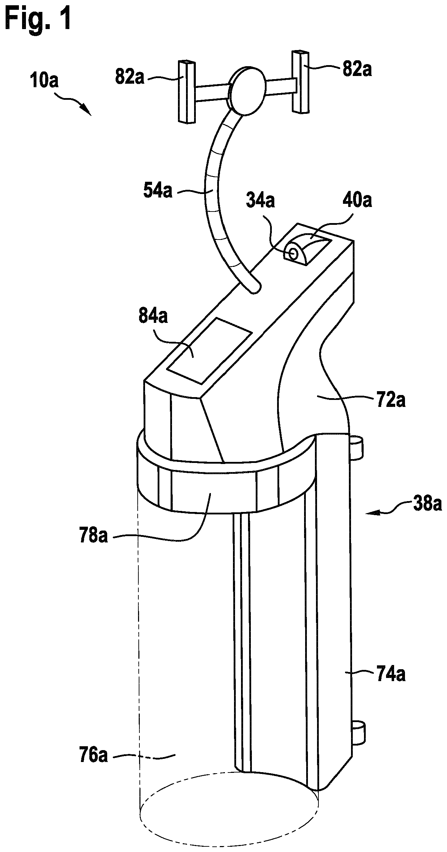

Figur 1 zeigt eine Medienauftragsvorrichtung 10a in einer perspektivischen Darstellung. Die Medienauftragsvorrichtung 10a ist als eine handgehaltene Farbauftragsvorrichtung ausgebildet. Die Medienauftragsvorrichtung 10a weist ein Gehäuse 38a auf. Das Gehäuse 38a ist aus einem Kunststoff gebildet. Alternativ ist vorstellbar, dass das Gehäuse 38a aus einem Metall gebildet ist. Das Gehäuse 38a weist einen Kopfbereich 72a und einen Aufnahmebereich 74a auf. Der Kopfbereich 72a und der Aufnahmebereich 74a sind einteilig ausgebildet. In dem Kopfbereich 72a sind für einen Betrieb der Medienauftragsvorrichtung 10a notwendige Bauteile angeordnet. Der Aufnahmebereich 74a ist als ein halber Hohlzylinder ausgebildet. Der Aufnahmebereich 74a ist derart ausgeformt, dass ein andeutungsweise dargestellter Behälter 76a, welcher das aufzutragende Medium enthält, in einem an der Medienauftragsvorrichtung 10a montierten Zustand von dem Aufnahmebereich 74a teilweise umschlossen wird. Der Behälter 76a ist als ein Medientank ausgebildet. Das Medium ist als ein Farbmedium ausgebildet. Das Medium ist als ein Sprühlack ausgebildet.

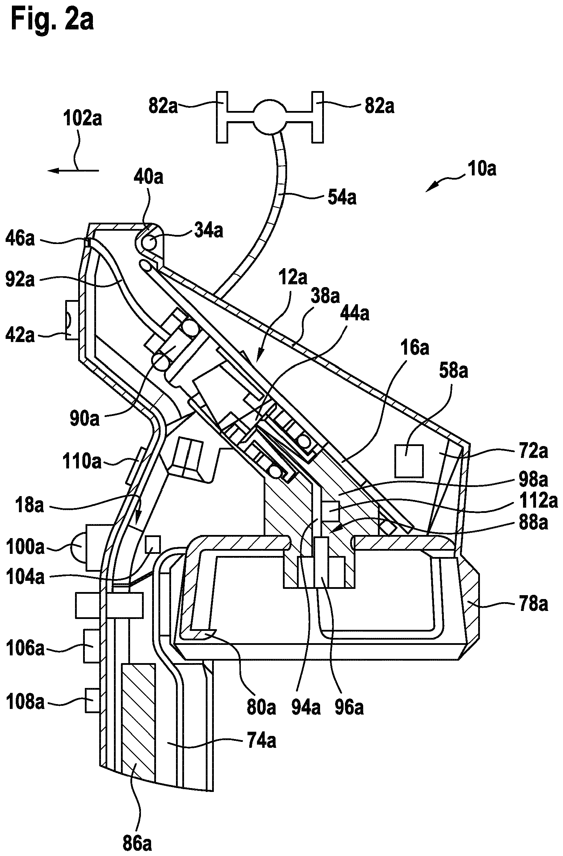

An dem Kopfbereich 72a und verbunden mit dem Aufnahmebereich 74a weist das Gehäuse 38a eine Anbindungs- und/oder Befestigungseinheit 78a auf. Die Anbindungs- und/oder Befestigungseinheit 78a ist zu einer Aufnahme des Behälters 76a an der Medienauftragsvorrichtung 10a vorgesehen. Die Anbindungs- und/oder Befestigungseinheit 78a weist ein Adapterhakenelement 80a zu einer Fixierung des Behälters 76a auf (vgl. Figur 2a).

Die Medienauftragsvorrichtung 10a weist eine Befestigungseinheit 54a zu einer Befestigung einer Steuer- und/oder Regeleinheit 22a an der Medienauftragsvorrichtung 10a auf. Die Befestigungseinheit 54a ist an dem Kopfbereich 72a des Gehäuses 38a angeordnet. Die Befestigungseinheit 54a ist flexibel einstellbar ausgebildet. Die Befestigungseinheit 54a weist zwei verstellbare Befestigungselemente 82a zu einer Aufnahme von verschiedenen Steuer- und/oder Regeleinheiten mit unterschiedlichen Gehäuseformen und/oder -größen auf. Die Steuer- und/oder Regeleinheit 22a kann zwischen den Befestigungselementen 82a festgeklemmt werden.

An dem Kopfbereich 72a des Gehäuses 38a ist ein Referenzelement 34a der Medienauftragsvorrichtung 10a angeordnet. Das Referenzelement 34a der Medienauftragsvorrichtung 10a ist für einen nicht weiter dargestellten Benutzer 36a blendfrei ausgebildet. Das Referenzelement 34a der Medienauftragsvorrichtung 10a ist als ein Strahlung aussendendes Leuchtelement ausgebildet, welches elektromagnetische Strahlung aus einem blauen Spektralbereich eines elektromagnetischen Spektrums aussendet. Das Referenzelement 34a der Medienauftragsvorrichtung 10a ist als eine blaue Leuchtdiode ausgebildet. Alternativ ist vorstellbar, dass das Referenzelement 34a der Medienauftragsvorrichtung 10a Strahlung aus einem für ein menschliches Auge unsichtbaren Spektralbereich aussendet. Das Leuchtelement ist zu einer gepulsten Aussendung von Strahlung vorgesehen, wobei durch einen gepulsten Betrieb des Leuchtelements die durch das Leuchtelement ausgesandte Strahlung zu einer Informationsübertragung von der Medienauftragsvorrichtung zu der Steuer- und/oder Regeleinheit moduliert werden kann.

An dem Kopfbereich 72a des Gehäuses 38a ist ein Blendschutzelement 40a der Medienauftragsvorrichtung 10a angeordnet. Das Blendschutzelement 40a ist aus einem lichtundurchlässigen Kunststoff gebildet. Das Blendschutzelement 40a ist einteilig mit dem Gehäuse 38a ausgebildet. Das Blendschutzelement 40a ist als eine Abdeckung ausgebildet. Das Blendschutzelement 40a überdeckt das Referenzelement 34a der Medienauftragsvorrichtung 10a teilweise. Das Referenzelement 34a der Medienauftragsvorrichtung 10a ist teilweise innerhalb des Blendschutzelements 40a angeordnet. Das Blendschutzelement 40a ist dazu vorgesehen, den Benutzer 36a vor der von dem Referenzelement 34a der Medienauftragsvorrichtung 10a ausgesendeten Strahlung abzuschirmen.

An dem Kopfbereich 72a des Gehäuses 38a ist eine Ausgabeeinheit 84a der Medienauftragsvorrichtung 10a angeordnet. Die Ausgabeeinheit 84a ist als eine Benutzerschnittstelle 198a der Medienauftragsvorrichtung 10a ausgebildet. Die Ausgabeeinheit 84a ist als ein Bildschirm ausgebildet. Die Ausgabeeinheit 84a ist als ein Touch-Bildschirm ausgebildet. Die Ausgabeeinheit 84a ist bündig mit dem Gehäuse 38a in den Kopfbereich 72a eingelassen. Die Ausgabeeinheit 84a ist zu einer Informationsausgabe an den Benutzer 36a und/oder zu einer Befehlseingabe durch den Benutzer 36a vorgesehen.

Figur 2a zeigt die Medienauftragsvorrichtung 10a aus Fig. 1 in einer schematischen Schnittdarstellung. Dargestellt sind der Kopfbereich 72a, die Anbindungs- und/oder Befestigungseinheit 78a mit dem Adapterhakenelement 80a und ein Teil des Aufnahmebereichs 74a. An dem Kopfbereich 72a sind das Referenzelement 34a der Medienauftragsvorrichtung 10a, das Blendschutzelement 40a und die Befestigungseinheit 54a mit den Befestigungselementen 82a angeordnet. Innerhalb des Gehäuses 38a in dem Aufnahmebereich 74a ist eine Energieversorgungseinheit 86a der Medienauftragsvorrichtung 10a angeordnet. Die Energieversorgungseinheit 86a ist dazu vorgesehen, zu einem Betrieb der Medienauftragsvorrichtung 10a eine Medienausgabeeinheit 12a der Medienauftragsvorrichtung 10a mit elektrischer Energie zu versorgen. Die Energieversorgungseinheit 86a ist als ein Akkumulator ausgebildet.

Die Medienausgabeeinheit 12a ist innerhalb des Gehäuses 38a in dem Kopfbereich 72a angeordnet. Die Medienausgabeeinheit 12a umfasst eine Düseneinheit 44a und eine Medienzuführeinheit 88a. Die Düseneinheit 44a weist ein Düsenelement 46a auf. Das Düsenelement 46a ist rohrförmig ausgebildet. In dem vorliegenden Ausführungsbeispiel weist die Düseneinheit 44a zusätzlich ein Ventilelement 90a auf. Grundsätzlich ist jedoch vorstellbar, dass die Düseneinheit 44a kein Ventilelement 90a umfasst. Das Düsenelement 46a ist drehbar in dem Gehäuse 38a gelagert. Das Düsenelement 46a ist in einer gemeinsamen Flucht mit dem Referenzelement 34a der Medienauftragsvorrichtung 10a angeordnet. Das Düsenelement 46a ist zu einer Ausgabe des Mediums auf eine nicht weiter dargestellte Oberfläche 14a vorgesehen. Das Düsenelement 46a und das Referenzelement 34a der Medienauftragsvorrichtung 10a sind entlang einer einzelnen gedachten geraden Linie angeordnet, welche bei einer zumindest im Wesentlichen senkrechten Medienausgaberichtung 102a des Düsenelements 46a relativ zu der Oberfläche 14a zumindest im Wesentlichen senkrecht zu der Oberfläche 14a verläuft. Das Düsenelement 46a ist mit dem Ventilelement 90a zu einer Durchleitung des Mediums über ein Zuleitungselement 92a der Düseneinheit 44a verbunden. Alternativ ist denkbar, dass die Düseneinheit 44a lediglich das Düsenelement 46a und das Zuleitungselement 92a umfasst. Das Ventilelement 90a ist dazu vorgesehen, das Medium durch das Düsenelement 46a strömen zu lassen.

Die Medienausgabeeinheit 12a weist die Medienzuführeinheit 88a zu einer Zuführung des Mediums zu dem Ventilelement 90a auf. Alternativ ist vorstellbar, dass die Medienzuführeinheit 88a zu einer Zuführung des Mediums direkt zu dem Düsenelement 46a vorgesehen ist. Die Medienzuführeinheit 88a umfasst ein Medienzuführelement 94a, welches mit dem Ventilelement 90a verbunden ist, und ein Adapterelement 96a. Alternativ ist denkbar, dass das Medienzuführelement 94a mit dem Düsenelement 46a oder mit dem Zuleitungselement 92a verbunden ist. Das Adapterelement 96a ist mit dem Medienzuführelement 94a verbunden und dazu vorgesehen, eine Verbindung zu dem der Übersichtlichkeit halber nicht dargestellten Behälter 76a herzustellen. Das Adapterelement 96a ist dazu vorgesehen, das Medium von dem Behälter 76a zu dem Medienzuführelement 94a zu leiten. Alternativ ist denkbar, dass ein als ein perforiertes Ultraschallplättchen ausgebildetes Düsenelement 46a zumindest teilweise in den Behälter 76a integriert ausgebildet ist.

Innerhalb des Gehäuses 38a und angebracht auf einem Stützelement 98a der Medienauftragsvorrichtung 10a ist eine Elektronikeinheit 16a der Medienauftragsvorrichtung 10a angeordnet. Die Elektronikeinheit 16a ist als eine Platine mit einer nicht weiter dargestellten Prozessoreinheit und einer nicht weiter dargestellten Speichereinheit ausgebildet. Die Elektronikeinheit 16a ist dazu vorgesehen, die Medienausgabeeinheit 12a zu steuern und/oder zu regeln. Die Elektronikeinheit 16a wird von der Energieversorgungseinheit 86a mit elektrischer Energie versorgt.

Die Medienauftragsvorrichtung 10a weist eine Kommunikationseinheit 58a auf. Die Kommunikationseinheit 58a ist innerhalb des Gehäuses 38a angeordnet. Die Kommunikationseinheit 58a ist als eine drahtlose Kommunikationseinheit ausgebildet. Die Kommunikationseinheit 58a ist als ein Bluetooth-Modul ausgebildet. Alternativ ist vorstellbar, dass die Kommunikationseinheit 58a als ein Funk-Modul, als eine lichtbasierte Kommunikationseinheit oder als eine kabelgebundene Kommunikationseinheit ausgebildet ist. Die Kommunikationseinheit 58a ist insbesondere zu einer Datenübertragung mit einer Latenzzeit von weniger als 30 ms, bevorzugt mit einer Latenzzeit von weniger als 20 ms und besonders bevorzugt mit einer Latenzzeit von weniger als 10 ms vorgesehen. Bei einer gleichzeitigen Positions- und/oder Ausrichtungserfassung der Medienausgabeeinheit 12a relativ zu der Oberfläche 14a mittels der Positions- und/oder Oberflächensensoreinheit 18a der Medienauftragsvorrichtung 10a und einer Erfassungsvorrichtung 24a der Steuer- und/oder Regeleinheit 22a ist denkbar, dass die Kommunikationseinheit 58a zu einer Datenübertragung mit einer Latenzzeit von weniger als 100 ms vorgesehen ist. Die Kommunikationseinheit 58a ist zu einem verschlüsselten Austausch von elektronischen Daten mit der Steuer- und/oder Regeleinheit 22a und/oder einer anderen externen Einheit vorgesehen. Die Kommunikationseinheit 58a weist zumindest ein Verschlüsselungs- und/oder Entschlüsselungselement auf (hier nicht weiter dargestellt). Das Verschlüsselungs- und/oder Entschlüsselungselement ist zu einer Verschlüsselung zu sendender elektronischer Daten und zu einer Entschlüsselung empfangener elektronischer Daten vorgesehen. Das Verschlüsselungs- und/oder Entschlüsselungselement ist zu einer symmetrischen und/oder asymmetrischen Verschlüsselung der zu sendenden elektronischen Daten vorgesehen. Das Verschlüsselungs- und/oder Entschlüsselungselement ist als ein Mikroprozessor oder als ein anderes, einem Fachmann als sinnvoll erscheinendes Verschlüsselungs- und/oder Entschlüsselungselement ausgebildet.

Die Medienauftragsvorrichtung 10a weist eine Positions- und/oder Oberflächensensoreinheit 18a auf. Die Positions- und/oder Oberflächensensoreinheit 18a weist ein Positions- und/oder Oberflächensensorelement 100a auf, welches an einer Außenseite des Gehäuses 38a an dem Kopfbereich 72a angeordnet ist. Das Positions- und/oder Oberflächensensorelement 100a ist in Richtung der Medienausgaberichtung 102a des Düsenelements 46a ausgerichtet. Das Positions- und/oder Oberflächensensorelement 100a ist als eine Kamera ausgebildet. Alternativ ist vorstellbar, dass das Positions- und/oder Oberflächensensorelement 100a als ein optischer oder mechanischer Maussensor, als ein Laserscanner, als eine Time-of-flight-Kamera, als ein Radarsensor, als ein Taster oder als ein Ultraschallsensor ausgebildet ist. Die Positions- und/oder Oberflächensensoreinheit 18a ist dazu vorgesehen, eine Position und/oder Ausrichtung der Medienausgabeeinheit 12a relativ zu der Oberfläche 14a zu erfassen. Das als Kamera ausgebildete Positions- und/oder Oberflächensensorelement 100a kann durch Messung eines optischen Flusses die Position und/oder Ausrichtung der Medienausgabeeinheit 12a relativ zu der Oberfläche 14a erfassen. Die Elektronikeinheit 16a ist dazu vorgesehen, die Medienausgabeeinheit 12a in Abhängigkeit der von der Positions- und/oder Oberflächensensoreinheit 18a erfassten Position und/oder Ausrichtung der Medienausgabeeinheit 12a relativ zu der Oberfläche 14a zu steuern und/oder zu regeln.

Die Positions- und/oder Oberflächensensoreinheit 18a ist dazu vorgesehen, eine oberflächenspezifische Kenngröße der Oberfläche 14a zu erfassen, die zu einer Bestimmung einer Orientierung der Medienausgabeeinheit 12a von der Elektronikeinheit 16a verwertbar ist. Alternativ ist vorstellbar, dass die Medienauftragsvorrichtung 10a eine weitere Positions- und/oder Oberflächensensoreinheit zur Erfassung der oberflächenspezifischen Kenngröße der Oberfläche 14a aufweist. Weiterhin ist denkbar, dass die Medienauftragsvorrichtung 10a in einer alternativen Ausgestaltung unabhängig von der Positions- und/oder Oberflächensensoreinheit 18a ausgebildet ist, welche dazu vorgesehen ist, eine Position und/oder Ausrichtung der Medienausgabeeinheit 12a relativ zu der Oberfläche 14a zu erfassen, in Abhängigkeit von der die Elektronikeinheit 16a die Medienausgabeeinheit 12a steuert und/oder regelt. Vorzugsweise umfasst die Medienauftragsvorrichtung 10a in der alternativen Ausgestaltung eine Positions- und/oder Oberflächensensoreinheit, welche dazu vorgesehen ist, eine oberflächenspezifische Kenngröße der Oberfläche 14a zu erfassen, die zu einer Bestimmung einer Orientierung der Medienausgabeeinheit 12a von der Elektronikeinheit 16a verwertbar ist.

Die Oberfläche 14a kann als oberflächenspezifische Kenngröße in bestimmten Bereichen markante Kanten der Oberfläche 14a, auffällige Strukturen der Oberfläche 14a, auffällige Farben der Oberfläche 14a, eine bestimmte Dichte der Oberfläche 14a, eine bestimmte Materialart der Oberfläche 14a, eine bestimmte Rauheit der Oberfläche 14a, eine bestimmte Mediumaufnahmeeigenschaft der Oberfläche 14a oder dergleichen aufweisen, die von dem Positions- und/oder Oberflächensensorelement 100a erfasst werden können. Die Elektronikeinheit 16a ist dazu vorgesehen, die erfasste oberflächenspezifische Kenngröße der Oberfläche 14a zur Bestimmung der Orientierung der Medienausgabeeinheit 12a zu verwerten. Die Elektronikeinheit 16a kann die oberflächenspezifische Kenngröße zu einer Genauigkeitserhöhung in eine Positions- und/oder Ausrichtungserfassung der Medienausgabeeinheit 12a einrechnen.

Die Positions- und/oder Oberflächensensoreinheit 18a ist dazu vorgesehen, eine Bewegungskenngröße der Medienausgabeeinheit 12a zu erfassen. Die Positions- und/oder Oberflächensensoreinheit 18a weist zu einer Erfassung der Bewegungskenngröße der Medienausgabeeinheit 12a ein Bewegungssensorelement 104a auf. Das Bewegungssensorelement 104a ist innerhalb des Gehäuses 38a an dem Aufnahmebereich 74a angeordnet. Das Bewegungssensorelement 104a ist als ein Geschwindigkeitssensor ausgebildet. Das Bewegungssensorelement 104a ist dazu vorgesehen, als eine Bewegungsgeschwindigkeit und als eine Bewegungsrichtung ausgebildete Bewegungskenngrößen der Medienausgabeeinheit 12a zu erfassen. Die Elektronikeinheit 16a ist dazu vorgesehen, in Abhängigkeit von der erfassten Bewegungskenngröße der Medienausgabeeinheit 12a eine Position und/oder Ausrichtung der Medienausgabeeinheit 12a relativ zu der Oberfläche 14a vorauszuberechnen.

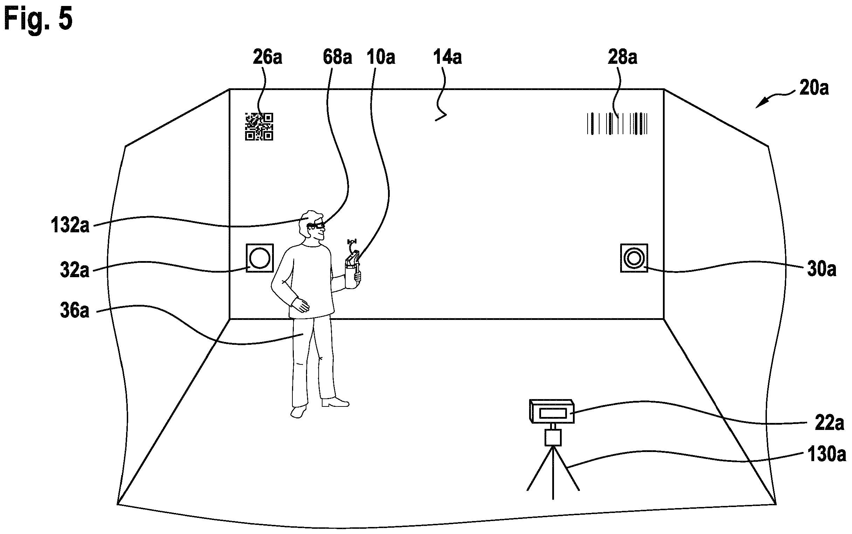

Die Positions- und/oder Oberflächensensoreinheit 18a ist dazu vorgesehen, anhand eines Referenzelements einer die Medienausgabeeinheit 12a umgebenden Umgebung die Position und/oder Ausrichtung der Medienausgabeeinheit 12a relativ zu der Oberfläche 14a zu erfassen. Das Referenzelement der die Medienausgabeeinheit 12a umgebenden Umgebung kann als ein vorhandenes oder als ein angebrachtes Referenzelement ausgebildet sein. Die Referenzelemente der die Medienausgabeeinheit 12a umgebenden Umgebung sind analog zu den Referenzelementen 26a, 28a, 30a, 32a der Umgebung der Medienauftragsvorrichtung 10a ausgebildet (vgl. Figur 5). Die Elektronikeinheit 16a ist dazu vorgesehen, in Abhängigkeit von der anhand des Referenzelements der die Medienausgabeeinheit 12a umgebenden Umgebung erfassten Position und/oder Ausrichtung der Medienausgabeeinheit 12a relativ zu der Oberfläche 14a die Medienausgabeeinheit 12a zu steuern und/oder zu regeln.

Die Medienauftragsvorrichtung 10a weist eine Objektsensoreinheit 106a auf. Die Objektsensoreinheit 106a ist an der Außenseite des Gehäuses 38a an dem Aufnahmebereich 74a angeordnet. Die Objektsensoreinheit 106a ist in Richtung der Medienausgaberichtung 102a des Düsenelements 46a ausgerichtet. Die Objektsensoreinheit 106a ist dazu vorgesehen, eine objektspezifische Kenngröße zu erfassen. Die Elektronikeinheit 16a ist dazu vorgesehen, in Abhängigkeit von der erfassten objektspezifischen Kenngröße die Medienausgabeeinheit 12a zu steuern und/oder zu regeln. Die objektspezifische Kenngröße kann als ein Material, als eine Struktur, als eine Beschaffenheit, als eine Temperatur oder als eine Feuchtigkeit der Oberfläche 14a ausgebildet sein. Die objektspezifische Kenngröße kann als ein zu einer Erstellung eines Medienauftrags verwendetes Medium, als eine Auftragsdicke oder als eine Unregelmäßigkeit im Medienauftrag ausgebildet sein. Die Objektsensoreinheit 106a ist als ein Ultraschallscanner ausgebildet. Alternativ ist vorstellbar, dass die Objektsensoreinheit 106a als eine Kamera, als ein Lidargerät oder als ein Radargerät ausgebildet ist.

Die Medienauftragsvorrichtung 10a weist eine Umgebungssensoreinheit 108a auf. Die Umgebungssensoreinheit 108a ist an der Außenseite des Gehäuses 38a an dem Kopfbereich 72a angeordnet. Die Umgebungssensoreinheit 108a ist dazu vorgesehen, eine umgebungsspezifische Kenngröße wie beispielsweise eine Umgebungstemperatur, eine Umgebungsluftfeuchtigkeit oder eine Umgebungshelligkeit der die Medienausgabeeinheit 12a umgebenden Umgebung zu erfassen. Die Umgebungssensoreinheit 108a ist als ein Temperatursensor ausgebildet. Alternativ ist vorstellbar, dass die Umgebungssensoreinheit 108a als ein Luftfeuchtigkeitssensor oder als ein Helligkeitssensor ausgebildet ist. Die Elektronikeinheit 16a ist dazu vorgesehen, in Abhängigkeit von der erfassten umgebungsspezifischen Kenngröße die Medienausgabeeinheit 12a zu steuern und/oder zu regeln.

Die Medienauftragsvorrichtung 10a weist eine Benutzeridentifikationseinheit 110a auf. Die Benutzeridentifikationseinheit 110a ist an der Außenseite des Gehäuses 38a an dem Kopfbereich 72a angeordnet. Die Benutzeridentifikationseinheit 110a ist dazu vorgesehen, eine benutzerspezifische Kenngröße wie beispielsweise biometrische Daten des Benutzers 36a und/oder ein Passwort des Benutzers 36a zu erfassen und/oder zu verarbeiten und den Benutzer 36a anhand der benutzerspezifischen Kenngröße zu identifizieren. Die Benutzeridentifikationseinheit 110a ist als ein Fingerabdruckscanner ausgebildet. Alternativ ist vorstellbar, dass die Benutzeridentifikationseinheit 110a als ein Irisscanner, als eine Kamera für eine Gesichtserkennung oder als ein Eingabefeld für ein Passwort ausgebildet ist.

Die Medienauftragsvorrichtung 10a weist eine Mediensensoreinheit 112a auf. Die Mediensensoreinheit 112a ist innerhalb des Gehäuses 38a an dem Medienzuführelement 94a angeordnet. Die Mediensensoreinheit 112a ist dazu vorgesehen, eine medienspezifische Kenngröße wie beispielsweise eine Medienart, eine Medienmenge oder eine Medienviskosität zu erfassen. Die Mediensensoreinheit 112a ist als ein Farbsensor ausgebildet. Alternativ ist vorstellbar, dass die Mediensensoreinheit 112a als ein Füllstandssensor oder als ein chemischer Analysesensor ausgebildet ist. Die Elektronikeinheit 16a ist dazu vorgesehen, in Abhängigkeit von der erfassten medienspezifischen Kenngröße die Medienausgabeeinheit 12a zu steuern und/oder zu regeln.

Die Medienauftragsvorrichtung 10a weist eine Referenzelementerzeugungseinheit 42a auf. Die Referenzelementerzeugungseinheit 42a ist an der Außenseite des Gehäuses 38a an dem Kopfbereich 72a angeordnet. Die Referenzelementerzeugungseinheit 42a ist in Richtung der Medienausgaberichtung 102a des Düsenelements 46a ausgerichtet. Die Referenzelementerzeugungseinheit 42a ist dazu vorgesehen, ein Referenzelement 26a, 28a der Umgebung Medienauftragsvorrichtung 10a zu erzeugen. Die Referenzelementerzeugungseinheit 42a ist als ein Laserprojektor ausgebildet. Alternativ ist vorstellbar, dass die Referenzelementerzeugungseinheit 42a als ein Laserpointer oder als ein Videoprojektor ausgebildet ist. Die als Laserprojektor ausgebildete Referenzelementerzeugungseinheit 42a kann mittels eines Laserstrahls ein Referenzelement 26a, 28a der Umgebung der Medienauftragsvorrichtung 10a auf die Oberfläche 14a projizieren. Die Referenzelementerzeugungseinheit 42a kann das Referenzelement 26a, 28a der Umgebung der Medienauftragsvorrichtung 10a durch eine Rasterung des Laserstrahls über die Oberfläche 14a projizieren. Als das Referenzelement 26a, 28a der Umgebung der Medienauftragsvorrichtung 10a kann ein QR-Code, ein Strichcode oder ein Farbcode erzeugt werden. Alternativ ist vorstellbar, dass die Referenzelementerzeugungseinheit 42a als eine weitere Medienausgabeeinheit ausgebildet ist, die das Referenzelement 26a, 28a der Umgebung Medienauftragsvorrichtung 10a mittels des Mediums auf die Oberfläche 14a auftragen kann. Die Referenzelementerzeugungseinheit 42a kann auch in die vorhandene Medienausgabeeinheit 12a integriert sein.

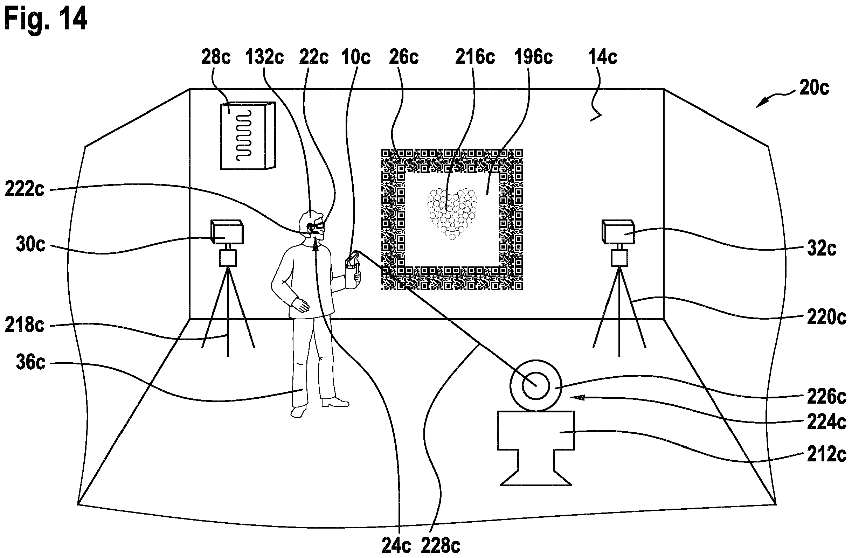

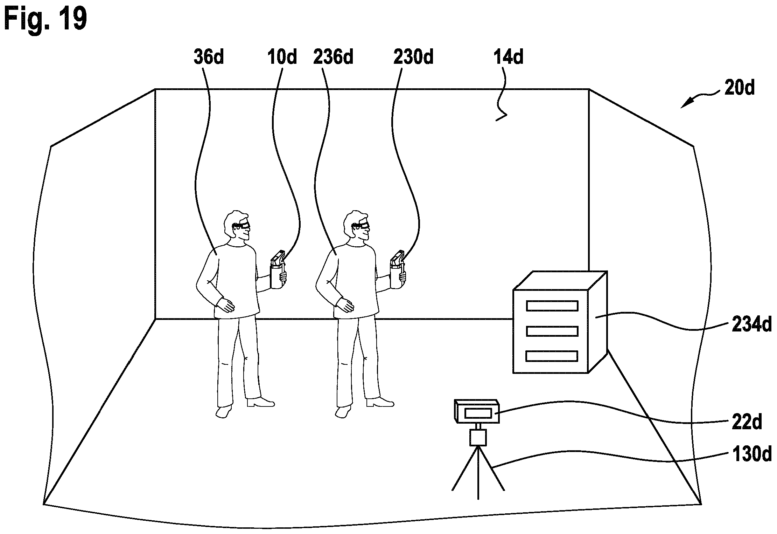

Vorzugsweise ist die Medienauftragsvorrichtung 10a zu einer Nutzung in einem Auftragssystem 20a gemäß eines in Figur 5 gezeigten Ausführungsbeispiels, insbesondere mit einer Steuer- und/oder Regeleinheit 22a, vorgesehen. Es ist aber auch denkbar, dass die Medienauftragsvorrichtung 10a in einem Auftragssystem 20c gemäß eines in Figur 14 dargestellten Ausführungsbeispiels, insbesondere mit einer Steuer- und/oder Regeleinheit 22c, und/oder in einem Auftragssystem 20d gemäß eines in Figur 19 dargestellten Ausführungsbeispiels, insbesondere mit einer Steuer- und/oder Regeleinheit 22d, verwendbar ist.

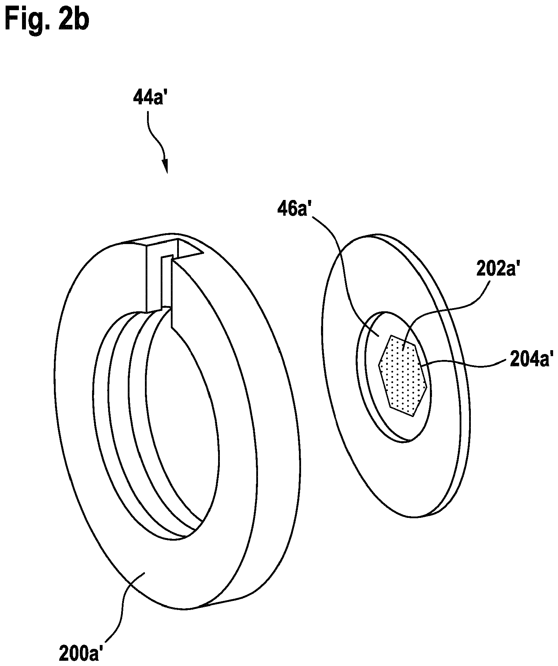

Figur 2b zeigt eine Explosionsansicht eines Teils einer alternativen Düseneinheit 44a' in einer perspektivischen Darstellung. Die Düseneinheit 44a' umfasst ein Düsenelement 46a'. Das Düsenelement 46a' ist als eine Ultraschalldüse ausgebildet. Das Düsenelement 46a' ist als ein perforiertes Ultraschallplättchen ausgebildet. Die Düseneinheit 44a' umfasst eine Piezoaktorik 200a'. Die Piezoaktorik 200a' ist als ein Piezoring ausgebildet. Das Düsenelement 46a' ist zu einer Ausgabe eines Mediums auf die Oberfläche 14a mittels der Piezoaktorik 200a' schwingend anregbar. Das Düsenelement 46a' ist zu einer Schwingung in einem Ultraschallfrequenzbereich anregbar. Das Düsenelement 46a' weist eine Mehrzahl von Mediendurchtrittsöffnungen 202a' auf, durch die ein Medium ausbringbar ist. Die Mediendurchtrittsöffnungen 202a' sind als eine Perforation bzw. Lochung des als Ultraschallplättchen ausgebildeten Düsenelements 46a' ausgebildet. Das Düsenelement 46a' ist insbesondere zu einer Ausgabe, insbesondere einem Drucken, von Medienauftragspunkten mit einer Ausgabefrequenz von zumindest 50 Medienauftragspunkten pro Sekunde, bevorzugt mit einer Ausgabefrequenz von zumindest 100 Medienauftragspunkten pro Sekunde und besonders bevorzugt mit einer Ausgabefrequenz von zumindest 200 Medienauftragspunkten pro Sekunde vorgesehen. Die Piezoaktorik 200a' ist insbesondere zu einer schwingenden Anregung des Düsenelements 46a' mit einer Anregungsfrequenz von zumindest 1 kHz, bevorzugt mit einer Anregungsfrequenz von zumindest 16 kHz, besonders bevorzugt mit einer Anregungsfrequenz von zumindest 20 kHz und ganz besonders bevorzugt mit einer Anregungsfrequenz von zumindest 130 kHz vorgesehen. Insbesondere ist die Piezoaktorik 200a' zu einer schwingenden Anregung des Düsenelements 46a' mit einer Anregungsfrequenz von höchstens 200 kHz vorgesehen. Die Piezoaktorik 200a' ist zu einer schwingenden Anregung des Düsenelements 46a' mit einer vorbestimmten, bevorzugt einstellbaren, Wellenform vorgesehen, beispielsweise mit einer Sinus-Wellenform, mit einer Dreiecks-Wellenform, mit einer Sägezahn-Wellenform oder mit einer anderen, einem Fachmann als sinnvoll erscheinenden Wellenform.

Das Düsenelement 46a' weist zumindest ein Perforationsraster 204a' von Mediendurchtrittsöffnungen 202a' auf, das derart ausgebildet ist, dass mittels der Düseneinheit 44a' Medienauftragspunkte erzeugbar, insbesondere druckbar, sind, die einen maximalen Durchmesser größer als 1 mm aufweisen. Das Perforationsraster 204a' kann, insbesondere abhängig von einer zu erzeugenden Form von Medienauftragspunkten, unterschiedliche Formen aufweisen. Im vorliegenden Ausführungsbeispiel ist das Perforationsraster 204a' beispielhaft polygonal, insbesondere hexagonal, ausgebildet. Alternativ ist denkbar, dass das Perforationsraster 204a' kreisförmig, ellipsenförmig, oval, polygonal, beispielhaft quadratisch, rhombisch, dreieckig oder trapezoid, halbkreisförmig o. dgl. ausgebildet ist. Insbesondere weist das Düsenelement 46a' eine Dichte von Mediendurchtrittsöffnungen 202a' von zumindest 1 Mediendurchtrittsöffnung 202a' pro mm², bevorzugt von zumindest 5 Mediendurchtrittsöffnungen 202a' pro mm², besonders bevorzugt von zumindest 10 Mediendurchtrittsöffnungen 202a' pro mm² und ganz besonders bevorzugt von zumindest 20 Mediendurchtrittsöffnungen 202a' pro mm² auf. Insbesondere eine zu einer sprühenden Ausgabe und/oder zu einer Verneblung eines Mediums vorgesehene Düseneinheit 44a' kann ein als Ultraschallplättchen ausgebildetes Düsenelement 46a' umfassen, das eine Dichte von Mediendurchtrittsöffnungen 202a' von zumindest 80 Mediendurchtrittsöffnungen 202a' pro mm² aufweist. Insbesondere weist das Düsenelement 46a' zumindest 50 Mediendurchtrittsöffnungen 202a', bevorzugt zumindest 75 Mediendurchtrittsöffnungen 202a' und besonders bevorzugt zumindest 100 Mediendurchtrittsöffnungen 202a' auf. Insbesondere weist das Düsenelement 46a' einen maximalen Durchmesser von zumindest 1 mm, bevorzugt von zumindest 2 mm und besonders bevorzugt von zumindest 3 mm auf. Das als Ultraschallplättchen ausgebildete Düsenelement 46a' ist zu einer Ausgabe von Farben auf Wasserbasis, insbesondere von wasserbasierten Acryllacken, vorgesehen. Insbesondere kann die Medienauftragsvorrichtung 10a zumindest eine Mischereinheit und/oder ein Kammersystem zu einer Einstellung eines Mischungsverhältnisses von Farbe zu Wasser aufweisen.

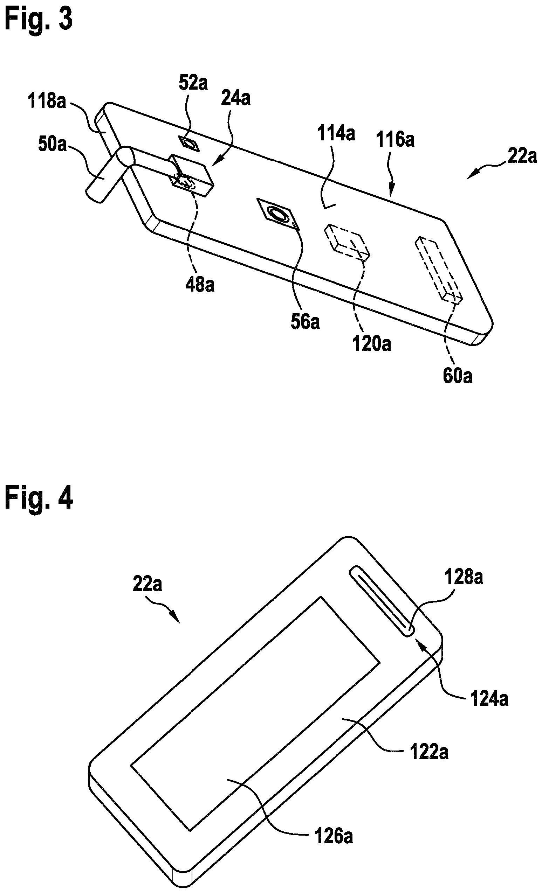

Figur 3 zeigt die Steuer- und/oder Regeleinheit 22a in einer perspektivischen Darstellung. Dargestellt ist eine Rückseite 114a der Steuer- und/oder Regeleinheit 22a. Die Steuer- und/oder Regeleinheit 22a ist als ein Smartphone ausgebildet. Die Steuer- und/oder Regeleinheit 22a weist eine Gehäuseeinheit 116a auf. Die Gehäuseeinheit 116a ist aus einem Metall gebildet. Alternativ ist vorstellbar, dass die Gehäuseeinheit 116a aus einem Glas oder aus einem Kunststoff gebildet ist.

Die Steuer- und/oder Regeleinheit 22a weist eine weitere Kommunikationseinheit 60a auf. Die weitere Kommunikationseinheit 60a ist innerhalb der Gehäuseeinheit 116a angeordnet. Die weitere Kommunikationseinheit 60a ist als eine drahtlose Kommunikationseinheit ausgebildet. Die weitere Kommunikationseinheit 60a ist als ein Bluetooth-Modul ausgebildet. Alternativ ist vorstellbar, dass die weitere Kommunikationseinheit 60a als ein Funk-Modul, als eine lichtbasierte Kommunikationseinheit oder als eine kabelgebundene Kommunikationseinheit ausgebildet ist. Die weitere Kommunikationseinheit 60a ist insbesondere zu einer Datenübertragung mit einer Latenzzeit von weniger als 30 ms, bevorzugt mit einer Latenzzeit von weniger als 20 ms und besonders bevorzugt mit einer Latenzzeit von weniger als 10 ms vorgesehen. Die weitere Kommunikationseinheit 60a ist zu einem verschlüsselten Austausch von elektronischen Daten mit der nicht weiter dargestellten Medienauftragsvorrichtung 10a und/oder einer anderen externen Einheit vorgesehen. Die weitere Kommunikationseinheit 60a weist zumindest ein Verschlüsselungs- und/oder Entschlüsselungselement auf (hier nicht weiter dargestellt). Das Verschlüsselungs- und/oder Entschlüsselungselement ist zu einer Verschlüsselung zu sendender elektronischer Daten und zu einer Entschlüsselung empfangener elektronischer Daten vorgesehen. Das Verschlüsselungs- und/oder Entschlüsselungselement ist zu einer symmetrischen und/oder asymmetrischen Verschlüsselung der zu sendenden elektronischen Daten vorgesehen. Das Verschlüsselungs- und/oder Entschlüsselungselement ist als ein Mikroprozessor oder als ein anderes, einem Fachmann als sinnvoll erscheinendes Verschlüsselungs- und/oder Entschlüsselungselement ausgebildet.

Die Steuer- und/oder Regeleinheit 22a weist eine Erfassungsvorrichtung 24a auf. Die Erfassungsvorrichtung 24a ist dazu vorgesehen, anhand des Referenzelements 26a, 28a, 30a, 32a der Umgebung der Medienauftragsvorrichtung 10a und/oder anhand des Referenzelements 34a der Medienauftragsvorrichtung 10a eine Position und/oder Ausrichtung der Medienauftragsvorrichtung 10a relativ zu der Oberfläche 14a zu erfassen. Zu einer Erfassung der Referenzelemente 26a, 28a, 30a, 32a, 34a weist die Erfassungsvorrichtung 24a eine Kameraeinheit 48a auf. Die Kameraeinheit 48a ist auf der Rückseite 114a der Steuer- und/oder Regeleinheit 22a an der Gehäuseeinheit 116a angeordnet. Die Kameraeinheit 48a ist als eine Kamera mit einer Bildaufnahmefrequenz von 240 Bildern in einer Sekunde bei einer Bildauflösung von 1920 mal 1080 Bildpunkten ausgebildet. Die Kameraeinheit 48a ist als eine Kamera mit einer Bildaufnahmefrequenz von 480 Bildern in einer Sekunde bei einer Bildauflösung von 1280 mal 720 Bildpunkten ausgebildet. Alternativ oder zusätzlich ist vorstellbar, dass die Erfassungsvorrichtung 24a zu einer Erfassung der Referenzelemente 26a, 28a, 30a, 32a, 34a ein als ein optischer Sensor, als ein elektromagnetischer Sensor oder als ein akustischer Sensor ausgebildetes Erfassungselement aufweist.

Die Erfassungsvorrichtung 24a umfasst eine Abstandssensoreinheit 52a. Die Abstandssensoreinheit 52a ist auf der Rückseite 114a der Steuer- und/oder Regeleinheit 22a an der Gehäuseeinheit 116a angeordnet. Die Abstandssensoreinheit 52a ist dazu vorgesehen, einen Abstand der Steuer- und/oder Regeleinheit 22a relativ zu der Oberfläche 14a zu erfassen. Die Abstandssensoreinheit 52a ist als ein Laserentfernungsmesser mit einer VCSEL-Diode ausgebildet. Alternativ ist vorstellbar, dass die Abstandssensoreinheit 52a als eine 3D-Kamera ausgebildet ist.

Die Steuer- und/oder Regeleinheit 22a weist eine Umlenkungseinheit 50a auf. Die Umlenkungseinheit 50a ist dazu vorgesehen, Daten zu einer Positions- und/oder Ausrichtungserfassung durch die Erfassungsvorrichtung 24a umzulenken. Der Übersichtlichkeit halber ist die Umlenkungseinheit 50a teiltransparent dargestellt. Die Umlenkungseinheit 50a ist auf der Rückseite 114a der Steuer- und/oder Regeleinheit 22a an der Gehäuseeinheit 116a angeordnet. Die Umlenkungseinheit 50a ist mit der Kameraeinheit 48a verbunden. Alternativ oder zusätzlich ist denkbar, dass die Umlenkungseinheit 50a mit der Abstandssensoreinheit 52a verbunden ist. Die Umlenkungseinheit 50a erstreckt sich entlang der Rückseite 114a der Steuer- und/oder Regeleinheit 22a und um einen Rand 118a der Steuer- und/oder Regeleinheit 22a. Die Umlenkungseinheit 50a ist als ein Winkelspiegel ausgebildet. Alternativ ist vorstellbar, dass die Umlenkungseinheit 50a als eine periskopartige Spiegel- und/oder Prismenkonstruktion oder als eine Faseroptik ausgebildet ist. Die als Winkelspiegel ausgebildete Umlenkungseinheit 50a umfasst nicht weiter dargestellte Spiegel, Prismen und Linsen. Die Umlenkungseinheit 50a spiegelt ein Bild von einer der Rückseite 114a der Steuer- und/oder Regeleinheit 22a abgewandten Seite der Steuer- und/oder Regeleinheit 22a zu einer Erfassung in die Kameraeinheit 48a.

Die Steuer- und/oder Regeleinheit 22a weist eine Projektionseinheit 56a auf. Die Projektionseinheit 56a ist auf der Rückseite 114a der Steuer- und/oder Regeleinheit 22a an der Gehäuseeinheit 116a angeordnet. Die Projektionseinheit 56a ist dazu vorgesehen, einen Orientierungspunkt und/oder ein Raster auf die Oberfläche 14a zu projizieren. Die Projektionseinheit 56a ist als ein Laserprojektor ausgebildet. Alternativ ist vorstellbar, dass die Projektionseinheit 56a als ein Laserpointer oder als ein Videoprojektor ausgebildet ist. Die als Laserprojektor ausgebildete Projektionseinheit 56a kann mittels eines Laserstrahls einen Laserspot als Orientierungspunkt oder ein als ein Lichtmuster ausgebildetes Raster auf die Oberfläche 14a projizieren. Die Projektionseinheit 56a kann das Raster durch eine Rasterung des Laserspots des Laserstrahls über die Oberfläche 14a projizieren. Der Orientierungspunkt und das Raster sind zu einer Orientierung des Benutzers 36a auf der Oberfläche 14a während eines Medienauftragsprozesses vorgesehen.

Die Steuer- und/oder Regeleinheit 22a umfasst eine Neigungssensoreinheit 120a. Die Neigungssensoreinheit 120a ist innerhalb der Gehäuseeinheit 116a angeordnet. Die Neigungssensoreinheit 120a ist dazu vorgesehen, eine Neigung der Erfassungsvorrichtung 24a relativ zu der Oberfläche 14a zu erfassen und die erfasste Neigung zu kompensieren. Die Neigungssensoreinheit 120a weist zu einer Erfassung einer Neigung der Erfassungsvorrichtung 24a relativ zu der Oberfläche 14a ein nicht weiter dargestelltes Neigungserfassungselement auf. Das Neigungserfassungselement ist als ein Neigungssensor ausgebildet. Die Neigungssensoreinheit 120a weist zu einer Kompensation der erfassten Neigung ein nicht weiter dargestelltes Neigungskompensationselement auf. Das Neigungskompensationselement ist als ein Mikroprozessor ausgebildet. Das Neigungskompensationselement kann einen Offset einer mittels der geneigten Erfassungsvorrichtung 24a erfassten Position und/oder Ausrichtung der Medienauftragsvorrichtung 10a relativ zu der Oberfläche 14a anhand der erfassten Neigung der Erfassungsvorrichtung 24a herausrechnen.

Figur 4 zeigt die Steuer- und/oder Regeleinheit 22a aus Fig. 3 in einer weiteren perspektivischen Darstellung. Dargestellt ist eine Vorderseite 122a der Steuer- und/oder Regeleinheit 22a.

Die Steuer- und/oder Regeleinheit 22a weist eine weitere Ausgabeeinheit 124a auf. Die weitere Ausgabeeinheit 124a ist zu einer Informationsausgabe an den Benutzer 36a und/oder zu einer Befehlseingabe durch den Benutzer 36a vorgesehen. Die weitere Ausgabeeinheit 124a umfasst ein erstes Ausgabeelement 126a und ein zweites Ausgabeelement 128a. Das erste Ausgabeelement 126a ist als ein Bildschirm ausgebildet. Das erste Ausgabeelement 126a ist als ein Touch-Bildschirm ausgebildet. Das zweite Ausgabeelement 128a ist als ein Lautsprecher ausgebildet. Das erste Ausgabeelement 126a und das zweite Ausgabeelement 128a sind bündig in die Gehäuseeinheit 116a eingelassen.

Die Steuer- und/oder Regeleinheit 22a umfasst eine nicht weiter dargestellte Recheneinheit und eine nicht weiter dargestellte Speichereinheit. Die Recheneinheit und die Speichereinheit sind innerhalb der Gehäuseeinheit 116a angeordnet. Die Recheneinheit ist als ein Mikroprozessor ausgebildet. Die Speichereinheit ist als ein SSD-Speicher (Solid state drive-Speicher) ausgebildet.

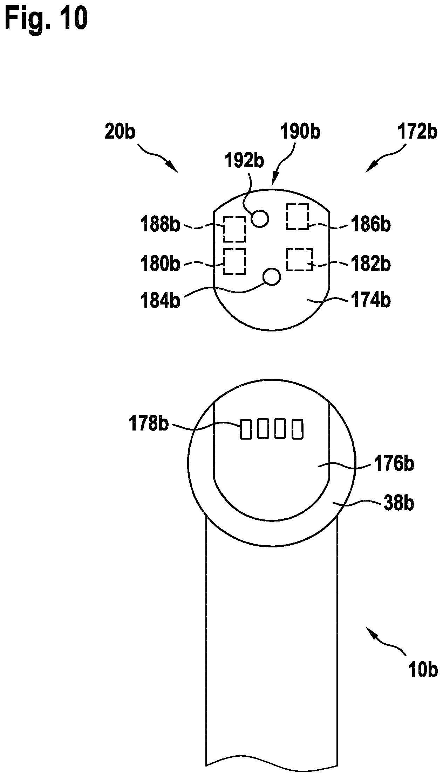

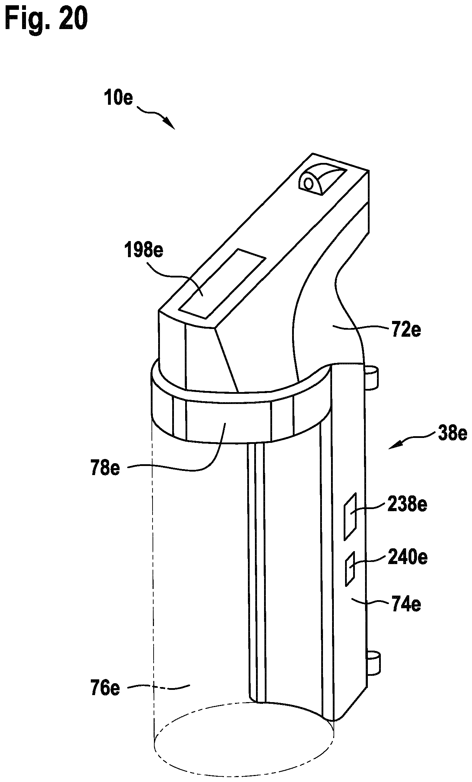

Vorzugsweise ist die Steuer- und/oder Regeleinheit 22a zu einer Nutzung in einem Auftragssystem 20a gemäß eines in Figur 5 gezeigten Ausführungsbeispiels, insbesondere mit einer Medienauftragsvorrichtung 10a, vorgesehen. Es ist aber auch denkbar, dass die Steuer- und/oder Regeleinheit 22a in einem Auftragssystem 20b gemäß eines in Figur 10 dargestellten Ausführungsbeispiels, insbesondere mit einer Medienauftragsvorrichtung 10b, in einem Auftragssystem 20c gemäß eines in Figur 14 dargestellten Ausführungsbeispiels, insbesondere mit einer Medienauftragsvorrichtung 10c, in einem Auftragssystem 20d gemäß eines in Figur 19 dargestellten Ausführungsbeispiels, insbesondere mit einer Medienauftragsvorrichtung 10d, und/oder mit einer Medienauftragsvorrichtung 10e gemäß eines in Figur 20 dargestellten Ausführungsbeispiels verwendbar ist.

Figur 5 zeigt ein Auftragssystem 20a in einer schematischen Darstellung. Das Auftragssystem 20a umfasst die Medienauftragsvorrichtung 10a und die Steuer- und/oder Regeleinheit 22a. Die Medienauftragsvorrichtung 10a wird von dem Benutzer 36a von Hand geführt. Der Benutzer 36a bringt mittels der Medienauftragsvorrichtung 10a das Medium auf die Oberfläche 14a auf. Die Steuer- und/oder Regeleinheit 22a ist zu einer Erfassung der Position und/oder Ausrichtung der Medienauftragsvorrichtung 10a relativ zu der Oberfläche 14a auf einem Stativ 130a vor der Oberfläche 14a angeordnet.

Die Oberfläche 14a ist als eine Zimmerwand ausgebildet. Auf der Oberfläche 14a sind vier Referenzelemente 26a, 28a, 30a, 32a der Umgebung der Medienauftragsvorrichtung 10a aufgebracht. Die vier Referenzelemente 26a, 28a, 30a, 32a der Umgebung der Medienauftragsvorrichtung 10a sind von dem Benutzer 36a auf der Oberfläche 14a aufgebracht. Alternativ und/oder zusätzlich ist vorstellbar, dass bereits in der Umgebung der Medienauftragsvorrichtung 10a vorhandene Referenzelemente der Umgebung der Medienauftragsvorrichtung 10a zu einer Positions- und/oder Ausrichtungserfassung der Medienauftragsvorrichtung 10a relativ zu der Oberfläche 14a genutzt werden. Die vier Referenzelemente 26a, 28a, 30a, 32a der Umgebung der Medienauftragsvorrichtung 10a entsprechen vier Referenzelementen der die Medienausgabeeinheit 12a umgebenden Umgebung. Die vier Referenzelemente 26a, 28a, 30a, 32a der Umgebung der Medienauftragsvorrichtung 10a sind zu einer Positions- und/oder Ausrichtungserfassung der Medienauftragsvorrichtung 10a relativ zu der Oberfläche 14a durch die Erfassungsvorrichtung 24a und/oder zu einer Positions- und/oder Ausrichtungserfassung der Medienausgabeeinheit 12a relativ zu der Oberfläche 14a durch die Positions- und/oder Oberflächensensoreinheit 18a vorgesehen. Die vier Referenzelemente 26a, 28a, 30a, 32a der Umgebung der Medienauftragsvorrichtung 10a markieren Eckpunkte eines Bereichs auf der Oberfläche 14a, auf den ein Medienauftrag aufgebracht wird.

Ein erstes Referenzelement 26a der Umgebung der Medienauftragsvorrichtung 10a ist als ein QR-Code ausgebildet. Ein zweites Referenzelement 28a der Umgebung der Medienauftragsvorrichtung 10a ist als ein Strichcode ausgebildet. Ein drittes Referenzelement 30a der Umgebung der Medienauftragsvorrichtung 10a ist als eine Infrarotleuchtdiode ausgebildet. Ein viertes Referenzelement 32a der Umgebung der Medienauftragsvorrichtung 10a ist als eine gepulste Leuchtdiode ausgebildet. Die Positions- und/oder Oberflächensensoreinheit 18a kann die Referenzelemente 26a, 28a, 30a, 32a der Umgebung der Medienauftragsvorrichtung 10a erfassen und anhand der Referenzelemente 26a, 28a, 30a, 32a der Umgebung der Medienauftragsvorrichtung 10a eine Position und/oder Ausrichtung der Medienausgabeeinheit 12a relativ zu der Oberfläche 14a bestimmen. Die Erfassungsvorrichtung 24a kann die Referenzelemente 26a, 28a, 30a, 32a der Umgebung der Medienauftragsvorrichtung 10a und das Referenzelement 34a der Medienauftragsvorrichtung 10a erfassen und anhand der Referenzelemente 26a, 28a, 30a, 32a der Umgebung der Medienauftragsvorrichtung 10a eine Position und/oder Ausrichtung der Medienauftragsvorrichtung 10a relativ zu der Oberfläche 14a bestimmen.

Der Benutzer 36a trägt auf einem Kopf 132a eine Filtervorrichtung 68a. Die Filtervorrichtung 68a ist dazu vorgesehen, eine Transmission von durch das Referenzelement 34a der Medienauftragsvorrichtung 10a und/oder von durch die Referenzelemente 26a, 28a, 30a, 32a der Umgebung der Medienauftragsvorrichtung 10a ausgesendeter Strahlung zu unterbinden. Die Filtervorrichtung 68a ist als eine Filterbrille ausgebildet. Die Filtervorrichtung 68a weist ein als ein richtungsabhängiger Filter ausgebildetes Filterelement zu einem Schutz von Augen des Benutzers 36a vor durch das Referenzelement 34a der Medienauftragsvorrichtung 10a und/oder durch die Referenzelemente 26a, 28a, 30a, 32a der Umgebung der Medienauftragsvorrichtung 10a ausgesendeter Strahlung auf.

Vorzugsweise ist die Filtervorrichtung 68a zu einer Nutzung in einem Auftragssystem 20a gemäß eines in Figur 5 gezeigten Ausführungsbeispiels, insbesondere mit einer Medienauftragsvorrichtung 10a, vorgesehen. Es ist aber auch denkbar, dass die Filtervorrichtung 68a in einem Auftragssystem 20b gemäß eines in Figur 10 dargestellten Ausführungsbeispiels, insbesondere mit einer Medienauftragsvorrichtung 10b, in einem Auftragssystem 20c gemäß eines in Figur 14 dargestellten Ausführungsbeispiels, insbesondere mit einer Medienauftragsvorrichtung 10c, in einem Auftragssystem 20d gemäß eines in Figur 19 dargestellten Ausführungsbeispiels, insbesondere mit einer Medienauftragsvorrichtung 10d, und/oder mit einer Medienauftragsvorrichtung 10e gemäß eines in Figur 20 dargestellten Ausführungsbeispiels verwendbar ist.

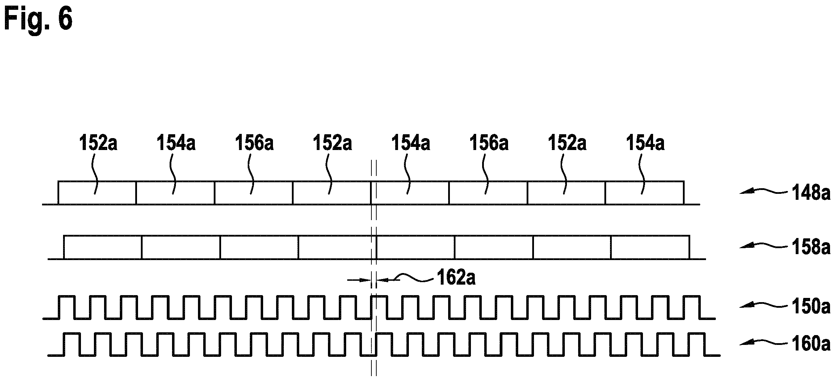

Figur 6 zeigt einen Ablauf einer Taktsynchronisierung in einer schematischen Darstellung. Die Erfassungsvorrichtung 24a ist zu einer Erfassung einer Position und/oder Ausrichtung der Medienauftragsvorrichtung 10a relativ zu der Oberfläche 14a zu einer Synchronisierung mit der Medienauftragsvorrichtung 10a mittels einer Taktsynchronisierung und/oder einer Startzeitauslösung vorgesehen. Die Erfassungsvorrichtung 24a ist zu einer Erfassung einer Position und/oder Ausrichtung der Medienauftragsvorrichtung 10a relativ zu der Oberfläche 14a zu einer drahtlosen Synchronisierung mit der Medienauftragsvorrichtung 10a mittels einer Taktsynchronisierung und/oder einer Startzeitauslösung vorgesehen. Die Erfassungsvorrichtung 24a ist zu einer Synchronisierung mit dem als ein Strahlung aussendendes Leuchtelement ausgebildeten Referenzelement 34a der Medienauftragsvorrichtung 10a vorgesehen. Durch die Synchronisierung mit dem Referenzelement 34a der Medienauftragsvorrichtung 10a kann die Erfassungsvorrichtung 24a die erfasste Position und/oder Ausrichtung der Medienauftragsvorrichtung 10a relativ zu der Oberfläche 14a der Medienauftragsvorrichtung 10a mit einem Zeitstempel bereitstellen. Die Erfassungsvorrichtung 24a kann der Elektronikeinheit 16a die erfasste Position und/oder Ausrichtung der Medienauftragsvorrichtung 10a relativ zu der Oberfläche 14a mit einem Zeitstempel bereitstellen. Der Zeitstempel ist dazu vorgesehen, der erfassten Position und/oder Ausrichtung der Medienauftragsvorrichtung 10a relativ zu der Oberfläche 14a einen eindeutigen Erfassungszeitpunkt zuzuordnen. Der Zeitstempel wird in Form von elektronischen Daten gemeinsam mit elektronischen Daten, welche die erfasste Position und/oder Ausrichtung der Medienauftragsvorrichtung 10a relativ zu der Oberfläche 14a beschreiben, an die Medienauftragsvorrichtung 10a übertragen. Der Zeitstempel wird in Form von elektronischen Daten über die weitere Kommunikationseinheit 60a der Steuer- und/oder Regeleinheit 22a an die Kommunikationseinheit 58a der Medienauftragsvorrichtung 10a übertragen. Das Referenzelement 34a der Medienauftragsvorrichtung 10a und die Erfassungsvorrichtung 24a arbeiten nach einer Synchronisierung der Erfassungsvorrichtung 24a mit dem Referenzelement 34a der Medienauftragsvorrichtung 10a taktsynchron und weisen einen gleichen Startzeitpunkt des Zeitstempels auf. Eine taktsynchrone Arbeit des Referenzelements 34a der Medienauftragsvorrichtung 10a und der Erfassungsvorrichtung 24a ist mittels einer Taktsynchronisierung erreichbar. Alternativ oder zusätzlich ist eine taktsynchrone Arbeit des Referenzelements 34a der Medienauftragsvorrichtung 10a und der Erfassungsvorrichtung 24a mittels einer Musterdetektion erreichbar. Durch die Taktsynchronisierung werden ein Arbeitstakt der Medienauftragsvorrichtung 10a, insbesondere der Elektronikeinheit 16a der Medienauftragsvorrichtung 10a, und ein Arbeitstakt der Erfassungsvorrichtung 24a synchronisiert. Der Arbeitstakt der Medienauftragsvorrichtung 10a, insbesondere der Elektronikeinheit 16a der Medienauftragsvorrichtung 10a, ist als eine Referenzfrequenz eines Taktgebers, beispielsweise eines Quartzoszillators, der Elektronikeinheit 16a der Medienauftragsvorrichtung 10a ausgebildet (hier nicht weiter dargestellt). Ein Rechentakt der Medienauftragsvorrichtung 10a, mit dem die Elektronikeinheit 16a der Medienauftragsvorrichtung 10a Berechnungen ausführt, entspricht einem Vielfachen des Arbeitstakts der Medienauftragsvorrichtung 10a. Der Arbeitstakt der Erfassungsvorrichtung 24a ist als eine Aufnahmefrequenz ausgebildet, mit der die Erfassungsvorrichtung 24a die Medienauftragsvorrichtung 10a erfasst. Der gleiche Startzeitpunkt des Zeitstempels des Referenzelements 34a der Medienauftragsvorrichtung 10a und der Erfassungsvorrichtung 24a ist mittels einer Startzeitauslösung erreichbar.

Die Erfassungsvorrichtung 24a ist zu einer Initialisierung der Synchronisierung mit der Medienauftragsvorrichtung 10a zu einer Lokalisierung der Medienauftragsvorrichtung 10a und/oder zu einer Bildisolation der Medienauftragsvorrichtung 10a von der Umgebung der Medienauftragsvorrichtung 10a vorgesehen. Die Erfassungsvorrichtung 24a lokalisiert die Medienauftragsvorrichtung 10a anhand des Referenzelements 34a der Medienauftragsvorrichtung 10a. Die Erfassungsvorrichtung 24a lokalisiert die Medienauftragsvorrichtung 10a anhand eines hellsten Bereichs des als ein eine Strahlung aussendendes Leuchtelement ausgebildeten Referenzelements 34a der Medienauftragsvorrichtung 10a. Alternativ oder zusätzlich ist denkbar, dass die Erfassungsvorrichtung 24a die Medienauftragsvorrichtung 10a mittels einer Kantendetektion und/oder anhand von Kantenübergängen des Referenzelements 34a der Medienauftragsvorrichtung 10a lokalisiert. Zu einer Bildisolation der Medienauftragsvorrichtung 10a von der Umgebung der Medienauftragsvorrichtung 10a entfernt die Erfassungsvorrichtung 24a Bildbereiche zumindest eines aufgenommenen Bilds, in welchen die Medienauftragsvorrichtung 10a nicht dargestellt ist. Die Erfassungsvorrichtung 24a beschränkt durch die Bildisolation einen zu verarbeitenden Bildbereich des aufgenommenen Bilds auf einen Bildbereich, in dem die Medienauftragsvorrichtung 10a abgebildet ist. Die Bildisolation ermöglicht eine schnelle und/oder präzise Taktsynchronisierung und Startzeitauslösung. Die Erfassungsvorrichtung 24a führt die Lokalisierung und die Bildisolation zumindest zu einer Initialisierung der Synchronisierung mit der Medienauftragsvorrichtung 10a, bevorzugt wiederholend während der Taktsynchronisierung und der Startzeitauslösung durch. Alternativ ist vorstellbar, dass die Erfassungsvorrichtung 24a die Lokalisierung ein einziges Mal während der Initialisierung der Synchronisierung mit der Medienauftragsvorrichtung 10a und die Bildisolation zusätzlich zu der Initialisierung wiederholend während der Taktsynchronisierung und der Startzeitauslösung durchführt. Es ist jedoch auch denkbar, auf die Lokalisierung und die Bildisolation zu verzichten.

Die Erfassungsvorrichtung 24a ist zu einer Realisierung der Taktsynchronisierung zu einer Erfassung eines Taktsignals der Medienauftragsvorrichtung 10a und zu einer Übertragung eines Taktfehlers an die Medienauftragsvorrichtung 10a vorgesehen. Die Erfassungsvorrichtung 24a ist zu einer Erfassung eines Taktsignals des Referenzelements 34a der Medienauftragsvorrichtung 10a und zu einer Übertragung eines Taktfehlers mittels der weiteren Kommunikationseinheit 60a der Steuer- und/oder Regeleinheit 22a an die Kommunikationseinheit 58a der Medienauftragsvorrichtung 10a vorgesehen. Die Erfassungsvorrichtung 24a und die Medienauftragsvorrichtung 10a sind zu einer Taktsynchronisierung nach einem Prinzip einer Phasenregelschleife vorgesehen. Das Referenzelement 34a der Medienauftragsvorrichtung 10a sendet ein Taktsignal aus, welches einem Arbeitstakt der Elektronikeinheit 16a der Medienauftragsvorrichtung 10a oder einem Vielfachen des Arbeitstakts der Elektronikeinheit 16a der Medienauftragsvorrichtung 10a entspricht. Das Referenzelement 34a der Medienauftragsvorrichtung 10a ist dazu vorgesehen, mit einer Blinkfrequenz entsprechend einem Arbeitstakt der Elektronikeinheit 16a der Medienauftragsvorrichtung 10a oder einem Vielfachen des Arbeitstakts der Elektronikeinheit 16a der Medienauftragsvorrichtung 10a zu blinken. Das ausgesandte Taktsignal ist in einer ersten Zeile 148a und in einer dritten Zeile 150a dargestellt. Das Referenzelement 34a der Medienauftragsvorrichtung 10a ist dazu vorgesehen, ein frequenzkodiertesTaktsignal auszusenden. Das Referenzelement 34a der Medienauftragsvorrichtung 10a ist dazu vorgesehen, ein mehrfarbiges Taktsignal auszusenden. Alternativ oder zusätzlich ist denkbar, dass das Referenzelement 34a der Medienauftragsvorrichtung 10a, insbesondere eine Mehrzahl von als Strahlung aussendende Leuchtelemente ausgebildete Referenzelemente 34a der Medienauftragsvorrichtung 10a, dazu vorgesehen ist, ein örtliches Muster auszusenden. Das in Figur 6 dargestellte Taktsignal weist drei verschiedene Strahlungsfrequenzen bzw. Farben auf. Das Taktsignal kann jedoch beliebig viele Strahlungsfrequenzen bzw. Farben aufweisen. In einer ersten Strahlungsphase 152a sendet das Referenzelement 34a der Medienauftragsvorrichtung 10a eine erste Strahlungsfrequenz bzw. Farbe aus, beispielsweise Rot. In einer zweiten Strahlungsphase 154a sendet das Referenzelement 34a der Medienauftragsvorrichtung 10a eine zweite Strahlungsfrequenz bzw. Farbe aus, beispielsweise Grün. In einer dritten Strahlungsphase 156a sendet das Referenzelement 34a der Medienauftragsvorrichtung 10a eine dritte Strahlungsfrequenz bzw. Farbe aus, beispielsweise Blau. Eine Strahlungsphase 152a, 154a, 156a entspricht jeweils drei Taktschlägen der Elektronikeinheit 16a. Die Erfassungsvorrichtung 24a ist dazu vorgesehen, das von dem Referenzelement 34a der Medienauftragsvorrichtung 10a ausgesandte Taktsignal zu erfassen. Das erfasste Taktsignal ist in einer zweiten Zeile 158a und in einer vierten Zeile 160a dargestellt. Die Erfassungsvorrichtung 24a kann nach einer Erfassung des Taktsignals eine Lokalisierung der Medienauftragsvorrichtung 10a und/oder eine Bildisolation der Medienauftragsvorrichtung 10a von der Umgebung der Medienauftragsvorrichtung 10a durchführen. Alternativ ist denkbar, dass die Erfassungsvorrichtung 24a die Lokalisierung und/oder die Bildisolation lediglich in einer Initialisierung vor der Taktsynchronisierung durchführt. Die Erfassungsvorrichtung 24a ist dazu vorgesehen, das erfasste Taktsignal des Referenzelements 34a der Medienauftragsvorrichtung 10a mit einem Takt der Erfassungsvorrichtung 24a zu vergleichen. Die Erfassungsvorrichtung 24a kann anhand eines Vergleichs des erfassten Taktsignals der Medienauftragsvorrichtung 10a mit dem Takt der Erfassungsvorrichtung 24a einen Taktfehler ermitteln. Der Taktfehler ist anhand einer Verschiebung 162a zwischen dem ausgesandten und dem erfassten Taktsignal dargestellt. Die Erfassungsvorrichtung 24a ist dazu vorgesehen, den ermittelten Taktfehler mit einem Taktfehlermaximalwert zu vergleichen. Der Taktfehlermaximalwert kann in einer Speichereinheit der Steuer- und/oder Regeleinheit 22a hinterlegt sein. Die Erfassungsvorrichtung 24a ist bei einem Taktfehler kleiner als der Taktfehlermaximalwert dazu vorgesehen, die Startzeitauslösung durchzuführen. Die Erfassungsvorrichtung 24a ist bei einem Taktfehler größer als der Taktfehlermaximalwert dazu vorgesehen, den Taktfehler an die Medienauftragsvorrichtung 10a zu übertragen. Die Erfassungsvorrichtung 24a ist dazu vorgesehen, den Taktfehler über die weitere Kommunikationseinheit 60a der Steuer- und/oder Regeleinheit 22a an die Kommunikationseinheit 58a der Medienauftragsvorrichtung 10a zu übertragen. Alternativ ist denkbar, dass die Erfassungsvorrichtung 24a zu einer Übertragung eines invertierten Taktfehlers an die Medienauftragsvorrichtung 10a vorgesehen ist. Vorzugsweise ist die Medienauftragsvorrichtung 10a dazu vorgesehen, den invertierten Taktfehler zu einer Weiterverarbeitung zurückzubilden. Die Elektronikeinheit 16a der Medienauftragsvorrichtung 10a ist dazu vorgesehen, den invertierten Taktfehler zurückzubilden. Die Erfassungsvorrichtung 24a ist bei einem dem Takt der Erfassungsvorrichtung 24a vorauseilenden Taktsignal des Referenzelements 34a der Medienauftragsvorrichtung 10a zu einer Übertragung eines negativen Taktfehlersignals an die Medienauftragsvorrichtung 10a vorgesehen. Die Erfassungsvorrichtung 24a ist bei einem dem Takt der Erfassungsvorrichtung 24a nacheilenden Taktsignal des Referenzelements 34a der Medienauftragsvorrichtung 10a zu einer Übertragung eines positiven Taktfehlersignals an die Medienauftragsvorrichtung 10a vorgesehen.

Die Elektronikeinheit 16a der Medienauftragsvorrichtung 10a ist dazu vorgesehen, den Arbeitstakt der Elektronikeinheit 16a bzw. das Taktsignal des Referenzelements 34a der Medienauftragsvorrichtung 10a in Abhängigkeit von dem übertragenen Taktfehlersignal anzupassen. Die Elektronikeinheit 16a ist dazu vorgesehen, den Arbeitstakt der Elektronikeinheit 16a bzw. das Taktsignal des Referenzelements 34a der Medienauftragsvorrichtung 10a in Abhängigkeit von einem negativen Taktfehlersignal zu verzögern. Die Elektronikeinheit 16a ist dazu vorgesehen, den Arbeitstakt der Elektronikeinheit 16a bzw. das Taktsignal des Referenzelements 34a der Medienauftragsvorrichtung 10a in Abhängigkeit von einem positiven Taktfehlersignal zu beschleunigen. Das Referenzelement 34a der Medienauftragsvorrichtung 10a ist dazu vorgesehen, ein angepasstes Taktsignal auszusenden. Die Taktsynchronisierung wiederholt bis der ermittelte Taktfehler kleiner als der Taktfehlermaximalwert ist.

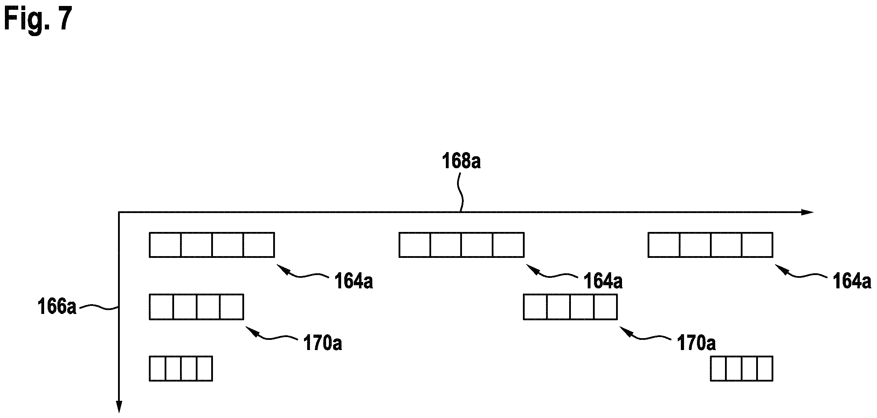

Figur 7 zeigt einen Ablauf einer Startzeitauslösung in einer schematischen Darstellung. Die Medienauftragsvorrichtung 10a ist zu einer Realisierung der Startzeitauslösung zu einer Generierung eines Signalmusters 164a vorgesehen. Das Referenzelement 34a der Medienauftragsvorrichtung 10a ist zu der Startzeitauslösung zu einer Generierung des Signalmusters 164a vorgesehen. Das Signalmuster 164a des Referenzelements 34a der Medienauftragsvorrichtung 10a ist als ein Farbmuster ausgebildet. Alternativ ist denkbar, dass das Signalmuster 164a als ein Schaltmuster, als ein strahlungsmoduliertes Muster, als ein örtliches Muster o. dgl. ausgebildet ist. Das Referenzelement 34a der Medienauftragsvorrichtung 10a ist zu Beginn der Startzeitauslösung zu einer Generierung eines Signalmusters 164a mit einer großen Musterbreite und mit einem kleinen Musterperiodenabstand vorgesehen. Das Referenzelement 34a der Medienauftragsvorrichtung 10a ist dazu vorgesehen, im Laufe der Startzeitauslösung die Musterbreite des Signalmusters 164a zu verringern und den Musterperiodenabstand des Signalmusters 164a zu erhöhen. Eine Zeitdauer der Startzeitauslösung ist auf einer Ordinatenachse 166a angetragen. Eine Zeitdauer zu einer Aussendung des Signalmusters 164a ist auf einer Abszissenachse 168a angetragen. Die Erfassungsvorrichtung 24a ist dazu vorgesehen, das Signalmuster 164a zu erfassen. Die Erfassungsvorrichtung 24a kann nach einer Erfassung des Signalmusters 164a eine Lokalisierung der Medienauftragsvorrichtung 10a und/oder eine Bildisolation der Medienauftragsvorrichtung 10a von der Umgebung der Medienauftragsvorrichtung 10a durchführen. Alternativ ist denkbar, dass die Erfassungsvorrichtung 24a die Lokalisierung und/oder die Bildisolation lediglich in einer Initialisierung vor der Taktsynchronisierung durchführt. Die Erfassungsvorrichtung 24a ist dazu vorgesehen, das erfasste Signalmuster 164a zu erkennen und einen Startpunkt des Zeitstempels in Abhängigkeit von dem Signalmuster 164a anzupassen. Die Erfassungsvorrichtung 24a ist dazu vorgesehen, den Musterperiodenabstand des erfassten Signalmusters 164a mit einem Musterperiodenabstandsminimalwert zu vergleichen. Der Musterperiodenabstandsminimalwert kann in der Speichereinheit der Steuer- und/oder Regeleinheit 22a hinterlegt sein. In Abhängigkeit von einem Vergleich des Musterperiodenabstands des erfassten Signalmusters 164a mit dem Musterperiodenabstandsminimalwert ist die Erfassungsvorrichtung 24a dazu vorgesehen, ein Signal an die Medienauftragsvorrichtung 10a zu übertragen. Die Erfassungsvorrichtung 24a ist dazu vorgesehen, das Signal über die weitere Kommunikationseinheit 60a der Steuer- und/oder Regeleinheit 22a an die Kommunikationseinheit 58a der Medienauftragsvorrichtung 10a zu übertragen. Bei einem Musterperiodenabstand des erfassten Signalmusters 164a größer als der Musterperiodenabstandsminimalwert ist die Erfassungsvorrichtung 24a zu einer Übertragung eines Startsignals an die Medienauftragsvorrichtung 10a vorgesehen. Das Startsignal signalisiert der Elektronikeinheit 16a der Medienauftragsvorrichtung 10a, bei einer Aussendung eines folgenden Signalmusters 170a einen Zähler zu einer Erzeugung des Zeitstempels zu starten. Bei einem Musterperiodenabstand des erfassten Signalmusters 164a kleiner als der Musterperiodenabstandsmaximalwert ist die Erfassungsvorrichtung 24a zu einer Übertragung eines Wiederholungssignals an die Medienauftragsvorrichtung 10a vorgesehen. Das Wiederholungssignal signalisiert der Elektronikeinheit 16a der Medienauftragsvorrichtung 10a, eine Musterbreite eines folgenden auszusendenden Signalmusters 170a kleiner einzustellen als die Musterbreite des erfassten Signalmusters 164a. Das Wiederholungssignal signalisiert der Elektronikeinheit 16a der Medienauftragsvorrichtung 10a, einen Musterperiodenabstand des folgenden auszusendenden Signalmusters 170a größer einzustellen als den Musterperiodenabstand des erfassten Signalmusters 164a. Vorzugsweise wird die Startzeitauslösung so lange wiederholt bis ein Musterperiodenabstand eines erfassten Signalmusters 164a, 170a größer ist als der Musterperiodenabstandsminimalwert.

Die Erfassungsvorrichtung 24a und/oder die Elektronikeinheit 16a der Medienauftragsvorrichtung 10a sind/ist während der Synchronisierung der Erfassungsvorrichtung 24a mit der Medienauftragsvorrichtung 10a zu einer Intensitätsregelung des Referenzelements 34a der Medienauftragsvorrichtung 10a vorgesehen. Die Erfassungsvorrichtung 24a und/oder die Elektronikeinheit 16a sind/ist zu einer Intensitätsregelung des Referenzelements 34a der Medienauftragsvorrichtung 10a in Abhängigkeit von Umgebungsbedingungen der Medienauftragsvorrichtung 10a und/oder der Erfassungsvorrichtung 24a, wie beispielsweise einer Umgebungslichtintensität, Interferenzen o. dgl., vorgesehen. Die Erfassungsvorrichtung 24a kann eine erfasste Intensität des Referenzelements 34a der Medienauftragsvorrichtung 10a durch eine Anpassung einer Erfassungsempfindlichkeit der Erfassungsvorrichtung 24a regeln. Die Elektronikeinheit 16a der Medienauftragsvorrichtung 10a kann eine ausgestrahlte Intensität des Referenzelements 34a der Medienauftragsvorrichtung 10a durch eine Einstellung einer Leistung des Referenzelements 34a der Medienauftragsvorrichtung 10a regeln. Durch die Intensitätsregelung des Referenzelements 34a der Medienauftragsvorrichtung 10a können eine hohe Positionsgenauigkeit der Medienauftragsvorrichtung 10a und eine hohe Genauigkeit der Synchronisierung der Erfassungsvorrichtung 24a mit der Medienauftragsvorrichtung 10a erreicht werden.

Eine Mehrzahl von Erfassungsvorrichtungen 24a der Steuer- und/oder Regeleinheit 22a und/oder Erfassungsvorrichtungen 24a einer Mehrzahl von Steuer- und/oder Regeleinheiten 22a können zu einer Synchronisierung mit der Medienauftragsvorrichtung 10a mittels einer Taktsynchronisierung und/oder einer Startzeitauslösung vorgesehen sein. Die Erfassungsvorrichtung 24a kann zu einer Synchronisierung mit einer Mehrzahl von Medienauftragsvorrichtungen 10a mittels einer Taktsynchronisierung und/oder einer Startzeitauslösung vorgesehen sein. Eine Mehrzahl von Erfassungsvorrichtungen 24a der Steuer- und/oder Regeleinheit 22a und/oder Erfassungsvorrichtungen 24a einer Mehrzahl von Steuer- und/oder Regeleinheiten 22a können zu einer Synchronisierung mit einer Mehrzahl von Medienauftragsvorrichtungen 10a mittels einer Taktsynchronisierung und/oder einer Startzeitauslösung vorgesehen sein. Die weitere Kommunikationseinheit 60a der Steuer- und/oder Regeleinheit 22a kann für jede der Mehrzahl von Medienauftragsvorrichtungen 10a einen separaten Kommunikationskanal aufweisen. Die Kommunikationseinheit 58a der Medienauftragsvorrichtung 10a kann für jede der Mehrzahl von Erfassungsvorrichtungen 24a einen separaten Kommunikationskanal aufweisen. Eine der Mehrzahl von Erfassungsvorrichtungen 24a kann als eine Haupterfassungsvorrichtung ausgebildet sein, welche zu einer Synchronisierung mit der Medienauftragsvorrichtung 10a oder der Mehrzahl von Medienauftragsvorrichtungen 10a vorgesehen ist. Weitere der Mehrzahl von Erfassungsvorrichtungen 24a können als Nebenerfassungsvorrichtungen ausgebildet sein, welche eine Startzeit von der Haupterfassungsvorrichtung beziehen. Die Nebenerfassungsvorrichtungen sind bei einer Kommunikation mit der Medienauftragsvorrichtung 10a zu einer Berücksichtigung einer Phasendifferenz zwischen einem erfassten Signal und einem durch die Haupterfassungsvorrichtung erfassten Signal vorgesehen. Mittels einer Mehrzahl von Erfassungsvorrichtungen 24a kann eine Robustheit einer Positions- und/oder Ausrichtungserfassung der Medienauftragsvorrichtung 10a relativ zu der Oberfläche 14a im Vergleich zu einer Positions- und/oder Ausrichtungserfassung mittels einer einzelnen Erfassungsvorrichtung 24a erhöht und/oder eine absolute räumliche Positions- und/oder Ausrichtungserfassung der Medienauftragsvorrichtung 10a ermöglicht werden.

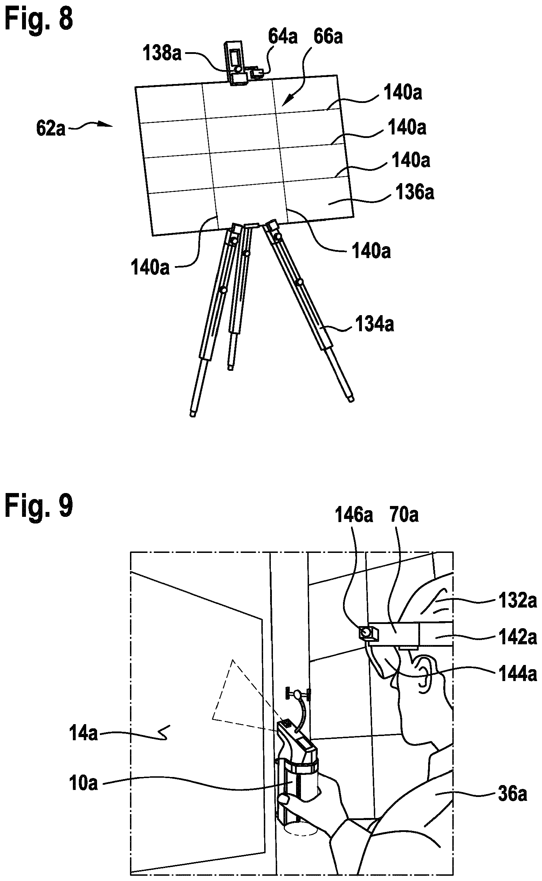

Figur 8 zeigt eine Staffelei- und/oder Leinwandvorrichtung 62a in einer perspektivischen Darstellung. Die Staffelei- und/oder Leinwandvorrichtung 62a umfasst eine Staffeleieinheit 134a und eine Leinwandeinheit 136a. Die Staffeleieinheit 134a ist zu einer Aufnahme der Leinwandeinheit 136a vorgesehen. Die Leinwandeinheit 136a ist an der Staffeleieinheit 134a angeordnet. Die Staffeleieinheit 134a weist ein verstellbares Aufnahmeelement 138a zu einer Aufnahme der Leinwandeinheit 136a auf. Auf der Leinwandeinheit 136a wird ein Medienauftrag mittels der nicht weiter dargestellten Medienauftragsvorrichtung 10a erstellt.

Die Staffelei- und/oder Leinwandvorrichtung 62a weist eine Sensor- und/oder Markereinheit 64a auf. Die Sensor- und/oder Markereinheit 64a ist an dem Aufnahmeelement 138a der Staffeleieinheit 134a angeordnet. Alternativ ist vorstellbar, dass die Sensor- und/oder Markereinheit 64a an der Leinwandeinheit 136a angeordnet ist. Die Sensor- und/oder Markereinheit 64a ist dazu vorgesehen, eine Position und/oder Ausrichtung der Medienauftragsvorrichtung 10a relativ zu der Staffelei- und/oder Leinwandvorrichtung 62a zu erfassen. Die Sensor- und/oder Markereinheit 64a kann die Position und/oder Ausrichtung der Medienauftragsvorrichtung 10a relativ zu der Staffelei- und/oder Leinwandvorrichtung 62a anhand des Referenzelements 34a der Medienauftragsvorrichtung 10a erfassen. Die Sensor- und/oder Markereinheit 64a ist als eine Kamera ausgebildet. Alternativ ist vorstellbar, dass die Sensor- und/oder Markereinheit 64a als eine optische, als eine elektromagnetische, als eine akustische oder als eine mechanische Sensor- und/oder Markereinheit ausgebildet ist.

Die Staffelei- und/oder Leinwandvorrichtung 62a weist eine Benutzerführungseinheit 66a auf. Die Benutzerführungseinheit 66a ist dazu vorgesehen, den Benutzer 36a bei einer Erstellung eines Medienauftrags auf der Staffelei- und/oder Leinwandvorrichtung 62a zu führen. Die Benutzerführungseinheit 66a umfasst sechs Benutzerführungselemente 140a. Die Benutzerführungselemente 140a sind auf einer Hinterseite, auf die eine Medienausgabe ausbleibt, der Leinwandeinheit 136a angeordnet. Die Benutzerführungselemente 140a sind als Leuchtstreifenelemente ausgebildet. Die Benutzerführungselemente 140a scheinen durch die Leinwandeinheit 136a hindurch. Die Benutzerführungselemente 140a bilden zu einer Führung des Benutzers 36a ein Leuchtraster auf der Leinwandeinheit 136a. Alternativ ist vorstellbar, dass die Benutzerführungselemente 140a als Akustikelemente ausgebildet sind.

Vorzugsweise ist die Staffelei- und/oder Leinwandvorrichtung 62a zu einer Nutzung in einem Auftragssystem 20a gemäß eines in Figur 5 gezeigten Ausführungsbeispiels, insbesondere mit einer Medienauftragsvorrichtung 10a, vorgesehen. Es ist aber auch denkbar, dass die Staffelei- und/oder Leinwandvorrichtung 62a in einem Auftragssystem 20b gemäß eines in Figur 10 dargestellten Ausführungsbeispiels, insbesondere mit einer Medienauftragsvorrichtung 10b, in einem Auftragssystem 20c gemäß eines in Figur 14 dargestellten Ausführungsbeispiels, insbesondere mit einer Medienauftragsvorrichtung 10c, in einem Auftragssystem 20d gemäß eines in Figur 19 dargestellten Ausführungsbeispiels, insbesondere mit einer Medienauftragsvorrichtung 10d, und/oder mit einer Medienauftragsvorrichtung 10e gemäß eines in Figur 20 dargestellten Ausführungsbeispiels verwendbar ist.

Figur 9 zeigt eine Erweiterte-Realitätsvorrichtung 70a in einer perspektivischen Darstellung. Der Benutzer 36a trägt die Erweiterte-Realitätsvorrichtung 70a mittels einer Kopfhalterungseinheit 142a der Erweiterten-Realitätsvorrichtung 70a auf dem Kopf 132a. Die Erweiterte-Realitätsvorrichtung 70a ist dazu vorgesehen, dem Benutzer 36a eine Erweiterte-Realität-Erfahrung bei einem Medienauftragsprozess bereitzustellen. Die Erweiterte-Realitätsvorrichtung 70a ist als eine AR-Brille ausgebildet. Der Benutzer 36a trägt die Erweiterte-Realitätsvorrichtung 70a während eines Medienauftrags auf die Oberfläche 14a mittels der Medienauftragsvorrichtung 10a.

Die Erweiterte-Realitätsvorrichtung 70a weist eine Bildschirmeinheit 144a auf. Die Bildschirmeinheit 144a ist an der Kopfhalterungseinheit 142a angeordnet. Der Benutzer 36a blickt während des Medienauftrags in die Bildschirmeinheit 144a. Die Erweiterte-Realitätsvorrichtung 70a weist eine als eine Kamera ausgebildete Erfassungseinheit 146a zu einer Erfassung der Oberfläche 14a auf. In der Bildschirmeinheit 144a wird ein mittels der Erfassungseinheit 146a erfasstes Livebild der Oberfläche 14a angezeigt. Zusätzlich zu dem Livebild der Oberfläche 14a werden in der Bildschirmeinheit 144a virtuelle Gegenstände wie beispielsweise eine Vorschau auf ein fertig gestelltes Motiv und Informationen wie beispielsweise eine zu erwartende Restdauer des Medienauftrags angezeigt. Die virtuellen Gegenstände werden proportional korrekt über das Livebild überlagert. Zu einer Kommunikation mit der Medienauftragsvorrichtung 10a und/oder mit der Steuer- und/oder Regeleinheit 22a weist die Erweiterte-Realitätsvorrichtung 70a eine nicht weiter dargestellte Kommunikationseinheit auf. Die Kommunikationseinheit ist als eine drahtlose Kommunikationseinheit mit einer Latenzzeit von weniger als 30 ms ausgebildet.

Vorzugsweise ist die Erweiterte-Realitätsvorrichtung 70a zu einer Nutzung in einem Auftragssystem 20a gemäß eines in Figur 5 gezeigten Ausführungsbeispiels, insbesondere mit einer Medienauftragsvorrichtung 10a, vorgesehen. Es ist aber auch denkbar, dass die Erweiterte-Realitätsvorrichtung 70a in einem Auftragssystem 20b gemäß eines in Figur 10 dargestellten Ausführungsbeispiels, insbesondere mit einer Medienauftragsvorrichtung 10b, in einem Auftragssystem 20c gemäß eines in Figur 14 dargestellten Ausführungsbeispiels, insbesondere mit einer Medienauftragsvorrichtung 10c, in einem Auftragssystem 20d gemäß eines in Figur 19 dargestellten Ausführungsbeispiels, insbesondere mit einer Medienauftragsvorrichtung 10d, und/oder mit einer Medienauftragsvorrichtung 10e gemäß eines in Figur 20 dargestellten Ausführungsbeispiels verwendbar ist.

Im Folgenden wird ein Verfahren zum Betrieb des Auftragssystems 20a beschrieben. In zumindest einem Verfahrensschritt wird eine Vorlagenauflösung eines pixelbasierten Sollbilds auf eine Arbeitsauflösung umgerechnet. In zumindest einem weiteren Verfahrensschritt wird das pixelbasierte Sollbild unter Anwendung eines Dithering-Algorithmus und/oder eines Kantenglättungsalgorithmus in ein auftragspunktbasiertes Sollbild umgewandelt. In zumindest einem weiteren Verfahrensschritt wird anhand des auftragspunktbasierten Sollbilds ein Fehlerbild simuliert und dem Benutzer 36a angezeigt. In zumindest einem weiteren Verfahrensschritt wird das auftragspunktbasierte Sollbild anhand einer Benutzereingabe neu berechnet. In zumindest einem weiteren Verfahrensschritt wird anhand des auftragspunktbasierten Sollbilds eine Medienauftragsstrategie berechnet. In zumindest einem weiteren Verfahrensschritt wird eine erfasste Position und/oder Ausrichtung der Medienauftragsvorrichtung 10a relativ zu der Oberfläche 14a zu einer späteren Verwendung, insbesondere zu einer Startpunktwiederfindung nach einer Unterbrechung eines Medienauftragsprozesses, gespeichert.

Hinsichtlich weiterer Verfahrensschritte des Verfahrens zum Betrieb des Auftragssystems 20a darf auf die vorhergehende Beschreibung des Auftragssystems 20a verwiesen werden, da diese Beschreibung analog auch auf das Verfahren zu lesen ist und somit alle Merkmale hinsichtlich des Auftragssystems 20a auch in Bezug auf das Verfahren zum Betrieb des Auftragssystems 20a als offenbart gelten.

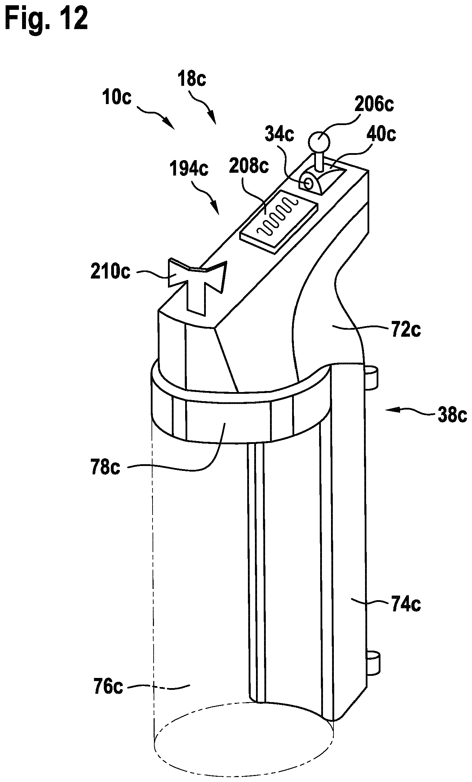

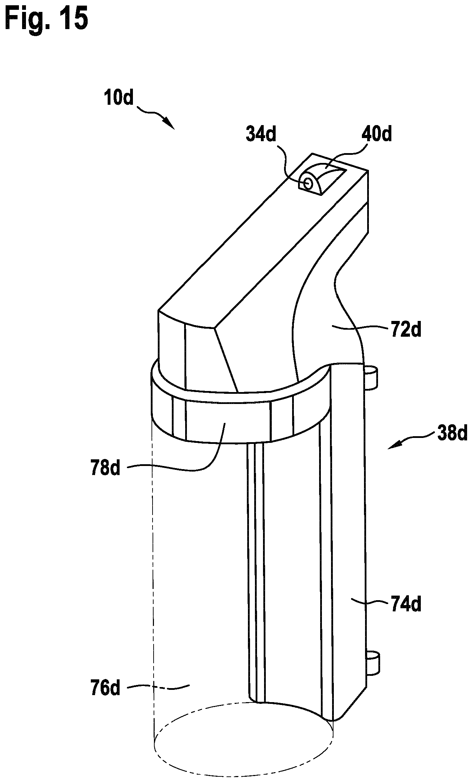

Zudem ist auch denkbar, dass Verfahrensschritte des Verfahrens mit Bezug auf das in den Figuren 1 bis 9 dargestellte Ausführungsbeispiel mit Verfahrensschritten von Verfahren mit Bezug auf weitere Ausführungsbeispiele, insbesondere auf das in den Figuren 12 bis 14 dargestellte Ausführungsbeispiel und/oder auf das in den Figuren 15 bis 19 dargestellte Ausführungsbeispiel, kombinierbar sind, insbesondere in einer einem Fachmann als sinnvoll erscheinenden Reihenfolge.

In den Figuren 10 bis 21 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 9, verwiesen werden kann. Zur Unterscheidung der Ausführungsbeispiele ist der Buchstabe a den Bezugszeichen des Ausführungsbeispiels in den Figuren 1 bis 9 nachgestellt. In den Ausführungsbeispielen der Figuren 10 bis 21 ist der Buchstabe a durch die Buchstaben b bis e ersetzt.

Figur 10 zeigt ein alternatives Auftragssystem 20b in einer schematischen Darstellung. Das Auftragssystem 20b umfasst eine Medienauftragsvorrichtung 10b. Die Medienauftragsvorrichtung 10b umfasst eine nicht weiter dargestellte Medienausgabeeinheit zu einer Ausgabe eines Mediums auf eine nicht weiter dargestellte Oberfläche und eine nicht weiter dargestellte Elektronikeinheit zu einer Steuerung und/oder Regelung der Medienausgabeeinheit. Hinsichtlich struktureller Merkmale der Medienausgabeeinheit und der Elektronikeinheit der Medienauftragsvorrichtung 10b darf auf die Medienausgabeeinheit 12a und auf die Elektronikeinheit 16a der Medienauftragsvorrichtung 10a des ersten Ausführungsbeispiels verwiesen werden. Das Auftragssystem 20b umfasst eine Elektronikmoduleinheit 172b. Die Elektronikmoduleinheit 172b ist zu einer ladefremden Funktionserweiterung der Medienauftragsvorrichtung 10b elektronisch mit der Elektronikeinheit koppelbar. Die Elektronikmoduleinheit 172b ist eine austauschbare Einheit, welche zumindest ein elektronisches Bauteil umfasst, bevorzugt zu einer Bündelung verschiedener elektronischer Bauteile in einem einzigen Modul vorgesehen ist und die vorzugsweise werkzeugfrei mit der Medienauftragsvorrichtung 10b verbindbar und von der Medienauftragsvorrichtung 10b lösbar ausgebildet ist. Die Elektronikmoduleinheit 172b ist mit von der Medienauftragsvorrichtung 10b verschiedenen Geräten, beispielhaft Werkzeugmaschinen, einsetzbar. Die Elektronikmoduleinheit 172b kann als ein Steuerungs- und/oder Regelungsmodul, wie beispielsweise als Mikrocontroller, als integrierter Schaltkreis o. dgl., als ein Sensormodul, wie beispielsweise als ein Feuchtigkeitssensor, als ein Temperatursensor, als ein Beschleunigungssensor, als ein Gyrosensor o. dgl., als ein Positionierungsmodul, wie beispielsweise als ein Leuchtelement, als ein Radarsender o. dgl., als ein Ausgabemodul, wie beispielsweise als eine Status-LED, als ein Bildschirm, als ein Lautsprecher o. dgl., als ein Eingabemodul, wie beispielsweise als ein Touch-Bildschirm, als ein Bedienknopf, als ein Mikrofon o. dgl. oder als eine andere, einem Fachmann als sinnvoll erscheinende Elektronikmoduleinheit 172b ausgebildet sein. Die Elektronikmoduleinheit 172b ist als ein austauschbares Modul ausgebildet, welches Funktionalitäten einer Mehrzahl von verschiedenen Modulen umfasst. Die Elektronikmoduleinheit 172b weist eine Modulgehäuseeinheit 174b auf. Die Modulgehäuseeinheit 174b ist lösbar verbindbar mit einem Gehäuse 38b der Medienauftragsvorrichtung 10b ausgebildet. Das Gehäuse 38b weist eine Aufnahmeeinheit 176b zu einer Anbindung der Elektronikmoduleinheit 172b an die Medienauftragsvorrichtung 10b auf. Die Aufnahmeeinheit 176b ist zu einer mechanischen Anbindung der Modulgehäuseeinheit 174b an das Gehäuse 38b vorgesehen. Die Aufnahmeeinheit 176b weist einen nicht weiter dargestellten Arretiermechanismus zu einer verliersicheren Arretierung der Elektronikmoduleinheit 172b an und/oder in der Medienauftragsvorrichtung 10b auf. Die Medienauftragsvorrichtung 10b und die Elektronikmoduleinheit 172b umfassen elektrische Kontaktelemente 178b. Die elektrischen Kontaktelemente der Elektronikmoduleinheit 172b sind nicht weiter dargestellt. Die elektrischen Kontaktelemente 178b sind zu einer elektronischen Kopplung der Elektronikmoduleinheit 172b mit der Medienauftragsvorrichtung 10b vorgesehen. Die elektrischen Kontaktelemente 178b sind zu einer elektronischen Kopplung einer Elektronikeinheit 180b der Elektronikmoduleinheit 172b mit der Elektronikeinheit der Medienauftragsvorrichtung 10b vorgesehen. Die elektrischen Kontaktelemente 178b sind in einer an und/oder in der Medienauftragsvorrichtung 10b angeordneten Stellung der Elektronikmoduleinheit 172b elektrisch leitend miteinander verbunden. Über die elektrischen Kontaktelemente 178b können elektrische Energie, elektrische und/oder elektronische Signale zwischen der Elektronikmoduleinheit 172b und der Medienauftragsvorrichtung 10b übertragen werden. Mittels der Elektronikmoduleinheit 172b kann eine Funktionalität der Medienauftragsvorrichtung 10b erweitert werden. Die Elektronikmoduleinheit 172b ist zu einer Funktionserweiterung der Medienauftragsvorrichtung 10b vorgesehen, welche über eine reine Energieversorgung der Medienauftragsvorrichtung 10b, beispielsweise zu einer Ladung einer Energiespeichereinheit der Medienauftragsvorrichtung 10b, hinausgeht. Zu einer Funktionserweiterung der Medienauftragsvorrichtung 10b umfasst die Elektronikmoduleinheit 172b verschiedene Bauteile, die an und/oder innerhalb der Modulgehäuseeinheit 174b angeordnet sind.

Die Elektronikmoduleinheit 172b umfasst zumindest eine Modulenergiespeichereinheit 182b. Die Modulenergiespeichereinheit 182b ist zu einer Energieversorgung der Bauteile mit elektrischer Energie vorgesehen. Die Modulenergiespeichereinheit 182b ist als ein Akkumulator ausgebildet. Alternativ ist denkbar, dass die Modulenergiespeichereinheit 182b als eine Batterie, als ein Speicherkondensator, als eine Netzversorgung o. dgl. ausgebildet ist. Die Modulenergiespeichereinheit 182b ist zusätzlich zu einer Energieversorgung der Medienauftragsvorrichtung 10b vorgesehen. Die Medienauftragsvorrichtung 10b ist frei von einer eigenen Energiespeichereinheit ausgebildet. Alternativ ist denkbar, dass die Medienauftragsvorrichtung 10b eine Energiespeichereinheit umfasst, die zu einer Energieversorgung einer frei von der Modulenergiespeichereinheit 182b ausgebildeten Elektronikmoduleinheit 172b vorgesehen ist. Die Elektronikmoduleinheit 172b umfasst ein weiteres Referenzelement 184b der Medienauftragsvorrichtung 10b. Das weitere Referenzelement 184b der Medienauftragsvorrichtung 10b ist analog zu dem Referenzelement 34a der Medienauftragsvorrichtung 10a des ersten Ausführungsbeispiels ausgebildet. Die Medienauftragsvorrichtung 10b ist referenzelementfrei ausgebildet. Die Elektronikmoduleinheit 172b umfasst eine weitere Positions- und/oder Oberflächensensoreinheit 186b. Die weitere Positions- und/oder Oberflächensensoreinheit 186b ist zumindest im Wesentlichen analog zu der Positions- und/oder Oberflächensensoreinheit 18a der Medienauftragsvorrichtung 10a des ersten Ausführungsbeispiels ausgebildet. Die Medienauftragsvorrichtung 10b ist positions- und/oder oberflächensensoreinheitsfrei ausgebildet. Die Elektronikmoduleinheit 172b kann weitere nicht weiter dargestellte Sensoreinheiten, wie beispielsweise einen Feuchtigkeitssensor, einen Akustiksensor, ein Magnetometer, einen Temperatursensor, einen Tageslichtsensor o. dgl., aufweisen.

Die Elektronikmoduleinheit 172b umfasst eine Modulkommunikationseinheit 188b zu einem Austausch von elektronischen Daten mit einer nicht weiter dargestellten Steuer- und/oder Regeleinheit und/oder mit einer nicht weiter dargestellten weiteren externen Einheit. Die Modulkommunikationseinheit 188b ist als eine drahtlose Kommunikationseinheit ausgebildet. Die Modulkommunikationseinheit 188b ist zumindest im Wesentlichen analog zu den Kommunikationseinheiten 58a, 60a der Medienauftragsvorrichtung 10a und der Steuer- und/oder Regeleinheit 22a des ersten Ausführungsbeispiels ausgebildet. Die Medienauftragsvorrichtung 10b ist kommunikationseinheitsfrei ausgebildet. Die Elektronikmoduleinheit 172b weist eine Elektronikeinheit 180b zu einer Steuerung und/oder Regelung der Medienauftragsvorrichtung 10b und der Bauteile der Elektronikmoduleinheit 172b auf. Die Elektronikeinheit 180b der Elektronikmoduleinheit 172b ist zumindest im Wesentlichen analog zu der Elektronikeinheit 16a der Medienauftragsvorrichtung 10a des ersten Ausführungsbeispiels ausgebildet. Die Elektronikeinheit 180b der Elektronikmoduleinheit 172b umfasst eine Speichereinheit. Die Speichereinheit der Elektronikeinheit 180b der Elektronikmoduleinheit 172b umfasst einen Flash-Speicher und einen RAM-Speicher. Alternativ oder zusätzlich ist vorstellbar, dass die Elektronikmoduleinheit 172b zu einer Funktions- und/oder Speichererweiterung der Elektronikeinheit 180b der Elektronikmoduleinheit 172b eine Speichererweiterungseinheit aufweist. Die Speichererweiterungseinheit kann als ein Steckplatz für Speicherkarten, wie beispielsweise SD-Karten, Micro-SD-Karten, CF-Karten, XQD-Karten o. dgl., als ein USB-Steckplatz o. dgl. ausgebildet sein. Die Elektronikeinheit 180b der Elektronikmoduleinheit 172b kann die Medienauftragsvorrichtung 10b, insbesondere die Medienausgabeeinheit der Medienauftragsvorrichtung 10b, und die Bauteile der Elektronikmoduleinheit 172b steuern und/oder regeln. Alternativ ist denkbar, dass die Elektronikeinheit 180b der Elektronikmoduleinheit 172b lediglich zu einer Steuerung und/oder Regelung der Bauteile der Elektronikmoduleinheit 172b vorgesehen ist und dass die Elektronikeinheit der Medienauftragsvorrichtung 10b zu einer Steuerung- und/oder Regelung der Bauteile der Medienauftragsvorrichtung 10b, insbesondere der Medienausgabeeinheit, vorgesehen ist.

Die Elektronikmoduleinheit 172b umfasst eine Nutzerinteraktionseinheit 190b. Die Nutzerinteraktionseinheit 190b ist zu einer Realisierung einer optischen Interaktion mit einem nicht weiter dargestellten Benutzer vorgesehen. Alternativ ist denkbar, dass die Nutzerinteraktionseinheit 190b zu einer akustischen und/oder haptischen Interaktion mit dem Benutzer vorgesehen ist. Die Nutzerinteraktionseinheit 190b weist zu einer Realisierung einer optischen Interaktion mit dem Benutzer ein optisches Interaktionselement 192b auf. Das optische Interaktionselement 192b ist als ein Leuchtelement ausgebildet. Das optische Interaktionselement 192b ist als ein programmierbares Leuchtelement ausgebildet. Das optische Interaktionselement 192b ist als eine farbige LED ausgebildet. Das optische Interaktionselement 192b ist zu einer Statusanzeige der Elektronikmoduleinheit 172b vorgesehen. Alternativ ist vorstellbar, dass das optische Interaktionselement 192b als ein Bildschirm o. dgl. ausgebildet ist. Zu einer Realisierung einer akustischen Interaktion mit dem Benutzer kann die Nutzerinteraktionseinheit 190b ein akustisches Interaktionselement, wie beispielsweise einen Lautsprecher, ein Mikrofon o. dgl., aufweisen. Zu einer Realisierung einer haptischen Interaktion mit dem Benutzer kann die Nutzerinteraktionseinheit 190b ein haptisches Interaktionselement, wie beispielsweise einen programmierbaren Schalterknopf, einen Vibrationsmotor o. dgl., aufweisen.

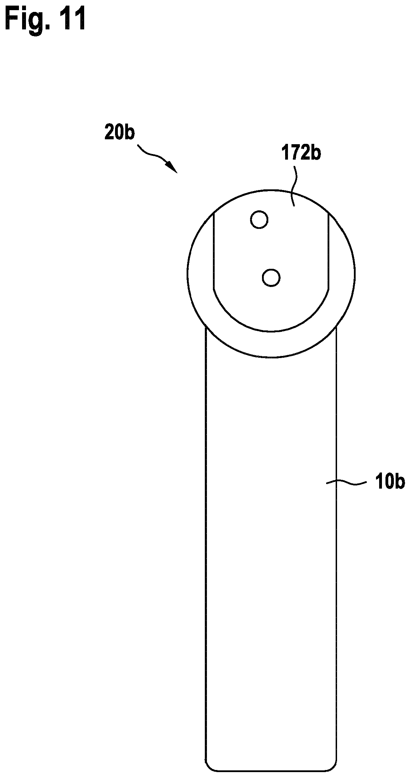

Figur 11 zeigt das Auftragssystem 20b aus Fig. 10 in einer weiteren schematischen Darstellung. Die Elektronikmoduleinheit 172b ist mechanisch und elektronisch mit der Medienauftragsvorrichtung 10b gekoppelt. Die Medienauftragsvorrichtung 10b ist mittels der Elektronikmoduleinheit 172b zu einem automatischen Medienauftrag vorgesehen.

Figur 12 zeigt eine weitere alternative Medienauftragsvorrichtung 10c in einer perspektivischen Darstellung. Die Medienauftragsvorrichtung 10c ist als eine handgehaltene Farbauftragsvorrichtung ausgebildet. Die Medienauftragsvorrichtung 10c weist ein Gehäuse 38c auf. Das Gehäuse 38c ist aus einem Kunststoff gebildet. Alternativ ist vorstellbar, dass das Gehäuse 38c aus einem Metall gebildet ist. Das Gehäuse 38c weist einen Kopfbereich 72c und einen Aufnahmebereich 74c auf. Der Kopfbereich 72c und der Aufnahmebereich 74c sind einteilig ausgebildet. In dem Kopfbereich 72c sind für einen Betrieb der Medienauftragsvorrichtung 10c notwendige Bauteile angeordnet. Der Aufnahmebereich 74c ist als ein halber Hohlzylinder ausgebildet. Der Aufnahmebereich 74c ist derart ausgeformt, dass ein andeutungsweise dargestellter Behälter 76c, welcher das aufzutragende Medium enthält, in einem an der Medienauftragsvorrichtung 10c montierten Zustand von dem Aufnahmebereich 74c teilweise umschlossen wird. Der Behälter 76c ist als ein Medientank ausgebildet. Das Medium ist als ein Farbmedium ausgebildet. Das Medium ist als ein Sprühlack ausgebildet.

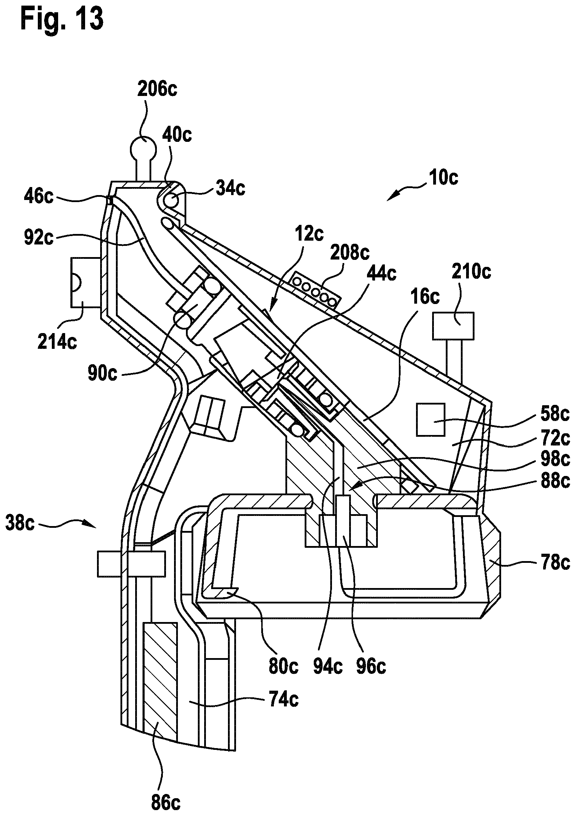

An dem Kopfbereich 72c und verbunden mit dem Aufnahmebereich 74c weist das Gehäuse 38c eine Anbindungs- und/oder Befestigungseinheit 78c auf. Die Anbindungs- und/oder Befestigungseinheit 78c ist zu einer Aufnahme des Behälters 76c an der Medienauftragsvorrichtung 10c vorgesehen. Die Anbindungs- und/oder Befestigungseinheit 78c weist ein Adapterhakenelement 80c zu einer Fixierung des Behälters 76c auf (vgl. Figur 13).

An dem Kopfbereich 72c des Gehäuses 38c ist ein Referenzelement 34c der Medienauftragsvorrichtung 10c angeordnet. Das Referenzelement 34c der Medienauftragsvorrichtung 10c ist für einen nicht weiter dargestellten Benutzer 36c blendfrei ausgebildet. Das Referenzelement 34c der Medienauftragsvorrichtung 10c ist als ein Strahlung aussendendes Leuchtelement ausgebildet, welches elektromagnetische Strahlung aus einem blauen Spektralbereich eines elektromagnetischen Spektrums aussendet. Das Referenzelement 34c der Medienauftragsvorrichtung 10c ist als eine blaue Leuchtdiode ausgebildet. Alternativ ist vorstellbar, dass das Referenzelement 34c der Medienauftragsvorrichtung 10c Strahlung aus einem für ein menschliches Auge unsichtbaren Spektralbereich aussendet. Das Leuchtelement ist zu einer gepulsten Aussendung von Strahlung vorgesehen, wobei durch einen gepulsten Betrieb des Leuchtelements die durch das Leuchtelement ausgesandte Strahlung zu einer Informationsübertragung von der Medienauftragsvorrichtung zu der Steuer- und/oder Regeleinheit moduliert werden kann.

An dem Kopfbereich 72c des Gehäuses 38c ist ein Blendschutzelement 40c der Medienauftragsvorrichtung 10c angeordnet. Das Blendschutzelement 40c ist aus einem lichtundurchlässigen Kunststoff gebildet. Das Blendschutzelement 40c ist einteilig mit dem Gehäuse 38c ausgebildet. Das Blendschutzelement 40c ist als eine Abdeckung ausgebildet. Das Blendschutzelement 40c überdeckt das Referenzelement 34c der Medienauftragsvorrichtung 10c teilweise. Das Referenzelement 34c der Medienauftragsvorrichtung 10c ist teilweise innerhalb des Blendschutzelements 40c angeordnet. Das Blendschutzelement 40c ist dazu vorgesehen, den Benutzer 36c vor der von dem Referenzelement 34c der Medienauftragsvorrichtung 10c ausgesendeten Strahlung abzuschirmen.

An dem Kopfbereich 72c des Gehäuses 38c ist ein erstes Positions- und/oder Entfernungssensorelement 206c einer Positions- und/oder Entfernungssensoreinheit 194c der Medienauftragsvorrichtung 10c angeordnet. Das erste Positions- und/oder Entfernungssensorelement 206c ist auf dem Blendschutzelement 40c angeordnet. Die Positions- und/oder Entfernungssensoreinheit 194c ist dazu vorgesehen, anhand eines Referenzelements 26c, 28c, 30c, 32c einer eine Medienausgabeeinheit 12c umgebenden Umgebung eine Position und/oder Ausrichtung der Medienausgabeeinheit 12c relativ zu einer Oberfläche 14c zu erfassen, in Abhängigkeit von der eine Elektronikeinheit 16c der Medienauftragsvorrichtung 10c die Medienausgabeeinheit 12c steuert und/oder regelt. Die Positions- und/oder Entfernungssensoreinheit 194c ist als eine omnidirektionale Positions- und/oder Entfernungssensoreinheit 194c ausgebildet. Das erste Positions- und/oder Entfernungssensorelement 206c ist dazu vorgesehen, das Referenzelement 26c, 28c, 30c, 32c der die Medienausgabeeinheit 12c umgebenden Umgebung in allen Raumrichtungen einer kompletten Sphäre um das erste Positions- und/oder Entfernungssensorelement 206c zu erfassen. Das erste Positions- und/oder Entfernungssensorelement 206c ist als eine 360°-Kamera ausgebildet. Alternativ ist vorstellbar, dass das erste Positions- und/oder Entfernungssensorelement 206c als eine Kamera mit einem Weitwinkelobjektiv oder als ein katadioptrisches System ausgebildet ist. Die omnidirektionale Positions- und/oder Entfernungssensoreinheit 194c ist dazu vorgesehen, eine Mehrzahl von, insbesondere in verschiedenen Raumrichtungen um die Medienausgabeeinheit 12c angeordneten, Referenzelementen 26c, 28c, 30c, 32c der die Medienausgabeeinheit 12c umgebenden Umgebung gleichzeitig zu erfassen. Die Positions- und/oder Entfernungssensoreinheit 194c bildet zumindest teilweise eine Positions- und/oder Oberflächensensoreinheit 18c der Medienauftragsvorrichtung 10c aus.

Die Positions- und/oder Entfernungssensoreinheit 194c weist ein elektromagnetisches Sensorelement 208c auf. Das elektromagnetische Sensorelement 208c ist auf der Oberseite des Kopfbereichs 72c des Gehäuses 38c angeordnet. Das elektromagnetische Sensorelement 208c ist als ein Induktionssensor ausgebildet. Alternativ ist denkbar, dass das elektromagnetische Sensorelement 208c als eine elektromagnetische Spule oder als ein Hallsensor ausgebildet ist. Die Positions- und/oder Entfernungssensoreinheit 194c ist als eine elektromagnetische Sensoreinheit ausgebildet. Die Positions- und/oder Entfernungssensoreinheit 194c ist dazu vorgesehen, eine Position und/oder Ausrichtung der Medienausgabeeinheit 12c relativ zu der Oberfläche 14c anhand einer Kenngröße eines elektromagnetischen Felds eines zweiten Referenzelements 28c der die Medienausgabeeinheit 12c umgebenden Umgebung zu erfassen. Das zweite Referenzelement 28c der die Medienausgabeeinheit 12c umgebenden Umgebung ist als ein elektromagnetisches Felderzeugungselement ausgebildet (vgl. Figur 14). Die Kenngröße des elektromagnetischen Felds ist als eine Amplitudenverteilung des elektromagnetischen Felds ausgebildet. Alternativ oder zusätzlich ist denkbar, dass die Kenngröße des elektromagnetischen Felds als eine Frequenzmodulation des elektromagnetischen Felds ausgebildet ist.

Die Positions- und/oder Entfernungssensoreinheit 194c weist ein elektromagnetisches Strahlungselement 210c auf. Das elektromagnetische Strahlungselement 210c ist auf der Oberseite des Kopfbereichs 72c des Gehäuses 38c angeordnet. Das elektromagnetische Strahlungselement 210c ist als ein Mikrowellensender ausgebildet. Alternativ ist vorstellbar, dass das elektromagnetische Strahlungselement 210c als ein Radarsensor oder als ein Lidargerät ausgebildet ist. Die Positions- und/oder Entfernungssensoreinheit 194c ist als eine elektromagnetische Strahlungseinheit zu einer Aussendung und Detektion elektromagnetischer Strahlung ausgebildet. Das elektromagnetische Strahlungselement 210c ist dazu vorgesehen, Mikrowellenstrahlung auszusenden und zu detektieren. Die Positions- und/oder Entfernungssensoreinheit 194c ist dazu vorgesehen, eine Position und/oder Ausrichtung der Medienausgabeeinheit 12c relativ zu der Oberfläche 14c anhand von einem elektromagnetischen Reflektorelement reflektierter elektromagnetischer Strahlung zu erfassen.

Figur 13 zeigt die Medienauftragsvorrichtung 10c aus Fig. 12 in einer schematischen Schnittdarstellung. Dargestellt sind der Kopfbereich 72c, die Anbindungs- und/oder Befestigungseinheit 78c mit dem Adapterhakenelement 80c und ein Teil des Aufnahmebereichs 74c. An dem Kopfbereich 72c sind das Referenzelement 34c der Medienauftragsvorrichtung 10c, das Blendschutzelement 40c, das erste Positions- und/oder Entfernungssensorelement 206c, das elektromagnetische Sensorelement 208c und das elektromagnetische Strahlungselement 210c angeordnet. Innerhalb des Gehäuses 38c in dem Aufnahmebereich 74c ist eine Energieversorgungseinheit 86c der Medienauftragsvorrichtung 10c angeordnet. Die Energieversorgungseinheit 86c ist dazu vorgesehen, zu einem Betrieb der Medienauftragsvorrichtung 10c eine Medienausgabeeinheit 12c der Medienauftragsvorrichtung 10c mit elektrischer Energie zu versorgen. Die Energieversorgungseinheit 86c ist als ein Akkumulator ausgebildet.

Die Medienausgabeeinheit 12c ist innerhalb des Gehäuses 38c in dem Kopfbereich 72c angeordnet. Die Medienausgabeeinheit 12c umfasst eine Düseneinheit 44c und eine Medienzuführeinheit 88c. Die Düseneinheit 44c weist ein Düsenelement 46c auf. In dem vorliegenden Ausführungsbeispiel weist die Düseneinheit 44c zusätzlich ein Ventilelement 90c auf. Grundsätzlich ist jedoch vorstellbar, dass die Düseneinheit 44c kein Ventilelement 90c umfasst. Das Düsenelement 46c ist drehbar in dem Gehäuse 38c gelagert. Das Düsenelement 46c ist in einer gemeinsamen Flucht mit dem Referenzelement 34c der Medienauftragsvorrichtung 10c angeordnet. Das Düsenelement 46c ist zu einer Ausgabe des Mediums auf die nicht weiter dargestellte Oberfläche 14c vorgesehen. Das Düsenelement 46c ist mit dem Ventilelement 90c zu einer Durchleitung des Mediums über ein Zuleitungselement 92c der Düseneinheit 44c verbunden. Alternativ ist denkbar, dass die Düseneinheit 44c lediglich das Düsenelement 46c und das Zuleitungselement 92c umfasst. Das Ventilelement 90c ist dazu vorgesehen, das Medium durch das Düsenelement 46c strömen zu lassen.

Die Medienausgabeeinheit 12c weist die Medienzuführeinheit 88c zu einer Zuführung des Mediums zu dem Ventilelement 90c auf. Alternativ ist vorstellbar, dass die Medienzuführeinheit 88c zu einer Zuführung des Mediums direkt zu dem Düsenelement 46c vorgesehen ist. Die Medienzuführeinheit 88c umfasst ein Medienzuführelement 94c, welches mit dem Ventilelement 90c verbunden ist, und ein Adapterelement 96c. Alternativ ist denkbar, dass das Medienzuführelement 94c mit dem Düsenelement 46c oder mit dem Zuleitungselement 92c verbunden ist. Das Adapterelement 96c ist mit dem Medienzuführelement 94c verbunden und dazu vorgesehen, eine Verbindung zu dem der Übersichtlichkeit halber nicht dargestellten Behälter 76c herzustellen. Das Adapterelement 96c ist dazu vorgesehen, das Medium von dem Behälter 76c zu dem Medienzuführelement 94c zu leiten.

Innerhalb des Gehäuses 38c und angebracht auf einem Stützelement 98c der Medienauftragsvorrichtung 10c ist die Elektronikeinheit 16c der Medienauftragsvorrichtung 10c angeordnet. Die Elektronikeinheit 16c ist als eine Platine mit einer nicht weiter dargestellten Prozessoreinheit und einer nicht weiter dargestellten Speichereinheit ausgebildet. Die Elektronikeinheit 16c ist dazu vorgesehen, die Medienausgabeeinheit 12c zu steuern und/oder zu regeln. Die Elektronikeinheit 16c wird von der Energieversorgungseinheit 86c mit elektrischer Energie versorgt.

Die Medienauftragsvorrichtung 10c weist eine Kommunikationseinheit 58c auf. Die Kommunikationseinheit 58c ist innerhalb des Gehäuses 38c angeordnet. Die Kommunikationseinheit 58c ist als eine drahtlose Kommunikationseinheit ausgebildet. Die Kommunikationseinheit 58c ist als ein Bluetooth-Modul ausgebildet. Alternativ ist vorstellbar, dass die Kommunikationseinheit 58c als ein Funk-Modul, als eine lichtbasierte Kommunikationseinheit oder als eine kabelgebundene Kommunikationseinheit ausgebildet ist. Die Kommunikationseinheit 58c weist eine Latenzzeit von weniger als 30 ms auf. Die Kommunikationseinheit 58c ist zu einem Austausch von elektronischen Daten mit einer Steuer- und/oder Regeleinheit 22c, 212c und/oder einer anderen externen Einheit vorgesehen.

Die Positions- und/oder Entfernungssensoreinheit 194c weist ein zweites Positions- und/oder Entfernungssensorelement 214c auf. Das zweite Positions- und/oder Entfernungssensorelement 214c ist an dem Kopfbereich 72c des Gehäuses 38c angeordnet. Die Positions- und/oder Entfernungssensoreinheit 194c ist dazu vorgesehen, eine entfernungsspezifische Kenngröße des Referenzelements 26c, 28c, 30c, 32c der die Medienausgabeeinheit 12c umgebenden Umgebung zu erfassen. Die erfasste entfernungsspezifische Kenngröße des Referenzelements 26c, 28c, 30c, 32c der die Medienausgabeeinheit 12c umgebenden Umgebung ist zu einer Bestimmung einer Orientierung der Medienausgabeeinheit 12c von der Elektronikeinheit 16c verwertbar. Die entfernungsspezifische Kenngröße der Referenzelemente 26c, 28c, 30c, 32c der die Medienausgabeeinheit 12c umgebenden Umgebung ist jeweils als eine Distanz jedes Referenzelements 26c, 28c, 30c, 32c der die Medienausgabeeinheit 12c umgebenden Umgebung zu der Medienausgabeeinheit 12c ausgebildet. Das zweite Positions- und/oder Entfernungssensorelement 214c ist als ein Lidargerät ausgebildet. Alternativ ist vorstellbar, dass das zweite Positions- und/oder Entfernungssensorelement 214c als ein Radarsensor oder als ein Ultraschallsensor ausgebildet ist. Die Elektronikeinheit 16c kann anhand der erfassten Distanzen der Referenzelemente 26c, 28c, 30c, 32c der die Medienausgabeeinheit 12c umgebenden Umgebung zu der Medienausgabeeinheit 12c eine Orientierung der Medienausgabeeinheit 12c bestimmen.

Vorzugsweise ist die Medienauftragsvorrichtung 10c zu einer Nutzung in einem Auftragssystem 20c gemäß eines in Figur 14 gezeigten Ausführungsbeispiels, insbesondere mit einer Steuer- und/oder Regeleinheit 22c, vorgesehen. Es ist aber auch denkbar, dass die Medienauftragsvorrichtung 10c in einem Auftragssystem 20a gemäß eines in Figur 5 dargestellten Ausführungsbeispiels, insbesondere mit einer Steuer- und/oder Regeleinheit 22a, und/oder in einem Auftragssystem 20d gemäß eines in Figur 19 dargestellten Ausführungsbeispiels, insbesondere mit einer Steuer- und/oder Regeleinheit 22d verwendbar ist.

Figur 14 zeigt ein weiteres alternatives Auftragssystem 20c in einer schematischen Darstellung. Das Auftragssystem 20c umfasst die Medienauftragsvorrichtung 10c sowie eine erste Steuer- und/oder Regeleinheit 22c und eine zweite Steuer- und/oder Regeleinheit 212c. Die Medienauftragsvorrichtung 10c wird von dem Benutzer 36c von Hand geführt. Der Benutzer 36c bringt mittels der Medienauftragsvorrichtung 10c das Medium auf die Oberfläche 14c auf. Die Oberfläche 14c ist als eine Zimmerwand ausgebildet. Auf der Oberfläche 14c ist eine Mehrzahl von ersten Referenzelementen 26c der die Medienausgabeeinheit 12c umgebenden Umgebung angebracht. Die Mehrzahl der ersten Referenzelemente 26c der die Medienausgabeeinheit 12c umgebenden Umgebung ist rahmenförmig um einen Auftragsbereich 196c auf der Oberfläche 14c angeordnet. Die ersten Referenzelemente 26c der die Medienausgabeeinheit 12c umgebenden Umgebung begrenzen den Auftragsbereich 196c. In dem Auftragsbereich 196c ist ein Medienauftrag 216c aufgebracht. Die ersten Referenzelemente 26c der die Medienausgabeeinheit 12c umgebenden Umgebung sind als QR-Codes ausgebildet. Alternativ ist vorstellbar, dass die ersten Referenzelemente 26c der die Medienausgabeeinheit 12c umgebenden Umgebung als Strichcodes oder als Farbcodes ausgebildet sind.

Auf der Oberfläche 14c ist das zweite Referenzelement 28c der die Medienausgabeeinheit 12c umgebenden Umgebung angebracht. Das zweite Referenzelement 28c der die Medienausgabeeinheit 12c umgebenden Umgebung ist als ein elektromagnetisches Felderzeugungselement zu einer Erzeugung eines elektromagnetischen Felds ausgebildet. Das zweite Referenzelement 28c der die Medienausgabeeinheit 12c umgebenden Umgebung ist als eine elektromagnetische Spule ausgebildet. Alternativ ist vorstellbar, dass das zweite Referenzelement 28c der die Medienausgabeeinheit 12c umgebenden Umgebung als ein Permanentmagnet oder als ein elektrisch geladenes Element ausgebildet ist. Das zweite Referenzelement 28c der die Medienausgabeeinheit 12c umgebenden Umgebung erzeugt ein elektromagnetisches Feld mit einer bestimmten Amplitudenverteilung. Die Amplitudenverteilung des elektromagnetischen Felds ist in einer Speichereinheit der Positions- und/oder Entfernungssensoreinheit 194c hinterlegt. Anhand der Amplitudenverteilung des elektromagnetischen Felds kann die Positions- und/oder Entfernungssensoreinheit 194c eine Position und/oder Ausrichtung der Medienausgabeeinheit 12c relativ zu der Oberfläche 14c erfassen.

Ein drittes Referenzelement 30c der die Medienausgabeeinheit 12c umgebenden Umgebung ist auf einem ersten Stativ 218c angeordnet. Ein viertes Referenzelement 32c der die Medienausgabeeinheit 12c umgebenden Umgebung ist auf einem zweiten Stativ 220c angeordnet. Das dritte Referenzelement 30c der die Medienausgabeeinheit 12c umgebenden Umgebung und das vierte Referenzelement 32c der die Medienausgabeeinheit 12c umgebenden Umgebung sind jeweils als elektromagnetische Reflektorelemente ausgebildet. Das dritte Referenzelement 30c der die Medienausgabeeinheit 12c umgebenden Umgebung und das vierte Referenzelement 32c der die Medienausgabeeinheit 12c umgebenden Umgebung sind dazu vorgesehen, elektromagnetische Strahlung zu reflektieren. Das dritte Referenzelement 30c der die Medienausgabeeinheit 12c umgebenden Umgebung und das vierte Referenzelement 32c der die Medienausgabeeinheit 12c umgebenden Umgebung sind dazu vorgesehen, von dem elektromagnetischen Strahlungselement 210c der Positions- und/oder Entfernungssensoreinheit 194c ausgesendete Mikrowellenstrahlung zu reflektieren. Anhand der von dem dritten Referenzelement 30c der die Medienausgabeeinheit 12c umgebenden Umgebung und dem vierten Referenzelement 32c der die Medienausgabeeinheit 12c umgebenden Umgebung reflektierten elektromagnetischen Strahlung kann die Positions- und/oder Entfernungssensoreinheit 194c eine Position und/oder Ausrichtung der Medienausgabeeinheit 12c relativ zu der Oberfläche 14c erfassen.

Der Benutzer 36c trägt die erste Steuer- und/oder Regeleinheit 22c auf einem Kopf 132c. Die erste Steuer- und/oder Regeleinheit 22c ist als eine Augmented-Reality-Brille ausgebildet. Alternativ ist vorstellbar, dass die erste Steuer- und/oder Regeleinheit 22c als ein Smartphone oder als ein Tablet ausgebildet ist. Die erste Steuer- und/oder Regeleinheit 22c weist eine erste Erfassungsvorrichtung 24c auf. Die erste Erfassungsvorrichtung 24c ist dazu vorgesehen, eine Position und/oder Ausrichtung der Medienauftragsvorrichtung 10c relativ zu der Oberfläche 14c zu erfassen. Die erste Erfassungsvorrichtung 24c ist zu einer Eigenbewegung während einer Positions- und/oder Ausrichtungserfassung der Medienauftragsvorrichtung 10c vorgesehen. Die erste Erfassungsvorrichtung 24c ist durch eine Bewegung des Kopfs 132c des Benutzers 36c bewegbar. Die erste Erfassungsvorrichtung 24c weist ein erstes Erfassungselement 222c auf. Das erste Erfassungselement 222c ist als eine Kamera ausgebildet. Alternativ ist vorstellbar, dass das erste Erfassungselement 222c als ein optischer Sensor, als ein elektromagnetischer Sensor oder als ein akustischer Sensor ausgebildet ist.

Vor der Oberfläche 14c ist eine zweite Steuer- und/oder Regeleinheit 212c angeordnet. Die zweite Steuer- und/oder Regeleinheit 212c weist eine zweite Erfassungsvorrichtung 224c auf. Die zweite Erfassungsvorrichtung 224c ist dazu vorgesehen, eine absolute Position der Medienauftragsvorrichtung 10c in einem dreidimensionalen Raum anhand des Referenzelements 34c der Medienauftragsvorrichtung 10c zu erfassen. Die zweite Erfassungsvorrichtung 224c ist um zwei Achsen schwenkbar gelagert. Die zweite Erfassungsvorrichtung 224c ist mittels eines nicht weiter dargestellten Antriebs der zweiten Steuer- und/oder Regeleinheit 212c automatisch bewegbar. Die zweite Erfassungsvorrichtung 224c weist ein zweites Erfassungselement 226c auf. Das zweite Erfassungselement 226c ist als ein Lasertracker ausgebildet. Alternativ ist vorstellbar, dass das zweite Erfassungselement 226c als ein Funktracker ausgebildet ist. Das zweite Erfassungselement 226c kann die Medienauftragsvorrichtung 10c anhand des Referenzelements 34c der Medienauftragsvorrichtung 10c bei einer Bewegung der Medienauftragsvorrichtung 10c mittels eines Laserstrahls 228c verfolgen. Die zweite Erfassungsvorrichtung 224c erfasst kontinuierlich eine Distanz zwischen der Medienauftragsvorrichtung 10c und der zweiten Steuer- und/oder Regeleinheit 212c, einen Elevationswinkel der Medienauftragsvorrichtung 10c relativ zu der zweiten Steuer- und/oder Regeleinheit 212c und einen Azimuthwinkel der Medienauftragsvorrichtung 10c relativ zu der zweiten Steuer- und/oder Regeleinheit 212c.

Die erste Steuer- und/oder Regeleinheit 22c und die zweite Steuer- und/oder Regeleinheit 212c weisen jeweils eine nicht weiter dargestellte Recheneinheit auf. Die Recheneinheiten sind innerhalb von Gehäuseeinheiten der ersten Steuer- und/oder Regeleinheit 22c und der zweiten Steuer- und/oder Regeleinheit 212c angeordnet. Die Recheneinheiten sind als Mikroprozessoren ausgebildet. Alternativ ist denkbar, dass die Recheneinheiten als dedizierte Digitalschaltungen ausgebildet sind. Die Recheneinheiten sind dazu vorgesehen, eine Auswirkung auf eine Positions- und/oder Ausrichtungserfassung der Medienauftragsvorrichtung 10c aufgrund einer Eigenbewegung der ersten Erfassungsvorrichtung 24c und/oder der zweiten Erfassungsvorrichtung 224c zu kompensieren. Die erste Steuer- und/oder Regeleinheit 22c und die zweite Steuer- und/oder Regeleinheit 212c weisen jeweils zumindest ein nicht weiter dargestelltes Bewegungssensorelement auf. Die Bewegungssensorelemente sind zu einer Erfassung der Eigenbewegung der Erfassungsvorrichtungen 24c, 224c vorgesehen. Die Bewegungssensorelemente sind als Neigungssensoren ausgebildet. Die Bewegungssensorelemente können den Recheneinheiten ein elektrisches Signal über die Eigenbewegungen der Erfassungsvorrichtungen 24c, 224c bereitstellen. Die Recheneinheit ist dazu vorgesehen, einen durch die Eigenbewegungen der Erfassungsvorrichtungen 24c, 224c bedingten Offset der erfassten Position und/oder Ausrichtung der Medienauftragsvorrichtung 10c relativ zu der Oberfläche 14c herauszurechnen.

Vorzugsweise ist die Steuer- und/oder Regeleinheit 22c zu einer Nutzung in einem Auftragssystem 20c gemäß eines in Figur 14 gezeigten Ausführungsbeispiels, insbesondere mit einer Medienauftragsvorrichtung 10c, vorgesehen. Es ist aber auch denkbar, dass die Steuer- und/oder Regeleinheit 22c in einem Auftragssystem 20a gemäß eines in Figur 5 dargestellten Ausführungsbeispiels, insbesondere mit einer Medienauftragsvorrichtung 10a, in einem Auftragssystem 20b gemäß eines in Figur 10 dargestellten Ausführungsbeispiels, insbesondere mit einer Medienauftragsvorrichtung 10b, in einem Auftragssystem 20d gemäß eines in Figur 19 dargestellten Ausführungsbeispiels, insbesondere mit einer Medienauftragsvorrichtung 10d, und/oder mit einer Medienauftragsvorrichtung 10e gemäß eines in Figur 20 dargestellten Ausführungsbeispiels verwendbar ist.

Im Folgenden wird ein Verfahren zum Betrieb des Auftragssystems 20c beschrieben. In zumindest einem Verfahrensschritt werden/wird eine Position und/oder Ausrichtung der Medienauftragsvorrichtung 10c relativ zu der Oberfläche 14c und/oder zumindest eine absolute Position der Medienauftragsvorrichtung 10c in einem dreidimensionalen Raum erfasst. Hinsichtlich weiterer Verfahrensschritte des Verfahrens zum Betrieb des Auftragssystems 20c darf auf die vorhergehende Beschreibung des Auftragssystems 20c verwiesen werden, da diese Beschreibung analog auch auf das Verfahren zu lesen ist und somit alle Merkmale hinsichtlich des Auftragssystems 20c auch in Bezug auf das Verfahren zum Betrieb des Auftragssystems 20c als offenbart gelten.

Zudem ist auch denkbar, dass Verfahrensschritte des Verfahrens mit Bezug auf das in den Figuren 12 bis 14 dargestellte Ausführungsbeispiel mit Verfahrensschritten von Verfahren mit Bezug auf weitere Ausführungsbeispiele, insbesondere auf das in den Figuren 1 bis 9 dargestellte Ausführungsbeispiel und/oder auf das in den Figuren 15 bis 19 dargestellte Ausführungsbeispiel, kombinierbar sind, insbesondere in einer einem Fachmann als sinnvoll erscheinenden Reihenfolge.

Figur 15 zeigt eine weitere alternative Medienauftragsvorrichtung 10d in einer perspektivischen Darstellung. Die Medienauftragsvorrichtung 10d ist als eine handgehaltene Farbauftragsvorrichtung ausgebildet. Die Medienauftragsvorrichtung 10d weist ein Gehäuse 38d auf. Das Gehäuse 38d ist aus einem Kunststoff gebildet. Alternativ ist vorstellbar, dass das Gehäuse 38d aus einem Metall gebildet ist. Das Gehäuse 38d weist einen Kopfbereich 72d und einen Aufnahmebereich 74d auf. Der Kopfbereich 72d und der Aufnahmebereich 74d sind einteilig ausgebildet. In dem Kopfbereich 72d sind für einen Betrieb der Medienauftragsvorrichtung 10d notwendige Bauteile angeordnet. Der Aufnahmebereich 74d ist als ein halber Hohlzylinder ausgebildet. Der Aufnahmebereich 74d ist derart ausgeformt, dass ein andeutungsweise dargestellter Behälter 76d, welcher das aufzutragende Medium enthält, in einem an der Medienauftragsvorrichtung 10d montierten Zustand von dem Aufnahmebereich 74d teilweise umschlossen wird. Der Behälter 76d ist als ein Medientank ausgebildet. Das Medium ist als ein Farbmedium ausgebildet. Das Medium ist als ein Sprühlack ausgebildet.

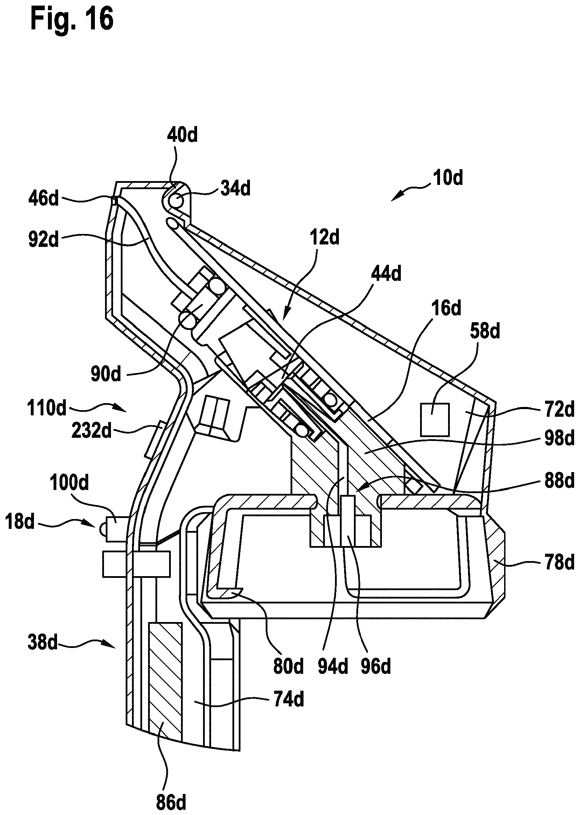

An dem Kopfbereich 72d und verbunden mit dem Aufnahmebereich 74d weist das Gehäuse 38d eine Anbindungs- und/oder Befestigungseinheit 78d auf. Die Anbindungs- und/oder Befestigungseinheit 78d ist zu einer Aufnahme des Behälters 76d an der Medienauftragsvorrichtung 10d vorgesehen. Die Anbindungs- und/oder Befestigungseinheit 78d weist ein Adapterhakenelement 80d zu einer Fixierung des Behälters 76d auf (vgl. Figur 16).

An dem Kopfbereich 72d des Gehäuses 38d ist ein Referenzelement 34d der Medienauftragsvorrichtung 10d angeordnet. Das Referenzelement 34d der Medienauftragsvorrichtung 10d ist für einen nicht weiter dargestellten Benutzer 36d blendfrei ausgebildet. Das Referenzelement 34d der Medienauftragsvorrichtung 10d ist als ein Strahlung aussendendes Leuchtelement ausgebildet, welches elektromagnetische Strahlung aus einem blauen Spektralbereich eines elektromagnetischen Spektrums aussendet. Das Referenzelement 34d der Medienauftragsvorrichtung 10d ist als eine blaue Leuchtdiode ausgebildet. Alternativ ist vorstellbar, dass das Referenzelement 34d der Medienauftragsvorrichtung 10d Strahlung aus einem für ein menschliches Auge unsichtbaren Spektralbereich aussendet. Das Leuchtelement ist zu einer gepulsten Aussendung von Strahlung vorgesehen, wobei durch einen gepulsten Betrieb des Leuchtelements die durch das Leuchtelement ausgesandte Strahlung zu einer Informationsübertragung von der Medienauftragsvorrichtung zu der Steuer- und/oder Regeleinheit moduliert werden kann.

An dem Kopfbereich 72d des Gehäuses 38d ist ein Blendschutzelement 40d der Medienauftragsvorrichtung 10d angeordnet. Das Blendschutzelement 40d ist aus einem lichtundurchlässigen Kunststoff gebildet. Das Blendschutzelement 40d ist einteilig mit dem Gehäuse 38d ausgebildet. Das Blendschutzelement 40d ist als eine Abdeckung ausgebildet. Das Blendschutzelement 40d überdeckt das Referenzelement 34d der Medienauftragsvorrichtung 10d teilweise. Das Referenzelement 34d der Medienauftragsvorrichtung 10d ist teilweise innerhalb des Blendschutzelements 40d angeordnet. Das Blendschutzelement 40d ist dazu vorgesehen, den Benutzer 36d vor der von dem Referenzelement 34d der Medienauftragsvorrichtung 10d ausgesendeten Strahlung abzuschirmen.

Figur 16 zeigt die Medienauftragsvorrichtung 10d aus Fig. 15 in einer schematischen Schnittdarstellung. Dargestellt sind der Kopfbereich 72d, die Anbindungs- und/oder Befestigungseinheit 78d mit dem Adapterhakenelement 80d und ein Teil des Aufnahmebereichs 74d. An dem Kopfbereich 72d sind das Referenzelement 34d der Medienauftragsvorrichtung 10d und das Blendschutzelement 40d angeordnet. Innerhalb des Gehäuses 38d in dem Aufnahmebereich 74d ist eine Energieversorgungseinheit 86d der Medienauftragsvorrichtung 10d angeordnet. Die Energieversorgungseinheit 86d ist dazu vorgesehen, zu einem Betrieb der Medienauftragsvorrichtung 10d eine Medienausgabeeinheit 12d der Medienauftragsvorrichtung 10d mit elektrischer Energie zu versorgen. Die Energieversorgungseinheit 86d ist als ein Akkumulator ausgebildet. Die Medienauftragsvorrichtung 10d umfasst eine Positions- und/oder Oberflächensensoreinheit 18d mit einem Positions- und/oder Oberflächensensorelement 100d. Es ist denkbar, dass die Medienauftragsvorrichtung 10d zur Lösung der erfindungsgemäßen Aufgabe in einer alternativen Ausgestaltung unabhängig von der Positions- und/oder Oberflächensensoreinheit 18d ausgebildet ist.

Die Medienausgabeeinheit 12d ist innerhalb des Gehäuses 38d in dem Kopfbereich 72d angeordnet. Die Medienausgabeeinheit 12d umfasst eine Düseneinheit 44d und eine Medienzuführeinheit 88d. Die Düseneinheit 44d weist ein Düsenelement 46d auf. In dem vorliegenden Ausführungsbeispiel weist die Düseneinheit 44d zusätzlich ein Ventilelement 90d auf. Grundsätzlich ist jedoch vorstellbar, dass die Düseneinheit 44d kein Ventilelement 90d umfasst. Das Düsenelement 46d ist drehbar in dem Gehäuse 38d gelagert. Das Düsenelement 46d ist in einer gemeinsamen Flucht mit dem Referenzelement 34d der Medienauftragsvorrichtung 10d angeordnet. Das Düsenelement 46d ist zu einer Ausgabe des Mediums auf eine nicht weiter dargestellte Oberfläche 14d vorgesehen. Das Düsenelement 46d ist mit dem Ventilelement 90d zu einer Durchleitung des Mediums über ein Zuleitungselement 92d der Düseneinheit 44d verbunden. Alternativ ist denkbar, dass die Düseneinheit 44d lediglich das Düsenelement 46d und das Zuleitungselement 92d umfasst. Das Ventilelement 90d ist dazu vorgesehen, das Medium durch das Düsenelement 46d strömen zu lassen.

Die Medienausgabeeinheit 12d weist die Medienzuführeinheit 88d zu einer Zuführung des Mediums zu dem Ventilelement 90d auf. Alternativ ist vorstellbar, dass die Medienzuführeinheit 88d zu einer Zuführung des Mediums direkt zu dem Düsenelement 46d vorgesehen ist. Die Medienzuführeinheit 88d umfasst ein Medienzuführelement 94d, welches mit dem Ventilelement 90d verbunden ist, und ein Adapterelement 96d. Alternativ ist vorstellbar, dass das Medienzuführelement 94d mit dem Düsenelement 46d oder mit dem Zuleitungselement 92d verbunden ist. Das Adapterelement 96d ist mit dem Medienzuführelement 94d verbunden und dazu vorgesehen, eine Verbindung zu dem der Übersichtlichkeit halber nicht dargestellten Behälter 76d herzustellen. Das Adapterelement 96d ist dazu vorgesehen, das Medium von dem Behälter 76d zu dem Medienzuführelement 94d zu leiten.

Innerhalb des Gehäuses 38d und angebracht auf einem Stützelement 98d der Medienauftragsvorrichtung 10d ist eine Elektronikeinheit 16d der Medienauftragsvorrichtung 10d angeordnet. Die Elektronikeinheit 16d ist als eine Platine mit einer nicht weiter dargestellten Prozessoreinheit und einer nicht weiter dargestellten Speichereinheit ausgebildet. Die Elektronikeinheit 16d ist dazu vorgesehen, die Medienausgabeeinheit 12d zu steuern und/oder zu regeln. Die Elektronikeinheit 16d wird von der Energieversorgungseinheit 86d mit elektrischer Energie versorgt. Die Elektronikeinheit 16d ist dazu vorgesehen, eine individuelle Kennung der Medienausgabeeinheit 12d bereitzustellen. Die Elektronikeinheit 16d ist dazu vorgesehen, die individuelle Kennung der Medienausgabeeinheit 12d in Form von elektronischen Daten bereitzustellen. Alternativ ist vorstellbar, dass die Elektronikeinheit 16d dazu vorgesehen ist, die individuelle Kennung der Medienausgabeeinheit 12d optisch und/oder akustisch bereitzustellen. Die individuelle Kennung der Medienausgabeeinheit 12d ist als eine Seriennummer der Medienausgabeeinheit 12d ausgebildet. Alternativ ist vorstellbar, dass die individuelle Kennung als maschinenlesbarer Code oder als markante geometrische Form ausgebildet ist. Die individuelle Kennung der Medienausgabeeinheit 12d ist in der Speichereinheit der Elektronikeinheit 16d abgespeichert. Alternativ ist denkbar, dass die Elektronikeinheit 16d die individuelle Kennung der Medienausgabeeinheit 12d erzeugt.

Die Medienauftragsvorrichtung 10d weist eine Kommunikationseinheit 58d auf. Die Kommunikationseinheit 58d ist innerhalb des Gehäuses 38d angeordnet. Die Kommunikationseinheit 58d ist als eine drahtlose Kommunikationseinheit ausgebildet. Die Kommunikationseinheit 58d ist als ein Bluetooth-Modul ausgebildet. Alternativ ist vorstellbar, dass die Kommunikationseinheit 58d als ein Funk-Modul, als eine lichtbasierte Kommunikationseinheit oder als eine kabelgebundene Kommunikationseinheit ausgebildet ist. Die Kommunikationseinheit 58d weist eine Latenzzeit von weniger als 30 ms auf. Die Kommunikationseinheit 58d ist zu einem verschlüsselten Austausch von elektronischen Daten mit der Steuer- und/oder Regeleinheit 22d und/oder einer weiteren externen Einheit 230d vorgesehen (vgl. Figur 19). Die Kommunikationseinheit 58d weist ein nicht weiter dargestelltes Verschlüsselungs- und/oder Entschlüsselungselement auf. Das Verschlüsselungs- und/oder Entschlüsselungselement ist zu einer Verschlüsselung und/oder zu einer Entschlüsselung der elektronischen Daten vorgesehen.

Die Medienauftragsvorrichtung 10d weist eine Benutzeridentifikationseinheit 110d auf. Die Benutzeridentifikationseinheit 110d ist an der Außenseite des Gehäuses 38d an dem Kopfbereich 72d angeordnet. Die Benutzeridentifikationseinheit 110d ist dazu vorgesehen, eine benutzerspezifische Kenngröße zu erfassen. Die Benutzeridentifikationseinheit 110d weist ein Benutzeridentifikationselement 232d auf. Das Benutzeridentifikationselement 232d ist zu einer Erfassung der benutzerspezifischen Kenngröße vorgesehen. Das Benutzeridentifikationselement 232d ist als ein Fingerabdruckscanner ausgebildet. Das Benutzeridentifikationselement 232d ist dazu vorgesehen, einen Fingerabdruckscan des Benutzers 36d zu erfassen. Alternativ ist denkbar, dass das Benutzeridentifikationselement 232d als ein Irisscanner, als ein Eingabefeld für ein Passwort, als eine Kamera oder als ein Bewegungssensorelement ausgebildet ist und dass die Benutzeridentifikationseinheit 110d eine Auswerteeinheit aufweist.

Die Elektronikeinheit 16d kann ein elektrisches Signal der Benutzeridentifikationseinheit 110d, das eine benutzerspezifische Kenngröße enthält, zu einer Steuerung und/oder Regelung der Medienausgabeeinheit 12d verarbeiten. In der Speichereinheit der Elektronikeinheit 16d ist zu jeder benutzerspezifischen Kenngröße eine Routine zu einer Steuerung und/oder Regelung der Medienausgabeeinheit 12d hinterlegt. Die Routine umfasst für jeden der Parameter der Medienausgabeeinheit 12d einen einzustellenden Parameter der Medienausgabeeinheit 12d. Die Elektronikeinheit 16d kann die Medienausgabeeinheit 12d derart steuern und/oder regeln, dass die Parameter der Medienausgabeeinheit 12d zu einer benutzerspezifischen Kenngröße passend eingestellt werden. Die Elektronikeinheit 16d kann eine Medienausgabefunktion der Medienausgabeeinheit 12d anhand der benutzerspezifischen Kenngröße freischalten oder sperren. Die Elektronikeinheit 16d kann eine Bedienung der Medienauftragsvorrichtung 10d aufgrund einer Authentifizierung des Benutzers 36d freischalten. Die Elektronikeinheit 16d kann anhand der benutzerspezifischen Kenngröße benutzerspezifische Voreinstellungen der Medienausgabeeinheit 12d vornehmen.

Vorzugsweise ist die Medienauftragsvorrichtung 10d zu einer Nutzung in einem Auftragssystem 20d gemäß eines in Figur 19 gezeigten Ausführungsbeispiels, insbesondere mit einer Steuer- und/oder Regeleinheit 22d, vorgesehen. Es ist aber auch denkbar, dass die Medienauftragsvorrichtung 10d in einem Auftragssystem 20a gemäß eines in Figur 5 dargestellten Ausführungsbeispiels, insbesondere mit einer Steuer- und/oder Regeleinheit 22a, und/oder in einem Auftragssystem 20c gemäß eines in Figur 14 dargestellten Ausführungsbeispiels, insbesondere mit einer Steuer- und/oder Regeleinheit 22c verwendbar ist.

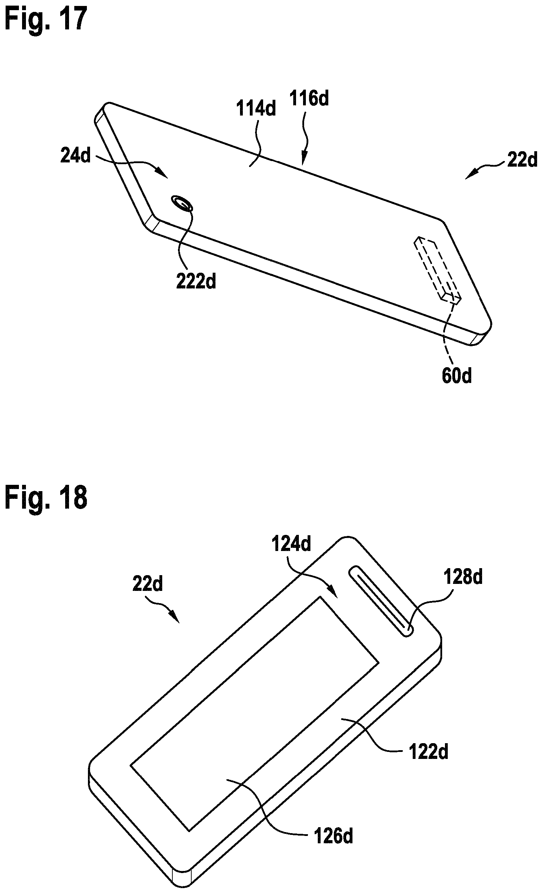

Figur 17 zeigt eine alternative Steuer- und/oder Regeleinheit 22d in einer perspektivischen Darstellung. Dargestellt ist eine Rückseite 114d der Steuer- und/oder Regeleinheit 22d. Die Steuer- und/oder Regeleinheit 22d ist als ein Smartphone ausgebildet. Die Steuer- und/oder Regeleinheit 22d weist eine Gehäuseeinheit 116d auf. Die Gehäuseeinheit 116d ist aus einem Metall gebildet. Alternativ ist vorstellbar, dass die Gehäuseeinheit 116d aus einem Glas oder aus einem Kunststoff gebildet ist.

Die Steuer- und/oder Regeleinheit 22d weist eine weitere Kommunikationseinheit 60d auf. Die weitere Kommunikationseinheit 60d ist innerhalb der Gehäuseeinheit 116d angeordnet. Die weitere Kommunikationseinheit 60d ist als eine drahtlose Kommunikationseinheit ausgebildet. Die weitere Kommunikationseinheit 60d ist als ein Bluetooth-Modul ausgebildet. Alternativ ist vorstellbar, dass die weitere Kommunikationseinheit 60d als ein Funk-Modul, als eine lichtbasierte Kommunikationseinheit oder als eine kabelgebundene Kommunikationseinheit ausgebildet ist. Die weitere Kommunikationseinheit 60d weist eine Latenzzeit von weniger als 30 ms auf. Die weitere Kommunikationseinheit 60d ist zu einem verschlüsselten Austausch von elektronischen Daten mit der nicht weiter dargestellten Medienauftragsvorrichtung 10d und/oder einer weiteren externen Einheit 230d vorgesehen. Die weitere Kommunikationseinheit 60d weist ein nicht weiter dargestelltes weiteres Verschlüsselungs- und/oder Entschlüsselungselement auf. Das weitere Verschlüsselungs- und/oder Entschlüsselungselement ist zu einer Verschlüsselung und/oder zu einer Entschlüsselung der elektronischen Daten vorgesehen.

Die Steuer- und/oder Regeleinheit 22d weist eine Erfassungsvorrichtung 24d auf. Die Erfassungsvorrichtung 24d ist dazu vorgesehen, anhand eines Referenzelements einer Umgebung der Medienauftragsvorrichtung 10d und/oder anhand des Referenzelements 34d der Medienauftragsvorrichtung 10d eine Position und/oder Ausrichtung der Medienauftragsvorrichtung 10d relativ zu der Oberfläche 14d zu erfassen. Die Erfassungsvorrichtung 24d weist ein Erfassungselement 222d auf. Das Erfassungselement 222d ist auf der Rückseite 114d der Steuer- und/oder Regeleinheit 22d an der Gehäuseeinheit 116d angeordnet. Das Erfassungselement 222d ist als eine Kamera ausgebildet. Die Erfassungsvorrichtung 24d ist dazu vorgesehen, einen Medienauftragsprozess aufzuzeichnen. Das Erfassungselement 222d ist dazu vorgesehen, den Medienauftragsprozess zu filmen. Eine Aufzeichnung des Medienauftragsprozesses ist in der Steuer- und/oder Regeleinheit 22d weiterverarbeitbar. Alternativ oder zusätzlich ist vorstellbar, dass die Erfassungsvorrichtung 24d zu einer Erfassung des Referenzelements der Umgebung der Medienauftragsvorrichtung 10d und/oder des Referenzelements 34d der Medienauftragsvorrichtung 10d ein als ein optischer Sensor, als ein elektromagnetischer Sensor oder als ein akustischer Sensor ausgebildetes Erfassungselement aufweist.

Figur 18 zeigt die Steuer- und/oder Regeleinheit 22d aus Fig. 17 in einer weiteren perspektivischen Darstellung. Dargestellt ist eine Vorderseite 122d der Steuer- und/oder Regeleinheit 22d.

Die Steuer- und/oder Regeleinheit 22d weist eine Ausgabeeinheit 124d auf. Die Ausgabeeinheit 124d ist zu einer Informationsausgabe an den Benutzer 36d und/oder zu einer Befehlseingabe durch den Benutzer 36d vorgesehen. Die Ausgabeeinheit 124d umfasst ein erstes Ausgabeelement 126d und ein zweites Ausgabeelement 128d. Das erste Ausgabeelement 126d ist als ein Bildschirm ausgebildet. Das erste Ausgabeelement 126d ist als ein Touch-Bildschirm ausgebildet. Das erste Ausgabeelement 126d ist dazu vorgesehen, ein zu erstellendes Motiv dem Benutzer 36 darzustellen. Das zweite Ausgabeelement 128d ist als ein Lautsprecher ausgebildet. Das erste Ausgabeelement 126d und das zweite Ausgabeelement 128d sind bündig in die Gehäuseeinheit 116d eingelassen.

Die Steuer- und/oder Regeleinheit 22d umfasst eine nicht weiter dargestellte Recheneinheit und eine nicht weiter dargestellte Speichereinheit. Die Recheneinheit und die Speichereinheit sind innerhalb der Gehäuseeinheit 116d angeordnet. Die Recheneinheit ist als ein Mikroprozessor ausgebildet. Die Speichereinheit ist als ein SSD-Speicher (Solid state drive-Speicher) ausgebildet.

Vorzugsweise ist die Steuer- und/oder Regeleinheit 22d zu einer Nutzung in einem Auftragssystem 20d gemäß eines in Figur 19 gezeigten Ausführungsbeispiels, insbesondere mit einer Medienauftragsvorrichtung 10d, vorgesehen. Es ist aber auch denkbar, dass die Steuer- und/oder Regeleinheit 22d in einem Auftragssystem 20a gemäß eines in Figur 5 dargestellten Ausführungsbeispiels, insbesondere mit einer Medienauftragsvorrichtung 10a, in einem Auftragssystem 20b gemäß eines in Figur 10 dargestellten Ausführungsbeispiels, insbesondere mit einer Medienauftragsvorrichtung 10b, in einem Auftragssystem 20c gemäß eines in Figur 14 dargestellten Ausführungsbeispiels, insbesondere mit einer Medienauftragsvorrichtung 10c, und/oder mit einer Medienauftragsvorrichtung 10e gemäß eines in Figur 20 dargestellten Ausführungsbeispiels verwendbar ist.

Figur 19 zeigt ein weiteres alternatives Auftragssystem 20d in einer schematischen Darstellung. Das Auftragssystem 20d umfasst die Medienauftragsvorrichtung 10d und die Steuer- und/oder Regeleinheit 22d. Zusätzlich umfasst das Auftragssystem 20d eine weitere externe Einheit 230d und eine Servereinheit 234d. Die weitere externe Einheit 230d ist als eine weitere Medienauftragsvorrichtung ausgebildet. Die weitere externe Einheit 230d ist zumindest im Wesentlichen analog zu der Medienauftragsvorrichtung 10d ausgebildet. Die Medienauftragsvorrichtung 10d wird von dem Benutzer 36d von Hand geführt. Der Benutzer 36d bringt mittels der Medienauftragsvorrichtung 10d das Medium auf die Oberfläche 14d auf. Die weitere externe Einheit 230d wird von einem weiteren Benutzer 236d von Hand geführt. Der weitere Benutzer 236d bringt mittels der weiteren externen Einheit 230d ein weiteres Medium auf die Oberfläche 14d auf. Die Steuer- und/oder Regeleinheit 22d ist zu einer Erfassung der Position und/oder Ausrichtung der Medienauftragsvorrichtung 10d relativ zu der Oberfläche 14d und zu einer Erfassung einer Position und/oder Ausrichtung der weiteren externen Einheit 230d relativ zu der Oberfläche 14d auf einem Stativ 130d vor der Oberfläche 14d angeordnet. Die Steuer- und/oder Regeleinheit 22d ist dazu vorgesehen, die Medienauftragsvorrichtung 10d und die weitere externe Einheit 230d gleichzeitig zu steuern und/oder zu regeln. Die Erfassungsvorrichtung 24d der Steuer- und/oder Regeleinheit 22d ist dazu vorgesehen, den Medienauftragsprozess aufzuzeichnen. Die Oberfläche 14d ist als eine Zimmerwand ausgebildet.

Die Servereinheit 234d ist dazu vorgesehen, eine Funktion zu einer Funktionalitätserweiterung der Medienauftragsvorrichtung 10d und/oder der Steuer- und/oder Regeleinheit 22d bereitzustellen. Die Servereinheit 234d ist als ein Computer mit einer Speichereinheit und mit einem in der Speichereinheit abgespeicherten Dienstprogramm ausgebildet. Die Servereinheit 234d ist mit dem Internet verbunden. Die Medienauftragsvorrichtung 10d, die weitere externe Einheit 230d und die Steuer- und/oder Regeleinheit 22d können elektronische Daten mit der Servereinheit 234d austauschen. Die Medienauftragsvorrichtung 10d und die weitere externe Einheit 230d können mittels der Servereinheit 234d zumindest teilweise über das Internet gesteuert und/oder geregelt werden. Elektronische Vorlagen von mittels der Medienauftragsvorrichtung 10d und/oder der weiteren externen Einheit 230d zu erstellender Medienaufträge können in der Speichereinheit der Servereinheit 234d gespeichert werden. Die elektronischen Vorlagen können zu einer Sicherung und/oder zu einer Bereitstellung der Vorlagen für den Benutzer 36d, den weiteren Benutzer 236d und/oder noch weitere Benutzer in der Speichereinheit der Servereinheit 234d gespeichert werden. Die Servereinheit 234d ist zu einer Bereitstellung eines elektronischen Einkaufsbereichs vorgesehen. In dem elektronischen Einkaufsbereich können elektronische Vorlagen heruntergeladen werden, Medien und/oder Zubehör für die Medienauftragsvorrichtung 10d und/oder die weitere externe Einheit 230d bestellt werden, eine Bearbeitung einer elektronischen Vorlage in Auftrag gegeben werden, ein Druck einer elektronischen Vorlage in Auftrag gegeben werden und/oder eine Erstellung eines Medienauftrags angeboten werden. Die Servereinheit 234d ist zu einer Bereitstellung eines Gemeinschaftsbereichs vorgesehen. Der Gemeinschaftsbereich ist zu einer Kommunikation des Benutzers 36d mit dem weiteren Benutzer 236d, mit noch weiteren Benutzern der Medienauftragsvorrichtung 10d und/oder einem Hersteller der Medienauftragsvorrichtung 10d, vorgesehen. Der Gemeinschaftsbereich weist eine Video-Chat-Funktion, eine Audio-Chat-Funktion und eine Text-Chat-Funktion auf.

Vorzugsweise ist die Servereinheit 234d zu einer Nutzung in einem Auftragssystem 20d gemäß eines in Figur 19 gezeigten Ausführungsbeispiels, insbesondere mit einer Medienauftragsvorrichtung 10d, vorgesehen. Es ist aber auch denkbar, dass die Servereinheit 234d in einem Auftragssystem 20a gemäß eines in Figur 5 gezeigten Ausführungsbeispiels, insbesondere mit einer Medienauftragsvorrichtung 10a, in einem Auftragssystem 20b gemäß eines in Figur 10 dargestellten Ausführungsbeispiels, insbesondere mit einer Medienauftragsvorrichtung 10b, in einem Auftragssystem 20c gemäß eines in Figur 14 dargestellten Ausführungsbeispiels, insbesondere mit einer Medienauftragsvorrichtung 10c, und/oder mit einer Medienauftragsvorrichtung 10e gemäß eines in Figur 20 dargestellten Ausführungsbeispiels verwendbar ist.

Im Folgenden wird ein Verfahren zum Betrieb des Auftragssystems 20d beschrieben. In zumindest einem Verfahrensschritt wird die individuelle Kennung der Medienausgabeeinheit 12d zu einer Identifikation der Medienausgabeeinheit 12d und/oder zu einer Wiederherstellung eines Arbeitsstands der Medienausgabeeinheit 12d ausgelesen. In zumindest einem weiteren Verfahrensschritt werden die Medienauftragsvorrichtung 10d und die weitere externe Einheit 230d gleichzeitig gesteuert und/oder geregelt. In zumindest einem weiteren Verfahrensschritt wird anhand einer umgebungsspezifischen Kenngröße der Steuer- und/oder Regeleinheit 22d und/oder anhand einer benutzerwählbaren Kenngröße ein zu erstellendes Motiv ermittelt und dem Benutzer 36d dargestellt. In zumindest einem weiteren Verfahrensschritt wird aus einem Sollbild, insbesondere aus einem Sollmotiv, eine Umrandung des Sollbilds zu einem Auftrag extrahiert. In zumindest einem weiteren Verfahrensschritt wird mittels der Steuer- und/oder Regeleinheit 22d ein Informations- und/oder Warenaustausch mit dem weiteren Benutzer 236d und/oder einem Händler bereitgestellt. In zumindest einem weiteren Verfahrensschritt wird eine Bedienung der Medienauftragsvorrichtung 10d und/oder der Steuer- und/oder Regeleinheit 22d aufgrund einer Authentifizierung des Benutzers 36d freigeschaltet.

Hinsichtlich weiterer Verfahrensschritte des Verfahrens zum Betrieb des Auftragssystems 20d darf auf die vorhergehende Beschreibung des Auftragssystems 20d verwiesen werden, da diese Beschreibung analog auch auf das Verfahren zu lesen ist und somit alle Merkmale hinsichtlich des Auftragssystems 20d auch in Bezug auf das Verfahren zum Betrieb des Auftragssystems 20d als offenbart gelten.

Zudem ist auch denkbar, dass Verfahrensschritte des Verfahrens mit Bezug auf das in den Figuren 15 bis 19 dargestellte Ausführungsbeispiel mit Verfahrensschritten von Verfahren mit Bezug auf weitere Ausführungsbeispiele, insbesondere auf das in den Figuren 1 bis 9 dargestellte Ausführungsbeispiel und/oder auf das in den Figuren 12 bis 14 dargestellte Ausführungsbeispiel, kombinierbar sind, insbesondere in einer einem Fachmann als sinnvoll erscheinenden Reihenfolge.

Figur 20 zeigt eine weitere alternative Medienauftragsvorrichtung 10e in einer perspektivischen Darstellung. Die Medienauftragsvorrichtung 10e ist als eine handgehaltene Farbauftragsvorrichtung ausgebildet. Die Medienauftragsvorrichtung 10e weist ein Gehäuse 38e auf. Das Gehäuse 38e ist aus einem Kunststoff gebildet. Alternativ ist vorstellbar, dass das Gehäuse 38e aus einem Metall gebildet ist. Das Gehäuse 38e weist einen Kopfbereich 72e und einen Aufnahmebereich 74e auf. Der Kopfbereich 72e und der Aufnahmebereich 74e sind einteilig ausgebildet. In dem Kopfbereich 72e sind für einen Betrieb der Medienauftragsvorrichtung 10e notwendige Bauteile angeordnet. Der Aufnahmebereich 74e ist als ein halber Hohlzylinder ausgebildet. Der Aufnahmebereich 74e ist derart ausgeformt, dass ein andeutungsweise dargestellter Behälter 76e, welcher das aufzutragende Medium enthält, in einem an der Medienauftragsvorrichtung 10e montierten Zustand von dem Aufnahmebereich 74e teilweise umschlossen wird. Der Behälter 76e ist als ein Medientank ausgebildet. Das Medium ist als ein Farbmedium ausgebildet. Das Medium ist als ein Sprühlack ausgebildet.

An dem Kopfbereich 72e und verbunden mit dem Aufnahmebereich 74e weist das Gehäuse 38e eine Anbindungs- und/oder Befestigungseinheit 78e auf. Die Anbindungs- und/oder Befestigungseinheit 78e ist zu einer Aufnahme des Behälters 76e an der Medienauftragsvorrichtung 10e vorgesehen.

Auf einer Oberseite des Kopfbereichs 72e des Gehäuses 38e ist eine Benutzerschnittstelle 198e angeordnet. Die Benutzerschnittstelle 198e ist dazu vorgesehen, eine Information an einen Benutzer der Medienauftragsvorrichtung 10e auszugeben. Die Benutzerschnittstelle 198e ist bündig mit dem Gehäuse 38e in den Kopfbereich 72e eingelassen.

Die Benutzerschnittstelle 198e ist zumindest teilweise als eine optische Anzeigevorrichtung ausgebildet. Die optische Anzeigevorrichtung ist dazu vorgesehen, eine optische Information an einen Benutzer auszugeben. Die Benutzerschnittstelle 198e ist zumindest teilweise als ein Display ausgebildet. Die Benutzerschnittstelle 198e ist dazu vorgesehen, die optische Information als eine Abfolge von Zahlen, Ziffern und/oder Bildern auszugeben.

Die Benutzerschnittstelle 198e ist zumindest teilweise als ein Projektor ausgebildet. Die Benutzerschnittstelle 198e ist dazu vorgesehen, die optische Information auf eine Fläche zu projizieren. Es ist aber auch denkbar, dass die Benutzerschnittstelle 198e als eine LED ausgebildet ist und die optische Information als ein farbiges Licht ausgibt.

Die Benutzerschnittstelle 198e weist eine haptische Anzeigevorrichtung 238e auf. Die haptische Anzeigevorrichtung 238e ist als Vibrationseinheit ausgebildet, die eine haptische Anzeige als Vibration ausgibt, die ein Benutzer der Medienauftragsvorrichtung 10e haptisch wahrnehmen kann.

Weiterhin weist die Benutzerschnittstelle 198e eine akustische Anzeigevorrichtung 240e auf. Die akustische Anzeigevorrichtung 240e gibt eine akustische Information aus, die ein Benutzer der Medienauftragsvorrichtung 10e akustisch wahrnehmen kann. Die akustische Information kann ein Ton oder eine Abfolge von Tönen, akustischen Signalen, Melodien oder dergleichen sein.

Die Benutzerschnittstelle 198e gibt mindestens einen der folgenden Parameter aus, wobei die Liste nicht abschließend ist:
- einen Abstand der Medienauftragsvorrichtung 10e zu einer zu bearbeitenden Fläche, insbesondere einer Oberfläche,
- eine Bewegungsgeschwindigkeit der Medienauftragsvorrichtung 10e,
- ein Füllstand des Behälters 76e
- eine Farbe

Hinsichtlich eines Abstands der Medienauftragsvorrichtung 10e zu einer zu bearbeitenden Fläche:
Der Abstand der Medienauftragsvorrichtung 10e zu einer zu bearbeitenden Fläche beeinflusst ein Ergebnis einer Medienausgabe. Somit ist es sinnvoll, den Abstand der Medienauftragsvorrichtung 10e zu einer zu bearbeitenden Fläche laufend zu erfassen. Die Erfassung des Abstands der Medienauftragsvorrichtung 10e zu einer zu bearbeitenden Fläche erfolgt beispielsweise mittels Laser- oder Sensortechnik.

Hinsichtlich einer Bewegungsgeschwindigkeit der Medienauftragsvorrichtung 10e:
Insbesondere für den Fall, dass ein Benutzer die Medienauftragsvorrichtung 10e schneller bewegt, als das Medium ausgegeben werden kann, kann es zu einem Versatz der Medienausgabe kommen. Mit Hilfe eines Bewegungssensors wird beispielsweise erfasst, ob die Bewegungsgeschwindigkeit der Medienauftragsvorrichtung 10e zur Medienausgabe passt.

Eine Angabe über einen Füllstand des Behälters 76e ist für einen Benutzer wichtig, wenn ermittelt werden soll, ob die Menge an Medium für einen Arbeitsgang ausreichend ist.

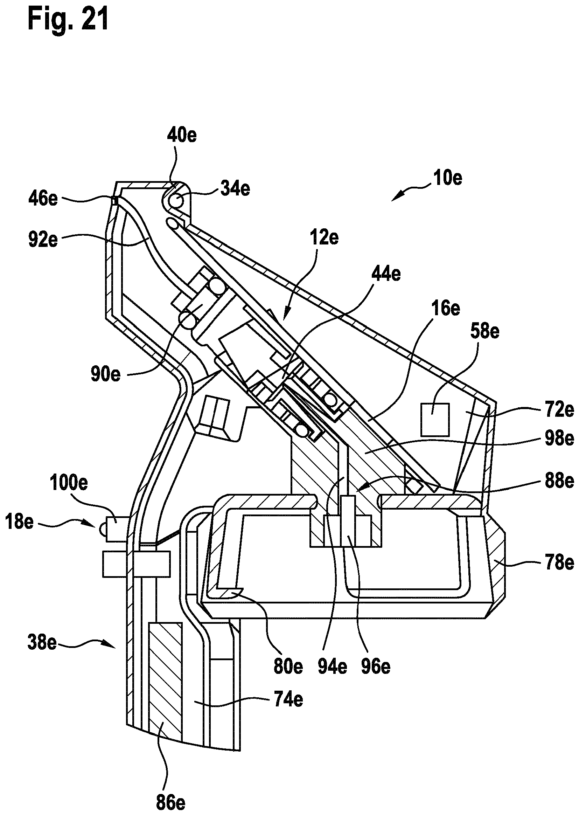

Figur 21 zeigt die Medienauftragsvorrichtung 10e aus Fig. 20 in einer schematischen Schnittdarstellung. Dargestellt sind der Kopfbereich 72e, die Anbindungs- und/oder Befestigungseinheit 78e und ein Teil des Aufnahmebereichs 74e. Innerhalb des Gehäuses 38e im Aufnahmebereich 74e ist eine Energieversorgungseinheit 86e der Medienauftragsvorrichtung 10e angeordnet. Die Energieversorgungseinheit 86e ist dazu vorgesehen, zu einem Betrieb der Medienauftragsvorrichtung 10e eine Medienausgabeeinheit 12e der Medienauftragsvorrichtung 10e mit elektrischer Energie zu versorgen. Die Energieversorgungseinheit 86e ist als ein Akkumulator ausgebildet. Die Medienausgabeeinheit 12e ist innerhalb des Gehäuses 38e im Kopfbereich 72e angeordnet. Die Medienausgabeeinheit 12e umfasst eine Düseneinheit 44e und eine Medienzuführeinheit 88e. Die Düseneinheit 44e weist ein Ventilelement 90e und ein Düsenelement 46e auf. Das Düsenelement 46e ist drehbar im Gehäuse 38e gelagert. Das Düsenelement 46e ist mit dem Ventilelement 90e zu einer Durchleitung des Mediums über ein Zuleitungselement 92e der Düseneinheit 44e verbunden. Das Ventilelement 90e ist dazu vorgesehen, das Medium unter Druck durch das Düsenelement 46e strömen zu lassen.

Innerhalb des Gehäuses 38e der Medienauftragsvorrichtung 10e ist eine Elektronikeinheit 16e angeordnet. Die Elektronikeinheit 16e ist auf einem Stützelement 98e angebracht. Die Elektronikeinheit 16e ist als eine Platine mit einer nicht weiter dargestellten Prozessoreinheit und einer nicht weiter dargestellten Speichereinheit ausgebildet. Die Elektronikeinheit 16e ist dazu vorgesehen, die Medienausgabeeinheit 12e zu steuern und/oder zu regeln. Die Elektronikeinheit 16e wird von der Energieversorgungseinheit 86e mit elektrischer Energie versorgt. Die Medienauftragsvorrichtung 10e umfasst eine Positions- und/oder Oberflächensensoreinheit 18e mit einem Positions- und/oder Oberflächensensorelement 100e.

Es ist denkbar, dass die Medienauftragsvorrichtung 10e in einem Auftragssystem 20a gemäß eines in Figur 5 dargestellten Ausführungsbeispiels, insbesondere mit einer Steuer- und/oder Regeleinheit 22a, in einem Auftragssystem 20c gemäß eines in Figur 14 dargestellten Ausführungsbeispiels, insbesondere mit einer Steuer- und/oder Regeleinheit 22c, und/oder in einem Auftragssystem 20d gemäß eines in Figur 19 dargestellten Ausführungsbeispiels, insbesondere mit einer Steuer- und/oder Regeleinheit 22d, verwendbar ist.

## Patentansprüche

1. Auftragssystem mit zumindest einer Medienauftragsvorrichtung, die zumindest eine Medienausgabeeinheit (12a; 12c; 12d; 12e) zu einer Ausgabe zumindest eines Mediums auf zumindest eine Oberfläche (14a, 14c, 14d), ein Referenzelement und zumindest eine Elektronikeinheit (16a; 16c; 16d; 16e) zumindest zu einer Steuerung und/oder Regelung der zumindest einen Medienausgabeeinheit (12a; 12c; 12d; 12e) aufweist, und mit zumindest einer Steuer- und/oder Regeleinheit (22a; 22c; 22d), **dadurch gekennzeichnet, dass** die Steuer- und/oder Regeleinheit (22a; 22c; 22d) zumindest eine Erfassungsvorrichtung (24a; 24c; 24d) aufweist, welche dazu vorgesehen ist, anhand zumindest eines Referenzelements (26a; 26c, 28a; 28c, 30a; 30c, 32a; 32c) einer Umgebung der Medienauftragsvorrichtung und/oder anhand zumindest des Referenzelements (34a; 34c; 34d; 34e) der Medienauftragsvorrichtung zumindest eine Position und/oder Ausrichtung der Medienauftragsvorrichtung relativ zu der Oberfläche (14a; 14c; 14d) zu erfassen, wobei das Referenzelement (34a; 34c; 34d; 34e) der Medienauftragsvorrichtung als ein eine Strahlung aussendendes Leuchtelement ausgebildet ist, welches zu einer gepulsten Aussendung von Strahlung vorgesehen ist, wobei durch einen gepulsten Betrieb des Leuchtelements die durch das Leuchtelement ausgesandte Strahlung, zu einer Informationsübertragung von der Medienauftragsvorrichtung zu der Steuer- und/oder Regeleinheit, moduliert werden kann.

2. Auftragssystem nach Anspruch 1, **dadurch gekennzeichnet, dass** das Referenzelement (34a; 34c; 34d; 34e) der Medienauftragsvorrichtung als ein eine Strahlung aussendendes Leuchtelement ausgebildet ist, welches zu einer Aussendung von elektromagnetischer Strahlung aus einem blauen Spektralbereich und/oder aus einem für ein menschliches Auge zumindest im Wesentlichen unsichtbaren Spektralbereich vorgesehen ist.

3. Auftragssystem nach einem der Ansprüche 1 bis 2, **dadurch gekennzeichnet, dass** die Medienauftragsvorrichtung zumindest eine Referenzelementerzeugungseinheit (42a) aufweist, welche dazu vorgesehen ist, das Referenzelement (26a, 28a) der Umgebung der Medienauftragsvorrichtung zu erzeugen.

4. Auftragssystem nach einem der Ansprüche 1 bis 3, **dadurch gekennzeichnet, dass** die Medienausgabeeinheit (12a; 12c; 12d; 12e) zumindest eine Düseneinheit (44a; 44c; 44d; 44e) mit zumindest einem Düsenelement (46a; 46c; 46d; 46e) aufweist, das in einer gemeinsamen Flucht mit dem Referenzelement (34a; 34c; 34d; 34e) der Medienauftragsvorrichtung angeordnet ist, wobei das Düsenelement (46a; 46c; 46d; 46e) und das Referenzelement (34a; 34c; 34d; 34e) der Medienauftragsvorrichtung entlang einer einzelnen gedachten geraden Linie angeordnet sind, welche bei einer zumindest im Wesentlichen senkrechten Medienausgaberichtung (102a) des Düsenelements (46a; 46c; 46d; 46e) relativ zu der Oberfläche (14a; 14c; 14d) zumindest im Wesentlichen senkrecht zu der Oberfläche (14a; 14c; 14d) verläuft.

5. Auftragssystem nach einem der Ansprüche 1 bis 4, **dadurch gekennzeichnet, dass** die Erfassungsvorrichtung (24a) zumindest zu einer Positions- und/oder Ausrichtungserfassung der Medienauftragsvorrichtung relativ zu der Oberfläche (14a) zumindest eine Kameraeinheit (48a) mit einer Bildaufnahmefrequenz von zumindest 120 Bildern in einer Sekunde bei einer Bildauflösung von zumindest 518.400 Bildpunkten aufweist.

6. Auftragssystem nach einem der Ansprüche 1 bis 5, **dadurch gekennzeichnet, dass** die Erfassungsvorrichtung (24a) zu einer Erfassung einer Position und/oder Ausrichtung der Medienauftragsvorrichtung relativ zu der Oberfläche (14a) zu einer, insbesondere drahtlosen, Synchronisierung mit der Medienauftragsvorrichtung mittels einer Taktsynchronisierung und/oder einer Startzeitauslösung vorgesehen ist.

7. Auftragssystem nach einem der Ansprüche 1 bis 6, **dadurch gekennzeichnet, dass** die Steuer- und/oder Regeleinheit (22c) zumindest eine Recheneinheit aufweist, welche dazu vorgesehen ist, eine Auswirkung auf eine Positions- und/oder Ausrichtungserfassung der Medienauftragsvorrichtung aufgrund zumindest einer Eigenbewegung der Erfassungsvorrichtung (24c) zu kompensieren.

8. Auftragssystem nach einem der Ansprüche 1 bis 7, **gekennzeichnet durch** zumindest eine Elektronikmoduleinheit (172b), welche zu einer ladefremden Funktionserweiterung der Medienauftragsvorrichtung elektronisch mit der Elektronikeinheit koppelbar ist.

9. Auftragssystem nach einem der vorhergehenden Ansprüche, **dadurch gekennzeichnet**, das die Medienauftragsvorrichtung zumindest eine Positions- und/oder Oberflächensensoreinheit (18a; 18c; 18d; 18e) aufweist, welche dazu vorgesehen ist, zumindest eine Position und/oder Ausrichtung der Medienausgabeeinheit (12a; 12c; 12d; 12e) relativ zu der Oberfläche (14a; 14c; 14d) zu erfassen, in Abhängigkeit von der die Elektronikeinheit (16a; 16c; 16d; 16e) die Medienausgabeeinheit (12a; 12c; 12d; 12e) steuert und/oder regelt und/oder zumindest eine oberflächenspezifische Kenngröße der Oberfläche (14a) zu erfassen, die zu einer Bestimmung einer Orientierung der Medienausgabeeinheit (12a) von der Elektronikeinheit (16a) verwertbar ist.

10. Auftragssystem nach Anspruch 9, **gekennzeichnet durch** zumindest eine omnidirektionale Positions- und/oder Entfernungssensoreinheit (194c), welche dazu vorgesehen ist, anhand zumindest eines Referenzelements (26c, 28c, 30c, 32c) einer die Medienausgabeeinheit (12c) umgebenden Umgebung zumindest eine Position und/oder Ausrichtung der Medienausgabeeinheit (12c) relativ zu der Oberfläche (14c) zu erfassen, in Abhängigkeit von der die Elektronikeinheit (16c) die Medienausgabeeinheit (12c) steuert und/oder regelt, wobei die omnidirektionale Positions- und/oder Entfernungssensoreinheit (194c) dazu vorgesehen ist, eine Mehrzahl von, insbesondere in verschiedenen Raumrichtungen um die Medienausgabeeinheit (12c) angeordneten, Referenzelementen (26c, 28c, 30c, 32c) der die Medienausgabeeinheit (12c) umgebenden Umgebung gleichzeitig zu erfassen.

11. Auftragssystem nach Anspruch 10, **dadurch gekennzeichnet, dass** das Referenzelement (28c) der die Medienausgabeeinheit (12c) umgebenden Umgebung als ein elektromagnetisches Felderzeugungselement zu einer Erzeugung zumindest eines elektromagnetischen Felds ausgebildet ist und dass die Positions- und/oder Entfernungssensoreinheit (194c) als eine elektromagnetische Sensoreinheit ausgebildet ist, welche dazu vorgesehen ist, die Position und/oder Ausrichtung der Medienausgabeeinheit (12c) relativ zu der Oberfläche (14c) anhand zumindest einer Kenngröße des elektromagnetischen Felds des Referenzelements (28c) zu erfassen, wobei die Kenngröße des elektromagnetischen Felds als eine Amplitudenverteilung und/oder als eine Frequenzmodulation des elektromagnetischen Felds ausgebildet ist.

12. Auftragssystem nach einem der Ansprüche 10 oder 11, **dadurch gekennzeichnet, dass** eine Mehrzahl von Referenzelementen (26c) der die Medienausgabeeinheit (12c) umgebenden Umgebung rahmenförmig um zumindest einen Auftragsbereich (196c) auf der Oberfläche (14c) angeordnet ist.

13. Verfahren zum Betrieb eines Auftragssystems eines Auftragssystems nach einem der Ansprüche 1 bis 12, **dadurch gekennzeichnet, dass** zumindest eine Position und/oder Ausrichtung zumindest einer Medienauftragsvorrichtung relativ zu zumindest einer Oberfläche (14a; 14c; 14d; 14e) und/oder zumindest eine absolute Position der Medienauftragsvorrichtung in zumindest einem dreidimensionalen Raum erfasst werden/wird.

## Claims

1. Application system having at least one media application device, which comprises at least one media output unit (12a; 12c; 12d; 12e) serving for the output of at least one medium on at least one surface (14a, 14c, 14d), a reference element and at least one electronics unit (16a; 16c; 16d; 16e) serving at least for open-loop and/or closed-loop control of the at least one media output unit (12a; 12c; 12d; 12e), and having at least one open-loop and/or closed-loop control unit (22a; 22c; 22d), **characterized in that** the open-loop and/or closed-loop control unit (22a; 22c; 22d) comprises at least one detection device (24a; 24c; 24d) provided for the detection of at least a position and/or alignment of the media application device in relation to the surface (14a; 14c; 14d) on the basis of at least one reference element (26a; 26c, 28a; 28c, 30a; 30c, 32a; 32c) in a surround of the media application device and/or on the basis of at least the reference element (34a; 34c; 34d; 34e) of the media application device, wherein the reference element (34a; 34c; 34d; 34e) of the media application device is designed as a radiation-emitting luminous element provided for a pulsed emission of radiation, wherein a pulsed operation of the luminous element allows the radiation emitted by the luminous element to be modulated for the purpose of transmitting information from the media application device to the open-loop and/or closed-loop control unit.

2. Application system according to Claim 1, **characterized in that** the reference element (34a; 34c; 34d; 34e) of the media application device is designed as a radiation-emitting luminous element provided for an emission of electromagnetic radiation from a blue spectral range and/or from a spectral range at least substantially invisible to the human eye.

3. Application system according to either of Claims 1 and 2, **characterized in that** the media application device comprises at least one reference element generation unit (42a) provided for the generation of the reference element (26a, 28a) in the surround of the media application device.

4. Application system according to any of Claims 1 to 3, **characterized in that** the media output unit (12a; 12c; 12d; 12e) comprises at least one nozzle unit (44a; 44c; 44d; 44e) having at least one nozzle element (46a; 46c; 46d; 46e) arranged flush with the reference element (34a; 34c; 34d; 34e) of the media application device, wherein the nozzle element (46a; 46c; 46d; 46e) and the reference element (34a; 34c; 34d; 34e) of the media application device are arranged along a single imaginary straight line which runs at least substantially perpendicular to the surface (14a; 14c; 14d) in the case of an at least substantially perpendicular media output direction (102a) of the nozzle element (46a; 46c; 46d; 46e) relative to the surface (14a; 14c; 14d).

5. Application system according to any of Claims 1 to 4, **characterized in that** the detection device (24a) comprises at least one camera unit (48a) with an image recording frequency of at least 120 frames per second at an image resolution of at least 518,400 pixels, at least for the purpose of detecting a position and/or alignment of the media application device in relation to the surface (14a).

6. Application system according to any of Claims 1 to 5, **characterized in that**, for a detection of a position and/or alignment of the media application device in relation to the surface (14a), the detection device (24a) is provided for synchronization, in particular wireless synchronization, with the media application device by means of a clock synchronization and/or a start time trigger.

7. Application system according to any of Claims 1 to 6, **characterized in that** the open-loop and/or closed-loop control unit (22c) comprises at least one computing unit provided for the compensation of an effect on a position and/or alignment detection of the media application device due to at least an inherent movement of the detection device (24c).

8. Application system according to any of Claims 1 to 7, **characterized by** at least one electronics module unit (172b) which is electronically couplable to the electronics unit for a non-loading functional extension of the media application device.

9. Application system according to any of the preceding claims, **characterized in that** the media application device comprises at least one position and/or surface sensor unit (18a; 18c; 18d; 18e) provided for the detection of at least a position and/or alignment of the media output unit (12a; 12c; 12d; 12e) in relation to the surface (14a; 14c; 14d), this being used by the electronics unit (16a; 16c; 16d; 16e) as a basis for open-loop and/or closed-loop control of the media output unit (12a; 12c; 12d; 12e), and/or for the detection of at least one surface-specific characteristic of the surface (14a), this being usable by the electronics unit (16a) for determining an orientation of the media output unit (12a).

10. Application system according to Claim 9, **characterized by** at least one omnidirectional position and/or distance sensor unit (194c) provided for the detection of at least a position and/or alignment of the media output unit (12c) in relation to the surface (14c) on the basis of at least one reference element (26c, 28c, 30c, 32c) in a surround surrounding the media output unit (12c), this being used by the electronics unit (16c) as a basis for open-loop and/or closed-loop control of the media output unit (12c), wherein the omnidirectional position and/or distance sensor unit (194c) is provided for the simultaneous detection of a plurality of reference elements (26c, 28c, 30c, 32c), in particular a plurality of reference elements arranged in different spatial directions around the media output unit (12c), in the surround surrounding the media output unit (12c).

11. Application system according to Claim 10, **characterized in that** the reference element (28c) in the surround surrounding the media output unit (12c) is designed as an electromagnetic field generation element for a generation of at least one electromagnetic field, and **in that** the position and/or distance sensor unit (194c) is designed as an electromagnetic sensor unit provided for the detection of the position and/or alignment of the media output unit (12c) in relation to the surface (14c) on the basis of at least one characteristic of the electromagnetic field of the reference element (28c), wherein the characteristic of the electromagnetic field is designed as an amplitude distribution and/or as a frequency modulation of the electromagnetic field.

12. Application system according to either of Claims 10 and 11, **characterized in that** a plurality of reference elements (26c) in the surround surrounding the media output unit (12c) are arranged like a frame on the surface (14c) around at least one application region (196c).

13. Method for operating an application system of an application system according to any of Claims 1 to 12, **characterized in that** at least a position and/or alignment of at least one media application device in relation to at least one surface (14a; 14c; 14d; 14e) and/or at least one absolute position of the media application device in at least one three-dimensional space is/are detected.

## Revendications

1. Système d'application, comprenant au moins un dispositif d'application de matière qui présente au moins une unité de distribution de matière (12a ; 12c ; 12d ; 12e) servant à distribuer au moins une matière sur au moins une surface (14a, 14c, 14d), un élément de référence et au moins une unité électronique (16a ; 16c ; 16d ; 16e) servant au moins à commander et/ou à réguler ladite au moins une unité de distribution de matière (12a ; 12c ; 12d ; 12e), et comprenant au moins une unité de commande et/ou de régulation (22a ; 22c ; 22d), **caractérisé en ce que** l'unité de commande et/ou de régulation (22a ; 22c ; 22d) présente au moins un dispositif de détection (24a ; 24c ; 24d) qui est prévu pour détecter, à l'aide au moins d'un élément de référence (26a ; 26c, 28a ; 28c, 30a ; 30c, 32a ; 32c) d'un environnement du dispositif d'application de matière et/ou à l'aide au moins de l'élément de référence (34a ; 34c ; 34d ; 34e) du dispositif d'application de matière, au moins une position et/ou orientation du dispositif d'application de matière par rapport à la surface (14a ; 14c ; 14d), dans lequel l'élément de référence (34a ; 34c ; 34d ; 34e) du dispositif d'application de matière est réalisé sous la forme d'un élément lumineux émettant un rayonnement qui est prévu pour une émission pulsée du rayonnement, dans lequel un fonctionnement pulsé de l'élément lumineux permet de moduler le rayonnement émis par l'élément lumineux pour une transmission d'informations du dispositif d'application de matière à l'unité de commande et/ou de régulation.

2. Système d'application selon la revendication 1, **caractérisé en ce que** l'élément de référence (34a ; 34c ; 34d ; 34e) du dispositif d'application de matière est réalisé sous la forme d'un élément lumineux émettant un rayonnement qui est prévu pour émettre un rayonnement électromagnétique provenant du spectre bleu et/ou d'un spectre au moins substantiellement invisible pour l'œil humain.

3. Système d'application selon l'une quelconque des revendications 1 à 2, **caractérisé en ce que** le dispositif d'application de matière présente au moins une unité de génération d'élément de référence (42a), qui est prévue pour générer l'élément de référence (26a, 28a) de l'environnement du dispositif d'application de matière.

4. Système d'application selon l'une quelconque des revendications 1 à 3, **caractérisé en ce que** l'unité de distribution de matière (12a ; 12c ; 12d ; 12e) présente au moins une unité de buse (44a ; 44c ; 44d ; 44e) avec au moins un élément de buse (46a ; 46c ; 46d ; 46e) qui est disposé dans un alignement commun avec l'élément de référence (34a ; 34c ; 34d ; 34e) du dispositif d'application de matière, dans lequel l'élément de buse (46a ; 46c ; 46d ; 46e) et l'élément de référence (34a ; 34c ; 34d ; 34e) du dispositif d'application de matière sont disposés le long d'une seule droite imaginaire qui s'étend pour une direction de distribution de matière (102a) au moins substantiellement verticale de l'élément de buse (46a ; 46c ; 46d ; 46e) par rapport à la surface (14a ; 14c ; 14d) au moins substantiellement perpendiculairement par rapport à la surface (14a ; 14c ; 14d) .

5. Système d'application selon l'une quelconque des revendications 1 à 4, **caractérisé en ce que** le dispositif de détection (24a) présente au moins pour une détection de position et/ou d'orientation du dispositif d'application de matière par rapport à la surface (14a) au moins une unité de caméra (48a) ayant une fréquence de prise de vue d'au moins 120 images par seconde avec une résolution d'image d'au moins 518 400 pixels.

6. Système d'application selon l'une quelconque des revendications 1 à 5, **caractérisé en ce qu'**en vue d'une détection d'une position et/ou orientation du dispositif d'application de matière par rapport à la surface (14a), le dispositif de détection (24a) est prévu pour une synchronisation, en particulier sans fil, avec le dispositif d'application de matière au moyen d'une synchronisation d'horloge et/ou d'un déclenchement d'heure de début.

7. Système d'application selon l'une quelconque des revendications 1 à 6, **caractérisé en ce que** l'unité de commande et/ou de régulation (22c) présente au moins une unité de calcul qui est prévue pour compenser un effet sur la détection de position et/ou d'orientation du dispositif d'application de matière en raison d'au moins un mouvement propre du dispositif de détection (24c).

8. Système d'application selon l'une quelconque des revendications 1 à 7, **caractérisé par** au moins une unité de module électronique (172b) qui peut être couplée électroniquement à l'unité électronique pour une extension de fonction hors charge du dispositif d'application de matière.

9. Système d'application selon l'une quelconque des revendications précédentes, **caractérisé en ce que** le dispositif d'application de matière présente au moins une unité de capteur de position et/ou de surface (18a ; 18c ; 18d ; 18e) qui est prévue pour détecter au moins une position et/ou orientation de l'unité de distribution de matière (12a ; 12c ; 12d ; 12e) par rapport à la surface (14a ; 14c ; 14d), en fonction de laquelle/desquelles l'unité électronique (16a ; 16c ; 16d ; 16e) commande et/ou régule l'unité de distribution de matière (12a ; 12c ; 12d ; 12e), et/ou pour détecter au moins une grandeur caractéristique spécifique à la surface de la surface (14a), qui peut être utilisée pour déterminer une orientation de l'unité de distribution (12a) par l'unité électronique (16a).

10. Système d'application selon la revendication 9, **caractérisé par** au moins une unité de capteur de position et/ou de distance omnidirectionnelle (194c) qui est prévue pour détecter au moyen d'au moins un élément de référence (26c, 28c, 30c, 32c) d'un environnement entourant l'unité de distribution de matière (12c) au moins une position et/ou orientation de l'unité de distribution de matière (12c) par rapport à la surface (14c), en fonction de laquelle/desquelles l'unité électronique (16c) commande et/ou régule l'unité de distribution de matière (12c), dans lequel l'unité de capteur de position et/ou de distance omnidirectionnelle (194c) est prévue pour détecter simultanément une pluralité d'éléments de référence (26c, 28c, 30c, 32c), en particulier disposés dans différentes directions spatiales autour de l'unité de distribution de matière (12c), de l'environnement entourant l'unité de distribution de matière (12c).

11. Système d'application selon la revendication 10, **caractérisé en ce que** l'élément de référence (28c) de l'environnement entourant l'unité de distribution de matière (12c) est réalisé sous la forme d'un élément de génération de champ électromagnétique servant à générer au moins un champ électromagnétique, et **en ce que** l'unité de capteur de position et/ou de distance (194c) est réalisée sous la forme d'une unité de capteur électromagnétique qui est prévue pour détecter la position et/ou l'orientation de l'unité de distribution de matière (12c) par rapport à la surface (14c) à l'aide d'au moins une grandeur caractéristique du champ électromagnétique de l'élément de référence (28c), dans lequel la grandeur caractéristique du champ électromagnétique est réalisée sous la forme d'une distribution d'amplitude et/ou d'une modulation de fréquence du champ électromagnétique.

12. Système d'application selon l'une quelconque des revendications 10 ou 11, **caractérisé en ce qu'**une pluralité d'éléments de référence (26c) de l'environnement entourant l'unité de distribution de matière (12c) est disposée en forme de cadre autour d'au moins une zone d'application (196c) sur la surface (14c).

13. Procédé permettant de faire fonctionner un système d'application selon l'une quelconque des revendications 1 à 12, **caractérisé en ce qu'**au moins une position et/ou orientation d'au moins un dispositif d'application de matière par rapport à au moins une surface (14a ; 14c ; 14d ; 14e) et/ou au moins une position absolue du dispositif d'application de matière est/sont détectée/s dans au moins un espace tridimensionnel.
